# EUROPEAN PATENT APPLICATION

(11) **EP 3 473 697 A1**
(43) Date of publication of application: **24.04.2019**
(21) Application number: 18208778.3
(22) Date of filing: 16.09.2015
(51) Int. Cl.: C12G 3/005, A23L 2/39, A23L 2/56, C12G 3/06

(54) **BEVERAGE PRECURSOR AND METHOD FOR MAKING BEVERAGES**

(62) Divisional of application: 15841252.8
(71) Applicant: Altria Client Services LLC, Richmond, Virginia 23230 (US)
(72) Inventor: SCHUH, Christian, Virginia, VA Virginia 23116 (US); KOBAL, Gerd, Virginia, VA Virginia 23153 (US); KARLES, Georgios D, Virginia, VA Virginia 23233 (US); SAHIN, Buket, Virginia, VA Virginia 23221 (US); WHEATLEY, Brian K. JR, Virginia, VA Virginia 23221 (US); BOGEN, Johanna, Virginia, VA Virginia 23223 (US)
(74) Representative: Carvajal y Urquijo, Isabel

(57) **Abstract**

A method of making a flavored beverage includes combining water and a plurality of flavor compounds in an amount sufficient to impart the flavor of a wine, a whiskey, a beer, a gin, a vermouth, a rum, or a tequila. A packaged beverage precursor for making a flavored beverage can include a plurality of flavor compounds and a container.

## Description

This application claims priority under 35 U.S.C. §119(e) to U.S. Provisional Application No. 62/051,142, filed on September 16, 2014, the entire content of which is incorporated herein by reference thereto.

### Background

Beverages, including alcoholic beverages are produced throughout the world, but shipping beverages can be cost prohibitive due to the weight thereof. Typically, beverages include about 90 to 95% water, which is a significant portion of the weight. Thus, the ability to create beverages as needed by the addition of water to a concentrated mixture of flavors saves significantly on costs of storage and shipping.

Moreover, stocking a bar with a large variety of fermented and/or distilled drinks such as beers, wines, champagnes, and liquors can be cost and space prohibitive. In addition, the time and ingredients necessary to ferment and form various crafted beverages such as beers, wines and liquors can be lengthy and expensive.

Thus, a beverage precursor, method and apparatus for making a variety of beverages that taste like various crafted beers, wines, champagnes, and liquors, is desirable.

### Summary

In an embodiment, a method of making a beverage precursor for preparing a beverage having the flavor of gin involves combining at least one flavor compound selected from a first group of compounds, at least one flavor compound selected from a second group of compounds, and at least one flavor compound selected from a third group of compounds together to form the beverage precursor, wherein the first group of compounds includes myrcene, geraniol, alpha-pinene, limonene, alpha-terpineol, p-cymene, 1,3,5-undecatriene, terpinolene, b-citronellol, thymol, linalool, and combinations thereof; the second group of compounds includes acetaldehyde, ethyl butyrate, ethyl-2-methylpropanoate, ethyl octanoate, ethyl hexanoate, ethyl-3-methylbutyrate, ethyl-2-methylbutyrate, (E)-b-damascenone, 3-methylbutyl acetate, 1,1-diethoxyethane, trans-ethyl cinnamate, phenylethylphenylacetate, ethylacetate, ethyl laurate, lauryl alcohol, ethyl nonanoate, methylmethylpropanoate, ethyl-3-phenylpropanoate, ethyl decanoate, ethyl propanoate, and combinations thereof; and the third group of compounds includes 2-methoxyphenol, 4-allyl-2-methoxyphenol, 4-ethyl-2-methoxyphenol, 4-methyl-2-methoxyphenol, 4-propyl-2-methoxyphenol, 2-methoxy-5-methylphenol, 2,6-dimethoxyphenol, and combinations thereof. The beverage precursor may be mixable with water, ethanol, and/or vodka to form a beverage having the flavor of gin without brewing, fermentation, or distillation.

In embodiments, a method of making a beverage precursor for preparing a beverage having the flavor of beer involves combining at least one flavor compound selected from a first group of compounds, at least one flavor compound selected from a second group of compounds, and at least one compound selected from a third group of compounds. The first group of compounds includes 3-methylbutanol, 2-methylbutanol, 2,3-butanedione, vanilline, 2-methylpropanol, 3-methylbutanal, 2,3-pentanedione, 2-methylpropanal, 2-methylbutanal, furaneol, 2-aminoacetophenone, and ethylfuraneol. The second group of compounds includes 2-phenylethanol, 2-phenylacetic acid, 2-phenylethyl acetate, phenylacetaldehyde, myrcene, geraniol, and linalool. The third group of compounds includes hops extract, tetra-iso-extract 10%, rho-iso-extract 10%, isomerized hop extract 30%, cis-isohumolone, trans-isohumolone, cis-isocohumulone, trans-isocohumulone, isoadhumulone, and comultifidolglycoside. The beverage precursor is mixable with water, ethanol and/or vodka to form a beverage having the flavor of beer without brewing, fermentation, or distillation.

In embodiments, a method of making a method of making a beverage precursor for preparing a beverage having the flavor of wine involves combining at least one flavor compound selected from a first group of compounds, at least one flavor compound selected from a second group of compounds, at least one flavor compound selected from a third group of compounds, and at least one flavor compound selected from a fourth group of flavor compounds. The first group of compounds includes acetaldehyde, ethyl butyrate, ethyl-2-methylpropanoate, ethyl octanoate, ethyl hexanoate, ethyl-3-methylbutyrate, ethyl-2-methylbutyrate, (E)-b-damascenone, 3-methylbutyl acetate, 1,1-diethoxyethane, trans-ethyl cinnamate, ethyl decanoate, and ethyl propanoate. The second group of compounds includes whiskey lactone, 2-methoxyphenol, 4-allyl-2-methoxyphenol, 5-pentyldihydrofuran-2(3H)-one, 4-ethyl-2-methoxyphenol, 4-methyl-2-methoxyphenol, 4-propyl-2-methoxyphenol, 5-hexyldihydrofuran-2(3H)-one, 2-methoxy-5-methylphenol, and 2,6-dimethoxyphenol. The third group of compounds includes consisting of tartaric acid, succinic acid, lactic acid, citric acid, galacturonic acid, pyruvic acid, malic acid, and acetic acid. The fourth group of compounds includes tannic acid, oak extract, trans aconitic acid, cis-aconitic acid, ellagic acid, caftaric acid, caffeic acid, castalagin, coutaric acid, fertaric acid, gallic acid, quercetin-3-O-galactoside, syringetin-3-O-glucoside, quercetin-3-O-glucuronide, kaempferol-3-O-glucoside, isorhamnetinglucoside, and grape seed extract. The beverage precursor is mixable with water, ethanol and/or vodka to form a beverage having the flavor of wine without brewing, fermentation, or distillation.

In embodiments, a method of making a beverage precursor for preparing a beverage having the flavor of vermouth involves combining at least one flavor compound selected from a first group of compounds, at least one flavor compound selected from a second group of compounds, at least one flavor compound selected from a third group of compounds, at least one flavor compound selected from a fourth group of compounds, at least one flavor compound selected from a fifth group of compounds, and at least one flavor compound selected from a sixth group of compounds together to form the beverage precursor; wherein the first group of compounds includes octanoic acid, 2-methylpropanoic acid, butanoic acid, 3-methylbutanoic acid, 2-methylbutanoic acid, 3-methylpentanoic acid, 4-methylpentanoic acid, decanoic acid, hexanoic acid and combinations thereof; the second group of compounds includes 3-methylbutanol, 2-methylbutanol, 2,3-butanedione, vanilline, ethyl vanilline, 2-methylpropanol, 3-methylbutanal, 2,3-pentanedione, 2-methylpropanal, 2-methylbutanal, acetylpyrazine, maltol, methylenecyclopentenolone, furaneol, 2-aminoacetophenone, furfural, ethylfuraneol and combinations thereof; the third group of compounds includes acetaldehyde, ethyl butyrate, ethyl-2-methylpropanoate, ethyl octanoate, ethyl hexanoate, ethyl-3-methylbutyrate, ethyl-2-methylbutyrate, (E)-b-damascenone, 3-methylbutyl acetate, 1,1-diethoxyethane, trans-ethyl cinnamate, phenylethylphenylacetate, 4-mercapto-4-methylpentan-2-ol, ethylacetate, ethyl laurate, lauryl alcohol, ethyl nonanoate, methylmethylpropanoate, ethyl-3-phenylpropanoate, ethyl decanoate, ethyl propanoate, and combinations thereof; the fourth group of compounds includes tartaric acid, succinic acid, lactic acid, citric acid, galacturonic acid, pyruvic acid, malic acid, fumaric acid, shikimic acid, acetic acid, and combinations thereof; the fifth group of compounds includes glycerol, glucose, fructose, L-proline, saccharose, and combinations thereof; and the sixth group of compounds includes compounds including or providing ions of potassium, magnesium, sodium, chloride, phosphate, ammonium, sulfate, calcium, and combinations thereof. In embodiments, the beverage precursor is mixable with water, vodka, and/or ethanol to form a beverage having the flavor of vermouth without brewing, fermentation, or distillation.

In embodiments, a method of making a beverage precursor for preparing a beverage having the flavor of rum involves combining at least one flavor compound selected from a first group of compounds, at least one flavor compound selected from a second group of compounds, at least one flavor compound selected from a third group of compounds, at least one flavor compound selected from a fourth group of compounds, at least one flavor compound selected from a fifth group of compounds, and at least one flavor compound selected from a sixth group of compounds together to form the beverage precursor. In embodiments, the first group of compounds includes 3-methylbutanol, 2-methylbutanol, 2,3-butanedione, vanilline, ethyl vanilline, 2-methylpropanol, 3-methylbutanal, 2,3-pentanedione, 2-methylpropanal, 2-methylbutanal, acetylpyrazine, maltol, methylenecyclopentenolone, furaneol, furfural, ethylfuraneol and combinations thereof; the second group of compounds includes acetaldehyde, ethyl butyrate, ethyl-2-methylpropanoate, ethyl octanoate, ethyl hexanoate, ethyl-3-methylbutyrate, ethyl-2-methylbutyrate, (E)-b-damascenone, 3-methylbutyl acetate, 1,1-diethoxyethane, trans-ethyl cinnamate, phenylethylphenylacetate, ethylacetate, ethyl laurate, lauryl alcohol, ethyl nonanoate, methylmethylpropanoate, ethyl-3-phenylpropanoate, ethyl decanoate, ethyl propanoate, and combinations thereof; the third group of compounds includes whiskey lactone, 2-methoxyphenol, 4-allyl-2-methoxyphenol, 5-pentyldihydrofuran-2(3H)-one, 4-ethyl-2-methoxyphenol, 4-methyl-2-methoxyphenol, 4-propyl-2-methoxyphenol, 5-hexyldihydrofuran-2(3H)-one, 2-methoxy-5-methylphenol, 2,6-dimethoxyphenol, and combinations thereof; the fourth group of compounds includes 4-ethylphenol, 4-methylphenol, 3-methylphenol, 2-methylphenol, 3-ethylphenol, 2-ethylphenol, phenol, and combinations thereof; the fifth group of compounds includes tartaric acid, succinic acid, lactic acid, citric acid, galacturonic acid, pyruvic acid, malic acid, fumaric acid, shikimic acid, acetic acid, and combinations thereof; and the sixth group of compounds includes glycerol, glucose, fructose, L-proline, saccharose, and combinations thereof. In embodiments, the beverage precursor is mixable with water, vodka, and/or ethanol to form a beverage having the flavor of rum without brewing, fermentation, or distillation.

In embodiments, a method of making a beverage precursor for preparing a beverage having the flavor of tequila involves combining at least one flavor compound selected from a first group of compounds, at least one flavor compound selected from a second group of compounds, at least one flavor compound selected from a third group of compounds, at least one flavor compound selected from a fourth group of compounds, at least one flavor compound selected from a fifth group of compounds, and at least one flavor compound selected from a sixth group of compounds together to form the beverage precursor. In embodiments, the first group of compounds includes octanoic acid, 2-methylpropanoic acid, butanoic acid, 3-methylbutanoic acid, 2-methylbutanoic acid, 3-methylpentanoic acid, 4-methylpentanoic acid, decanoic acid, hexanoic acid and combinations thereof; the second group of compounds includes 3-methylbutanol, 2-methylbutanol, 2,3-butanedione, vanilline, ethyl vanilline, 2-methylpropanol, 3-methylbutanal, 2,3-pentanedione, 2-methylpropanal, 2-methylbutanal, furfural, anis alcohol, and combinations thereof; the third group of compounds includes 2-phenylethanol, 2-phenylacetic acid, 2-phenylethyl acetate, phenylacetaldehyde, geraniol, linalool, alpha-pinene, alpha-terpineol, 1, 3,5-undecatriene, terpinolene, b-citronellol, thymol, and combinations thereof; the fourth group of compounds includes acetaldehyde, ethyl butyrate, ethyl-2-methylpropanoate, ethyl octanoate, ethyl hexanoate, ethyl-3-methylbutyrate, ethyl-2-methylbutyrate, (E)-b-damascenone, 3-methylbutyl acetate, 1,1-diethoxyethane, trans-ethyl cinnamate, phenylethylphenylacetate, 4-mercapto-4-methylpentan-2-ol, ethyl lactate, ethylacetate, ethyl nonanoate, methylmethylpropanoate, ethyl-3-phenylpropanoate, ethyl decanoate, ethyl propanoate, and combinations thereof; the fifth group of compounds includes whiskey lactone, farnesol, 2-methoxyphenol, 4-allyl-2-methoxyphenol, 5-pentyldihydrofuran-2(3H)-one, 4-ethyl-2-methoxyphenol, 4-methyl-2-methoxyphenol, 4-propyl-2-methoxyphenol, 5-hexyldihydrofuran-2(3H)-one, 2-methoxy-5-methylphenol, 2,6-dimethoxyphenol, and combinations thereof; and the sixth group of compounds includes 4-ethylphenol, 4-methylphenol, 3-methylphenol, 2-methylphenol, 3-ethylphenol, 2-ethylphenol, phenol, and combinations thereof. In embodiments, the beverage precursor is mixable with water, vodka, and/or ethanol to form a beverage having the flavor of tequila without brewing, fermentation, or distillation.

In embodiments, a packaged beverage precursor for making a beverage having the flavor of gin includes a beverage precursor comprising at least one flavor compound from a first group of compounds, at least one compound from a second group of compounds, and at least one compound from a third group of compounds, and a container containing the beverage precursor. In embodiments, the first group of compounds includes myrcene, geraniol, alpha-pinene, limonene, alpha-terpineol, p-cymene, 1,3,5-undecatriene, terpinolene, linalool, and combinations thereof; the second group of compounds includes acetaldehyde, ethyl butyrate, ethyl-2-methylpropanoate, ethyl octanoate, ethyl hexanoate, ethyl-3-methylbutyrate, ethyl-2-methylbutyrate, (E)-b-damascenone, 3-methylbutyl acetate, 1,1-diethoxyethane, trans-ethyl cinnamate, phenylethylphenylacetate, ethylacetate, ethyl laurate, lauryl alcohol, ethyl nonanoate, methylmethylpropanoate, ethyl-3-phenylpropanoate, ethyl decanoate, ethyl propanoate, and combinations thereof; and the third group of compounds includes 2-methoxyphenol, 4-allyl-2-methoxyphenol, 4-ethyl-2-methoxyphenol, 4-methyl-2-methoxyphenol, 4-propyl-2-methoxyphenol, 2-methoxy-5-methylphenol, 2,6-dimethoxyphenol, and combinations thereof. In embodiments, each of the flavor compounds is generally recognized as safe for human consumption under Title 21 of the United States Code of Federal Regulations. In embodiments, the beverage precursor is mixable with water, ethanol, and/or vodka to form a finished beverage having the flavor of gin without brewing, fermentation, or distillation. In embodiments, the beverage precursor is present in an amount of about 0.001% to about 50% by weight of the finished beverage having the flavor of gin.

In embodiments, a packaged beverage precursor for making a beverage having the flavor of vermouth includes a beverage precursor comprising at least one flavor compound selected from a first group of compounds, at least one flavor compound selected from a second group of compounds, at least one flavor compound selected from a third group of compounds, at least one flavor compound selected from a fourth group of compounds, at least one flavor compound selected from a fifth group of compounds, and at least one flavor compound selected from a sixth group of compounds; and a container containing the beverage precursor. In embodiments, the first group of compounds includes octanoic acid, 2-methylpropanoic acid, butanoic acid, 3-methylbutanoic acid, 2-methylbutanoic acid, 3-methylpentanoic acid, 4-methylpentanoic acid, decanoic acid, hexanoic acid and combinations thereof; the second group of compounds includes 3-methylbutanol, 2-methylbutanol, 2,3-butanedione, vanilline, ethyl vanilline, 2-methylpropanol, 3-methylbutanal, 2,3-pentanedione, 2-methylpropanal, 2-methylbutanal, acetylpyrazine, maltol, methylenecyclopentenolone, furaneol, 2-aminoacetophenone, ethylfuraneol and combinations thereof; the third group of compounds includes acetaldehyde, ethyl butyrate, ethyl-2-methylpropanoate, ethyl octanoate, ethyl hexanoate, ethyl-3-methylbutyrate, ethyl-2-methylbutyrate, (E)-b-damascenone, 3-methylbutyl acetate, 1,1-diethoxyethane, trans-ethyl cinnamate, phenylethylphenylacetate, 4-mercapto-4-methylpentan-2-ol, ethylacetate, ethyl laurate, lauryl alcohol, ethyl nonanoate, methylmethylpropanoate, ethyl-3-phenylpropanoate, ethyl decanoate, ethyl propanoate, and combinations thereof; the fourth group of compounds includes tartaric acid, succinic acid, lactic acid, citric acid, galacturonic acid, pyruvic acid, malic acid, fumaric acid, shikimic acid, acetic acid, and combinations thereof; the fifth group of compounds includes glycerol, glucose, fructose, L-proline, saccharose, and combinations thereof; and the sixth group of compounds includes compounds including or providing ions of potassium, magnesium, sodium, chloride, phosphate, ammonium, sulfate, calcium, and combinations thereof. In embodiments, each of the flavor compounds is generally recognized as safe for human consumption under Title 21 of the United States Code of Federal Regulations. In embodiments, the beverage precursor is mixable with water, ethanol, and/or vodka to form a beverage having the flavor of vermouth without brewing, fermentation, or distillation. In embodiments, the beverage precursor is present in an amount of about 0.001% to about 50% by weight of the finished beverage having the flavor of vermouth.

In embodiments, a packaged beverage precursor for making a beverage having the flavor of tequila includes a beverage precursor comprising at least one compound selected from a first group of compounds, at least one flavor compound selected from a second group of compounds, at least one flavor compound selected from a third group of compounds, at least one flavor compound selected from a fourth group of compounds, at least one flavor compound selected from a fifth group of compounds, and at least one flavor compound selected from a sixth group of compounds, and a container containing the beverage precursor. In embodiments, the first group of compounds includes octanoic acid, 2-methylpropanoic acid, butanoic acid, 3-methylbutanoic acid, 2-methylbutanoic acid, 3-methylpentanoic acid, 4-methylpentanoic acid, decanoic acid, hexanoic acid and combinations thereof; the second group of compounds includes 3-methylbutanol, 2-methylbutanol, 2,3-butanedione, vanilline, ethyl vanilline, 2-methylpropanol, 3-methylbutanal, 2,3-pentanedione, 2-methylpropanal, 2-methylbutanal, and combinations thereof; the third group of compounds includes 2-phenylethanol, 2-phenylacetic acid, 2-phenylethyl acetate, phenylacetaldehyde, geraniol, linalool, and combinations thereof; the fourth group of compounds includes acetaldehyde, ethyl butyrate, ethyl-2-methylpropanoate, ethyl octanoate, ethyl hexanoate, ethyl-3-methylbutyrate, ethyl-2-methylbutyrate, (E)-b-damascenone, 3-methylbutyl acetate, 1,1-diethoxyethane, trans-ethyl cinnamate, phenylethylphenylacetate, ethylacetate, ethyl nonanoate, methylmethylpropanoate, ethyl-3-phenylpropanoate, ethyl decanoate, ethyl propanoate, and combinations thereof; the fifth group of compounds includes whiskey lactone, 2-methoxyphenol, 4-allyl-2-methoxyphenol, 5-pentyldihydrofuran-2(3H)-one, 4-ethyl-2-methoxyphenol, 4-methyl-2-methoxyphenol, 4-propyl-2-methoxyphenol, 5-hexyldihydrofuran-2(3H)-one, 2-methoxy-5-methylphenol, 2,6-dimethoxyphenol, and combinations thereof; and the sixth group of compounds includes 4-ethylphenol, 4-methylphenol, 3-methylphenol, 2-methylphenol, 3-ethylphenol, 2-ethylphenol, phenol, and combinations thereof. In embodiments, each of the flavor compounds is generally recognized as safe for human consumption under Title 21 of the United States Code of Federal Regulations. In embodiments, the beverage precursor is mixable with water, ethanol, and/or vodka to form a beverage having the flavor of tequila without brewing, fermentation, or distillation. In embodiments, the beverage precursor is present in an amount of about 0.001% to about 50% by weight of the finished beverage having the flavor of tequila.

In embodiments, a packaged beverage precursor for making a beverage having the flavor of rum includes a beverage precursor comprising at least one flavor compound selected from a first group of compounds, at least one flavor compound selected from a second group of compounds, at least one flavor compound selected from a third group of compounds, at least one flavor compound selected from a fourth group of compounds, at least one flavor compound selected from a fifth group of compounds, and at least one flavor compound selected from a sixth group of compounds; and a container containing the beverage precursor. In embodiments, the first group of compounds includes 3-methylbutanol, 2-methylbutanol, 2,3-butanedione, vanilline, ethyl vanilline, 2-methylpropanol, 3-methylbutanal, 2,3-pentanedione, 2-methylpropanal, 2-methylbutanal, acetylpyrazine, maltol, methylenecyclopentenolone, furaneol, ethylfuraneol and combinations thereof; the second group of compounds includes acetaldehyde, ethyl butyrate, ethyl-2-methylpropanoate, ethyl octanoate, ethyl hexanoate, ethyl-3-methylbutyrate, ethyl-2-methylbutyrate, (E)-b-damascenone, 3-methylbutyl acetate, 1,1-diethoxyethane, trans-ethyl cinnamate, phenylethylphenylacetate, ethylacetate, ethyl laurate, lauryl alcohol, ethyl nonanoate, methylmethylpropanoate, ethyl-3-phenylpropanoate, ethyl decanoate, ethyl propanoate, and combinations thereof; the third group of compounds includes whiskey lactone, 2-methoxyphenol, 4-allyl-2-methoxyphenol, 5-pentyldihydrofuran-2(3H)-one, 4-ethyl-2-methoxyphenol, 4-methyl-2-methoxyphenol, 4-propyl-2-methoxyphenol, 5-hexyldihydrofuran-2(3H)-one, 2-methoxy-5-methylphenol, 2,6-dimethoxyphenol, and combinations thereof; the fourth group of compounds includes 4-ethylphenol, 4-methylphenol, 3-methylphenol, 2-methylphenol, 3-ethylphenol, 2-ethylphenol, phenol, and combinations thereof; the fifth group of compounds includes tartaric acid, succinic acid, lactic acid, citric acid, galacturonic acid, pyruvic acid, malic acid, fumaric acid, shikimic acid, acetic acid, and combinations thereof; and the sixth group of compounds includes glycerol, glucose, fructose, L-proline, saccharose, and combinations thereof. In embodiments, each of the flavor compounds is generally recognized as safe for human consumption under Title 21 of the United States Code of Federal Regulations. In embodiments, the beverage precursor is mixable with water, ethanol, and/or vodka to form a beverage having the flavor of rum without brewing, fermentation, or distillation. In embodiments, the beverage precursor is present in an amount of about 0.001 % to about 50% by weight of the finished beverage having the flavor of rum.

In embodiments, a beverage precursor useful for preparation of a gin-flavored beverage includes at least one flavor compound from a first group of compounds, at least one compound from a second group of compounds, and at least one compound from a third group of compounds. In embodiments, the first group of compounds includes myrcene, geraniol, alpha-pinene, limonene, alpha-terpineol, p-cymene, 1,3,5-undecatriene, terpinolene, linalool, and combinations thereof; the second group of compounds includes acetaldehyde, ethyl butyrate, ethyl-2-methylpropanoate, ethyl octanoate, ethyl hexanoate, ethyl-3-methylbutyrate, ethyl-2-methylbutyrate, (E)-b-damascenone, 3-methylbutyl acetate, 1,1-diethoxyethane, trans-ethyl cinnamate, phenylethylphenylacetate, ethylacetate, ethyl laurate, lauryl alcohol, ethyl nonanoate, methylmethylpropanoate, ethyl-3-phenylpropanoate, ethyl decanoate, ethyl propanoate, and combinations thereof; and the third group of compounds includes 2-methoxyphenol, 4-allyl-2-methoxyphenol, 4-ethyl-2-methoxyphenol, 4-methyl-2-methoxyphenol, 4-propyl-2-methoxyphenol, 2-methoxy-5-methylphenol, 2,6-dimethoxyphenol, and combinations thereof. In embodiments, each of the flavor compounds is generally recognized as safe for human consumption under Title 21 of the United States Code of Federal Regulations. In embodiments, the beverage precursor is mixable with water, ethanol, and/or vodka to form a finished beverage having the flavor of gin without brewing, fermentation, or distillation.

In embodiments, a beverage precursor useful for preparation of a vermouth-flavored beverage includes at least one flavor compound selected from a first group of compounds, at least one flavor compound selected from a second group of compounds, at least one flavor compound selected from a third group of compounds, at least one flavor compound selected from a fourth group of compounds, at least one flavor compound selected from a fifth group of compounds, and at least one flavor compound selected from a sixth group of compounds. In embodiments, the first group of compounds includes octanoic acid, 2-methylpropanoic acid, butanoic acid, 3-methylbutanoic acid, 2-methylbutanoic acid, 3-methylpentanoic acid, 4-methylpentanoic acid, decanoic acid, hexanoic acid and combinations thereof; the second group of compounds includes 3-methylbutanol, 2-methylbutanol, 2,3-butanedione, vanilline, ethyl vanilline, 2-methylpropanol, 3-methylbutanal, 2,3-pentanedione, 2-methylpropanal, 2-methylbutanal, acetylpyrazine, maltol, methylenecyclopentenolone, furaneol, 2-aminoacetophenone, ethylfuraneol and combinations thereof; the third group of compounds includes acetaldehyde, ethyl butyrate, ethyl-2-methylpropanoate, ethyl octanoate, ethyl hexanoate, ethyl-3-methylbutyrate, ethyl-2-methylbutyrate, (E)-b-damascenone, 3-methylbutyl acetate, 1,1-diethoxyethane, trans-ethyl cinnamate, phenylethylphenylacetate, 4-mercapto-4-methylpentan-2-ol, ethylacetate, ethyl laurate, lauryl alcohol, ethyl nonanoate, methylmethylpropanoate, ethyl-3-phenylpropanoate, ethyl decanoate, ethyl propanoate, and combinations thereof; the fourth group of compounds includes tartaric acid, succinic acid, lactic acid, citric acid, galacturonic acid, pyruvic acid, malic acid, fumaric acid, shikimic acid, acetic acid, and combinations thereof; the fifth group of compounds includes glycerol, glucose, fructose, L-proline, saccharose, and combinations thereof; and the sixth group of compounds includes compounds including or providing ions of potassium, magnesium, sodium, chloride, phosphate, ammonium, sulfate, calcium, and combinations thereof. In embodiments, each of the flavor compounds is generally recognized as safe for human consumption under Title 21 of the United States Code of Federal Regulations. In embodiments, the beverage precursor is mixable with water, ethanol, and/or vodka to form a finished beverage having the flavor of vermouth without brewing, fermentation, or distillation.

In embodiments, a beverage precursor useful for preparation of a tequila-flavored beverage includes at least one compound selected from a first group of compounds, at least one flavor compound selected from a second group of compounds, at least one flavor compound selected from a third group of compounds, at least one flavor compound selected from a fourth group of compounds, at least one flavor compound selected from a fifth group of compounds, and at least one flavor compound selected from a sixth group of compounds. In embodiments, the first group of compounds includes octanoic acid, 2-methylpropanoic acid, butanoic acid, 3-methylbutanoic acid, 2-methylbutanoic acid, 3-methylpentanoic acid, 4-methylpentanoic acid, decanoic acid, hexanoic acid and combinations thereof; the second group of compounds includes 3-methylbutanol, 2-methylbutanol, 2,3-butanedione, vanilline, ethyl vanilline, 2-methylpropanol, 3-methylbutanal, 2,3-pentanedione, 2-methylpropanal, 2-methylbutanal, and combinations thereof; the third group of compounds includes 2-phenylethanol, 2-phenylacetic acid, 2-phenylethyl acetate, phenylacetaldehyde, geraniol, linalool, and combinations thereof; the fourth group of compounds includes acetaldehyde, ethyl butyrate, ethyl-2-methylpropanoate, ethyl octanoate, ethyl hexanoate, ethyl-3-methylbutyrate, ethyl-2-methylbutyrate, (E)-b-damascenone, 3-methylbutyl acetate, 1,1-diethoxyethane, trans-ethyl cinnamate, phenylethylphenylacetate, ethylacetate, ethyl nonanoate, methylmethylpropanoate, ethyl-3-phenylpropanoate, ethyl decanoate, ethyl propanoate, and combinations thereof; the fifth group of compounds includes whiskey lactone, 2-methoxyphenol, 4-allyl-2-methoxyphenol, 5-pentyldihydrofuran-2(3H)-one, 4-ethyl-2-methoxyphenol, 4-methyl-2-methoxyphenol, 4-propyl-2-methoxyphenol, 5-hexyldihydrofuran-2(3H)-one, 2-methoxy-5-methylphenol, 2,6-dimethoxyphenol, and combinations thereof; and the sixth group of compounds includes 4-ethylphenol, 4-methylphenol, 3-methylphenol, 2-methylphenol, 3-ethylphenol, 2-ethylphenol, phenol, and combinations thereof. In embodiments, each of the flavor compounds is generally recognized as safe for human consumption under Title 21 of the United States Code of Federal Regulations. In embodiments, the beverage precursor is mixable with water, ethanol, and/or vodka to form a finished beverage having the flavor of tequila without brewing, fermentation, or distillation.

In embodiments, a beverage precursor useful for the preparation of a beer-flavored beverage includes at least one flavor compound selected from a first group of compounds, at least one flavor compound selected from a second group of compounds, and at least one compound selected from a third group of compounds. In embodiments, the first group of compounds includes 3-methylbutanol, 2-methylbutanol, 2,3-butanedione, vanilline, 2-methylpropanol, 3-methylbutanal, 2,3-pentanedione, 2-methylpropanal, 2-methylbutanal, furaneol, 2-aminoacetophenone, furfural, and ethylfuraneol; the second group of compounds includes 2-phenylethanol, 2-phenylacetic acid, 2-phenylethyl acetate, phenylacetaldehyde, myrcene, geraniol, b-citronellol, and linalool, and the third group of compounds includes hops extract, tetra-iso-extract 10%, rho-iso-extract 10%, isomerized hop extract 30%, cis-isohumolone, trans-isohumolone, cis-isocohumulone, trans-isocohumulone, isoadhumulone, and comultifidolglycoside. In embodiments, each of the flavor compounds is generally recognized as safe for human consumption under Title 21 of the United States Code of Federal Regulations. In embodiments, the beverage precursor is mixable with water, ethanol, and/or vodka to form a beverage having the flavor of beer without brewing, fermentation, or distillation.

In embodiments, a method of making a beverage precursor for preparing a beverage having the flavor of beer involves combining at least one flavor compound selected from a first group of compounds, at least one flavor compound selected from a second group of compounds, at least one flavor compound selected from a third group of compounds, and at least one flavor compound selected from a fourth group of compounds. In embodiments, the first group of compounds includes of acetaldehyde, ethyl butyrate, ethyl-2-methylpropanoate, ethyl octanoate, ethyl hexanoate, ethyl-3-methylbutyrate, ethyl-2-methylbutyrate, (E)-b-damascenone, 3-methylbutyl acetate, 1,1-diethoxyethane, trans-ethyl cinnamate, ethyl decanoate, and ethyl propanoate, the second group of compounds includes whiskey lactone, 2-methoxyphenol, 4-allyl-2-methoxyphenol, 5-pentyldihydrofuran-2(3H)-one, 4-ethyl-2-methoxyphenol, 4-methyl-2-methoxyphenol, 4-propyl-2-methoxyphenol, 5-hexyldihydrofuran-2(3H)-one, 2-methoxy-5-methylphenol, and 2,6-dimethoxyphenol, the third group of compounds includes tartaric acid, succinic acid, lactic acid, citric acid, galacturonic acid, pyruvic acid, malic acid, and acetic acid, and the fourth group of compounds includes tannic acid, oak extract, trans aconitic acid, cis-aconitic acid, ellagic acid, caftaric acid, caffeic acid, castalagin, coutaric acid, fertaric acid, gallic acid, quercetin-3-O-galactoside, syringetin-3-O-glucoside, quercetin-3-O-glucuronide, kaempferol-3-O-glucoside, isorhamnetinglucoside, and grape seed extract. In embodiments, the beverage precursor is mixable with water, vodka, and/or ethanol to form a beverage having the flavor of beer without brewing, fermentation, or distillation.

In embodiments, a beverage precursor useful for the preparation of a wine-flavored beverage includes at least one flavor compound selected from a first group of compounds, at least one flavor compound selected from a second group of compounds, at least one flavor compound selected from a third group of compounds, and at least one flavor compound selected from a fourth group of flavor compounds. In embodiments, the first group of compounds includes acetaldehyde, ethyl butyrate, ethyl-2-methylpropanoate, ethyl octanoate, ethyl hexanoate, ethyl-3-methylbutyrate, ethyl-2-methylbutyrate, (E)-b-damascenone, 3-methylbutyl acetate, 1,1-diethoxyethane, trans-ethyl cinnamate, ethyl decanoate, and ethyl propanoate, the second group of compounds includes whiskey lactone, 2-methoxyphenol, 4-allyl-2-methoxyphenol, 5-pentyldihydrofuran-2(3H)-one, 4-ethyl-2-methoxyphenol, 4-methyl-2-methoxyphenol, 4-propyl-2-methoxyphenol, 5-hexyldihydrofuran-2(3H)-one, 2-methoxy-5-methylphenol, and 2,6-dimethoxyphenol, the third group of compounds includes tartaric acid, succinic acid, lactic acid, citric acid, galacturonic acid, pyruvic acid, malic acid, and acetic acid, and the fourth group of compounds includes tannic acid, oak extract, trans aconitic acid, cis-aconitic acid, ellagic acid, caftaric acid, caffeic acid, castalagin, coutaric acid, fertaric acid, gallic acid, quercetin-3-O-galactoside, syringetin-3-O-glucoside, quercetin-3-O-glucuronide, kaempferol-3-O-glucoside, isorhamnetinglucoside, and grape seed extract. In embodiments, each of the flavor compounds is generally recognized as safe for human consumption under Title 21 of the United States Code of Federal Regulations. In embodiments, the beverage precursor is mixable with water, ethanol, and/or vodka to form a beverage having the flavor of wine without brewing, fermentation, or distillation.

In embodiments, a method of making a beverage precursor for preparing a beverage having the flavor of wine involves combining at least one flavor compound selected from a first group of compounds, at least one flavor compound selected from a second group of compounds, at least one flavor compound selected from a third group of compounds, and at least one flavor compound selected from a fourth group of compounds. In embodiments, the first group of compounds includes acetaldehyde, ethyl butyrate, ethyl-2-methylpropanoate, ethyl octanoate, ethyl hexanoate, ethyl-3-methylbutyrate, ethyl-2-methylbutyrate, (E)-b-damascenone, 3-methylbutyl acetate, 1,1-diethoxyethane, trans-ethyl cinnamate, ethyl decanoate, and ethyl propanoate, the second group of compounds includes whiskey lactone, 2-methoxyphenol, 4-allyl-2-methoxyphenol, 5-pentyldihydrofuran-2(3H)-one, 4-ethyl-2-methoxyphenol, 4-methyl-2-methoxyphenol, 4-propyl-2-methoxyphenol, 5-hexyldihydrofuran-2(3H)-one, 2-methoxy-5-methylphenol, and 2,6-dimethoxyphenol, the third group of compounds includes tartaric acid, succinic acid, lactic acid, citric acid, galacturonic acid, pyruvic acid, malic acid, and acetic acid, and the fourth group of compounds includes tannic acid, oak extract, trans aconitic acid, cis-aconitic acid, ellagic acid, caftaric acid, caffeic acid, castalagin, coutaric acid, fertaric acid, gallic acid, quercetin-3-O-galactoside, syringetin-3-O-glucoside, quercetin-3-O-glucuronide, kaempferol-3-O-glucoside, isorhamnetinglucoside, and grape seed extract. In embodiments, the beverage precursor is mixable with water, vodka, and/or ethanol to form a beverage having the flavor of wine without brewing, fermentation, or distillation.

In embodiments, a beverage precursor useful for the preparation of a whiskey-flavored beverage includes at least one flavor compound selected from a first group of compounds, at least one flavor compound selected from a second group of compounds, at least one flavor compound selected from a third group of compounds, at least one flavor compound selected from a fourth group of compounds, and at least one flavor compound selected from a fifth group of compounds. In embodiments, the first group of compounds includes 3-methylbutanol, 2-methylbutanol, 2,3-butanedione, vanilline, 2-methylpropanol, 3-methylbutanal, 2,3-pentanedione, 2-methylpropanal, 2-methylbutanal, furaneol, and ethylfuraneol; the second group of compounds includes acetaldehyde, ethyl butyrate, ethyl-2-methylpropanoate, ethyl octanoate, ethyl hexanoate, ethyl-3-methylbutyrate, ethyl-2-methylbutyrate, (E)-b-damascenone, 3-methylbutyl acetate, 1,1-diethoxyethane, trans-ethyl cinnamate, ethyl-3-phenylpropanoate, ethyl decanoate, and ethyl propanoate; the third group of compounds includes whiskey lactone, 2-methoxyphenol, 4-allyl-2-methoxyphenol, 5-pentyldihydrofuran-2(3H)-one, 4-ethyl-2-methoxyphenol, 4-methyl-2-methoxyphenol, 4-propyl-2-methoxyphenol, 5-hexyldihydrofuran-2(3H)-one, 2-methoxy-5-methylphenol, and 2,6-dimethoxyphenol; the fourth group of compounds includes tannic acid, oak extract, trans aconitic acid, cis-aconitic acid, ellagic acid, and lyoniresinol; the fifth group of compounds includes 4-ethylphenol, 4-methylphenol, 3-methylphenol, 2-methylphenol, 3-ethylphenol, 2-ethylphenol, and phenol. In embodiments, each of the flavor compounds is generally recognized as safe for human consumption under Title 21 of the United States Code of Federal Regulations. In embodiments, the beverage precursor is mixable with water, ethanol, and/or vodka to form a beverage having the flavor of whiskey without brewing, fermentation, or distillation.

### Brief Description of the Drawings

Figure 1 is a flow chart showing the method of making a beverage using a beverage precursor (i.e., flavor system) as described herein.
Figure 2 is a flow chart showing a second embodiment of a method of making a beverage using a beverage precursor (i.e., flavor system) as described herein.
Figure 3 is a diagram of an apparatus for making a beverage using a beverage precursor (i.e., flavor system) as described herein.
Figure 4 is an illustration of a kit including the beverage precursor (i.e., flavor system) as described herein.
Figure 5A illustrates an analysis of aroma profiles of a cabernet sauvignon red wine sensory mixture against a traditional cabernet sauvignon red wine.
Figure 5B illustrates an analysis of aroma profiles of a cabernet sauvignon red wine sensory mixture against a traditional cabernet sauvignon red wine.
Figure 5C illustrates an analysis of aroma profiles of a chardonnay white wine sensory mixture against a traditional chardonnay white wine.
Figure 5D illustrates an analysis of aroma profiles of a chardonnay white wine sensory mixture against a traditional chardonnay white wine.
Figure 5E illustrates an analysis of aroma profiles of a reisling white wine sensory mixture against a traditional reisling white wine.
Figure 5F illustrates an analysis of aroma profiles of a merlot red wine sensory mixture against a traditional merlot red wine.
Figure 5G illustrates an analysis of aroma profiles of a scotch whiskey sensory mixture against a traditional Scotch Whisky.
Figure 5H illustrates an analysis of aroma profiles of a scotch whiskey sensory mixture against a traditional Scotch Whisky.
Figure 5I illustrates an analysis of aroma profiles of a bourbon whiskey sensory mixture against a traditional bourbon whiskey.
Figure 5J illustrates an analysis of aroma profiles of a bourbon whiskey sensory mixture against a traditional bourbon whiskey.
Figure 6A illustrates an analysis of taste profiles of a cabernet sauvignon red wine sensory mixture against a traditional cabernet sauvignon red wine.
Figure 6B illustrates an analysis of taste profiles of a merlot red wine sensory mixture against a traditional merlot red wine.
Figure 6C illustrates an analysis of taste profiles of a riesling white wine sensory mixture against a traditional riesling white wine.
Figure 6D illustrates an analysis of taste profiles of a merlot red wine sensory mixture against a traditional merlot red wine.
Figures 7A and 7B illustrate an analysis of taste profiles of a bourbon whiskey sensory mixture against a traditional bourbon whiskey.

### Detailed Description

Flavor perception of a consumable product is defined as the combined impression of specific aroma, taste and trigeminal compounds along with entities that evoke mouthfeel impressions (i.e., sensates) such as astringency, mouth coating, fullness, etc. Aroma compounds are volatiles that interact with olfactory receptors in the nose evoking a signal to the brain interpreted as smell, while the five basic tastes are elicited by interactions of tastants with specific taste receptors for salt, sweet, bitter, sour and umami tastes, respectively. Further, flavor perception includes characteristics of a consumable product, such as a color profile of a beverage, which can affect the flavor perception of the beverage. Flavor systems (i.e., sensory mixtures or beverage precursors) disclosed herein combine compounds to form a flavor perception of a desired beverage. The beverage precursor can be a clear liquid, alcohol free, extract free, concentrate free, free of undissolved solids, and/or free of essential oils.

In general, out of the many hundreds of chemical entities that are found in natural products, especially those of agricultural origin that may also have been subjected to additional fermentation or prolonged storage, only an order of ten may be responsible for aroma, taste and mouthfeel. Embodiments disclosed herein allow for beverages to be formed which exhibit taste, aroma, sensate, and visual looks as those which have been subjected to traditional beverage forming process such as fermentation, storage, distillation, and/or other time consuming processes.

A flavor that mimics exactly the sensory attributes of a certain product by using the same flavor compounds of the natural product is called "nature craft identical" and the combination of chemical entities that mimic the natural product is called "recombinant". Recombinants may be altered or new compounds added to compensate for flavor compounds that cannot be used due to toxicity concerns (not generally recognized as safe (GRAS)), availability issues, or potential stability issues and to create new superior flavors. GRAS compounds are compounds which have been generally recognized as safe for human consumption under Chapter 21 of the United States Code of Federal Regulations. Through omissions or additions of certain compounds in our "recombinants", we have also uncovered important interplays between aroma, flavor and mouthfeel impressions and have used this information to create the best possible nature craft identical product as outlined in the methods that follow. This approach is primarily based on chemical identification, receptor molecular biology and psychophysics and differs significantly from traditional trial and error artisan creations.

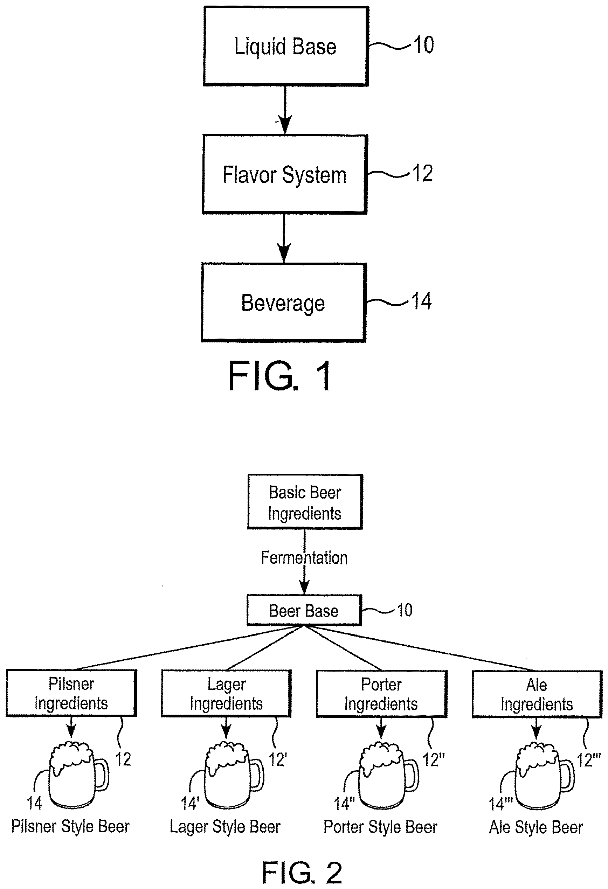

A flavor system (i.e., a sensory mixture or a beverage precursor) 12 for making a beverage 14 is provided herein. As used herein, the term "flavor system" or "sensory mixture" or "beverage precursor" describes one or more flavor compounds from each of thirteen different flavor compound groups and having certain flavor characteristics that are in combination within certain ranges to create beverages having the flavor of beer, wine, sparkling wine, cider, whiskey, gin, vermouth, rum, or tequila. The flavor compounds can include some compounds which are actually found in various wines, beers, whiskeys, gins, vermouths, rums, tequilas, and so forth wherein the flavor compounds need not include each of the compounds found in the respective ones of the various wines, beers, whiskeys, gins, vermouths, rums, tequilas, and so forth. The beverage precursor 12 is combined with a liquid base 10, such as water, ethanol, and/or vodka, to form a beverage 14 as shown in Figure 1. As used herein, the term "vodka" preferably refers to unflavored vodka, however, in an alternate embodiment, a flavored vodka may be used.

As used herein, the term "flavor" refers to taste, aroma and sensation and is thus a mixture of tastants, aroma compounds and sensates. Thus, for example, the beverages formed herein which have the flavor of beer provide a mixture of tastants, aroma compounds and sensates which mimics those found in a traditionally brewed beer.

As used herein, the term "wine" describes any beverage formed by fermenting grapes and/or other fruits and vegetables.

As used herein, the term "vermouth" refers to a type of wine that is flavored with botanicals, including, for example, aromatic herbs and spices, roots, barks, bitters, flowers, and/or seeds.

As used herein, the term "beer" describes a beverage brewed by fermenting malt with sugar and yeast and flavoring with hops for example.

As used herein, the term "whiskey" describes a beverage made from fermented grain such as, for example, rye or barley, which can be aged or blended.

As used herein, the term "gin" describes a beverage possessing a predominant flavor of juniper berries, such as a beverage made from distilled or redistilled neutral grain spirits flavored with juniper berries and aromatics including, for example, anise and caraway seeds; grain spirits which are distilled and then redistilled with botanicals to extract the aromatic compounds; and ethyl alcohol which is redistilled in the presence of juniper berries and other natural botanicals.

As used herein, the term "rum" refers, for example, to a beverage made from a fermented cane product, such as molasses, caramelized sugar, or sugarcane juice.

As used herein, the term "tequila" refers, for example, to a beverage made from fermented mash of an agave.

In this specification, the word "about" is often used in connection with numerical values to indicate that mathematical precision of such values is not intended. Accordingly, it is intended that where "about" is used with a numerical value, a tolerance of ±10% is contemplated for that numerical value.

As shown in the flow chart depicted in Figure 1, a beverage precursor (i.e., flavor system or sensory mixture) 12 can be mixed with a liquid base 10, preferably water, or an alcohol such as ethanol or vodka, to create a beverage 14 having the flavor and/or mouthfeel of beverages such as beer, wine, sparkling wine, cider, whiskey, gin, vermouth, rum, and/or tequila, but without fermentation, distillation, brewing and/or other costly and time consuming measures (for example aging) associated with the production of beers, wines, sparkling wines, ciders, whiskeys, gins, vermouths, rums, or tequilas. In an alternative embodiment, the beverage precursor can be combined with a low flavor beer, wine, sparkling wine, cider, whiskey, gin, vermouth, rum, and/or tequila to create a superior beer, wine, sparkling wine, cider, whiskey, gin, vermouth, rum, and/or tequila flavored beverage.

The beverage precursor and beverages made therefrom provide several advantages over conventional brewing, fermentation, distillation, and other beverage making operations. First of all, while not wishing to be bound by theory, it is believed that compounds present in conventionally brewed and/or fermented beverages may be responsible for spoilage, thereby limiting the shelf-life of the conventional beverages. In contrast, the beverage precursor and resulting beverages as described herein can be tailored to exclude compounds responsible for spoilage or other undesirable side effects.

Moreover, other compounds in the conventional beverages could otherwise not be generally recognized as safe (GRAS). Such compounds, which may provide little flavor, can be excluded from the beverage precursors and beverages provided herein. In addition, if such compounds do provide a flavor to a particular beverage, the beverage precursors and beverages described herein may be customized to replace such compounds with other compounds (such as compounds that are generally recognized as safe) that contribute a similar flavor to the beverage precursor or beverage. For example, tyramine, a compound that may cause headaches if consumed, and further, one that can be found in naturally/traditionally prepared wines, is not a GRAS compound, and therefore can be excluded from beverage precursors and beverages provided herein.

The use of beverage precursor to form beverages as described herein allows for quick and easy customization of beverages as compared to conventional beverages and manufacturing systems. For example, as discussed above, beverage precursors may be customized to remove particular compounds (such as, for example, compounds responsible for spoilage)-such compounds may be eliminated (such as in cases wherein the compounds provide little or no flavor) or replaced with a different compound (for example, replacing a carcinogenic compound with a compound that is generally recognized as safe but which provides a similar or same flavor to the overall beverage). In other embodiments, beverage precursors may be customized based on the flavor preferences of a consumer or group of consumers. As one example, a beverage having the flavor of whiskey could be customized to be more or less smoky, or more or less peaty, or more light or more rich or smooth, and so forth, depending on the taste preferences of a consumer or group of consumers. Additionally, a colorant can be added to the beverage precursor such that the beverage formed from the beverage precursor has the color of a desired beverage.

As used herein, the term "low flavor beer" is used to describe a light beer and/or a beer having a light color and little flavor. Suitable low flavor beers include those described in U.S. Patent No. 7,008,652 to Effler, U.S. Patent No. 4,495,204 to Weaver et al., U.S. Patent No. 4,180,589 to Chicoye et al. and U.S. Patent No. 4,440,795 to Goldstein et al., the entire content of each of which is incorporated herein by reference thereto.

As shown in Figure 2, a beer base 10 can be made by fermenting a low flavor beer. Alternatively, the beer base 10 can be water. A variety of different beverage precursors (i.e., flavor systems) 12, 12', 12", 12'" can be formulated to include varying amounts of a plurality of flavor, aroma and/or mouthfeelcompounds found in various styles of beers. The beverage precursor 12, 12', 12", 12'" can be added to the beer base 10 to form various beer style beverages having the flavor of pilsner style beer, lager style beer, porter style beer, ale style beer and the like. In an embodiment, a liquid base such as water, vodka, and/or ethanol may be used.

The beverage precursor can be altered by substituting or adding additional flavor and/or aroma compounds to the beverage precursor, as described herein. The beverage precursor can include at least one flavor or aroma compound from each of thirteen different flavor compound groups described below. Each flavor group includes compounds which impart a particular aroma, taste or mouthfeel. Thus, an adult consumer can purchase a beverage precursor and create a beverage having only the flavor notes that the consumer prefers and/or only the flavor notes associated with the preferred type of beer, wine, sparkling wine, cider, whiskey, gin, vermouth, rum, and/or tequila. The consumer can then add additional quantities of the same flavor and/or aroma compounds or add additional flavor and/or aroma compounds to the beverage precursor to alter the flavor and/or aroma of the beverage, which mimics the taste and/or mouthfeel of conventionally brewed and/or fermented beer, wine, sparkling wine, cider, whiskey/scotch, gin, vermouth, rum, and/or tequila.

Various beverage precursors having a wide variety of flavors can be rapidly and inexpensively produced and then combined with a liquid base to form a beverage which mimics the taste and aroma of conventionally brewed and/or fermented beer, wine, sparkling wine, cider, whiskey, gin, vermouth, rum, and/or tequila or mixed beverages, or enhances the taste of low flavor beers.

In the preferred embodiment, the beverage precursor includes at least one flavor compound from one or more of each of the following groups: (1) Cheesy, Sweaty Flavor Group, (2) Malty, Buttery and/or Sweet Flavor Group, (3) Floral and/or Honey Flavor Group, (4) Fruity Flavor Group, (5) Smoky, Coconut, Woody Flavor Group, (6) Cooked, Seasoning, Fatty Flavor Group, (7) Phenolic/Medicinal Flavor Group, (8) Sour Taste Group, (9) Sweet Taste Group, (10) Salty and Bitter Taste Group, (11) Astringent, Mouthfeel Group, (12) Bitter Taste Group and/or (13) Umami Taste and Mouthfeel Group.

However, if the beverage precursor is to be used to form a beverage which would not include flavor compounds from a particular group as shown in the tables below, none of those compounds would be included in the beverage precursor. The flavor groups can include compounds which can impart certain aromas, tastes and sensations to the beverage precursor 12 and resulting beverage depending on the combination and concentration of the various compounds included therein. The flavor compounds in each group are generally interchangeable with other compounds in the same group.

Moreover, certain compounds, particularly those in the Astringent, Mouthfeel Group may elicit mouthfeel impressions such as tingling, mouth-puckering, smooth, velvety, mouth-coating, etc. In addition, certain compounds may affect the presentation of aromas and modulate the perceived aroma intensity.

In embodiments, the beverage precursor is combined with a liquid base 10 (as shown in Figure 1) to form a beverage 14. In embodiments, the liquid base 10 is water or a combination of water and ethanol. In other embodiments, the liquid base 10 can be a low flavor beer (as shown in Figure 2). However, the flavor compounds and concentrations thereof used in the beverage precursor 12 for addition to a low flavor beer base 10 should be adjusted to account for any flavor compounds already present in the low flavor beer. For example, if a low flavor beer is used as the base 10 and the low flavor beer has fruity flavors therein, the amount of fruity compounds should be reduced and/or limited in the beverage precursor.

The compounds included in each flavor group along with a range of the amount of each compound that can be included in the beverage precursor 12 is shown in Tables 1-13 below. In embodiments, the compounds of each flavor group may be included as shown to prepare, for example, a wine-like beverage, a whiskey-like beverage, a beer-like beverage, a gin-like beverage, a vermouth-like beverage, a rum-like beverage, or a tequila-like beverage. In other embodiments, as shown in the tables below, certain compounds of each flavor group may not be necessary or desirable for inclusion in a particular beverage, and thus a particular beverage may not include compounds from a particular flavor group. In addition, each of the flavor group compounds within a flavor group can be substituted for other compounds in the same group to achieve a similar sensorial effect or to fine tune the flavor profile of a beverage.

As shown in Tables 1A and 1B, Flavor Group 1 includes nine compounds that can impart a cheesy or sweaty aroma to a beverage formed from the beverage precursor. For example, in embodiments, the compounds of Flavor Group 1 are selected from the group consisting of octanoic acid, 2-methylpropanoic acid, butanoic acid, 3-methylbutanoic acid, 2-methylbutanoic acid, 3-methylpentanoic acid, 4-methylpentanoic acid, decanoic acid, hexanoic acid and combinations thereof. The range of each compound of Flavor Group 1 that can be included in a wine-like beverage formed from the beverage precursor 12, the range of each compound for inclusion in whiskey-like beverages formed from the beverage precursor 12, and the range of each compound for inclusion in beer-like beverages formed from the beverage precursor 12 in micrograms per liter (µg/l) are shown in Table 1-A below. The range of each compound for inclusion in gin-like beverages formed from the beverage precursor 12, the range of each compound for inclusion in vermouth-like beverages formed from the beverage precursor 12, the range of each compound for inclusion in rum-like beverages formed from the beverage precursor 12, and the range of each compound for inclusion in tequila-like beverages formed from the beverage precursor 12 in micrograms per liter (µg/l) are shown in Table 1-B below.

**Table 1A**

| | | Range for Inclusion in Wine | | Range for Inclusion in Whiskey | | Range for Inclusion in Beer | |
|---|---|---|---|---|---|---|---|
| Category (descriptor) | Compound | low | high | low | high | low | high |
| | | µg/l | µg/l | µg/l | µg/l | µg/l | µg/l |
| Flavor Group 1 cheesy, sweaty aroma | octanoic acid | 250 | 25,000 | 250 | 50,000 | 250 | 25,000 |
| | 2-methylpropanoic acid | 200 | 10,000 | 0 | 0 | 200 | 5,000 |
| | butanoic acid | 200 | 15,000 | 0 | 0 | 200 | 10,000 |
| | 3-methylbutanoic acid | 200 | 10,000 | 0 | 0 | 100 | 5,000 |
| | 2-methylbutanoic acid | 100 | 10,000 | 0 | 0 | 50 | 2,000 |
| | 3-methylpentanoic acid | 1 | 1,000 | 0 | 0 | 0.5 | 500 |
| | 4-methylpentanoic acid | 1 | 1,000 | 0 | 0 | 0.5 | 500 |
| | decanoic acid | 50 | 2,000 | 500 | 100,000 | 50 | 10,000 |
| | hexanoic acid | 300 | 15,000 | 0 | 0 | 300 | 10,000 |

**Table 1B**

| | | Range for Inclusion in Gin | | Range for Inclusion in Vermouth | | Range for Inclusion in Rum (white and dark) | | Range for Inclusion in Tequila | |
|---|---|---|---|---|---|---|---|---|---|
| Category (descriptor) | Compound | low | high | low | high | low | high | low | high |
| | | µg/l | µg/l | µg/l | µg/l | µg/l | µg/l | µg/l | µg/l |
| Flavor Group 1 cheesy, sweaty aroma | octanoic acid | 0 | 0 | 250 | 25,000 | 0 | 0 | 500 | 50,000 |
| | 2-methylpropanoic acid | 0 | 0 | 200 | 10,000 | 0 | 0 | 200 | 10,000 |
| | butanoic acid | 0 | 0 | 200 | 15,000 | 0 | 0 | 200 | 15,000 |
| | 3-methylbutanoic acid | 0 | 0 | 200 | 10,000 | 0 | 0 | 100 | 10,000 |
| | 2-methylbutanoic acid | 0 | 0 | 100 | 10,000 | 0 | 0 | 100 | 10,000 |
| | 3-methylpentanoic acid | 0 | 0 | 1 | 1000 | 0 | 0 | 1 | 1000 |
| | 4-methylpentanoic acid | 0 | 0 | 1 | 1000 | 0 | 0 | 1 | 1000 |
| | decanoic acid | 0 | 0 | 50 | 2000 | 0 | 0 | 500 | 100,000 |
| | hexanoic acid | 0 | 0 | 300 | 15,000 | 0 | 0 | 100 | 5000 |

As shown in Tables 2A and 2B, Flavor Group 2 can include eighteen compounds that can impart a malty, buttery and/or sweet aroma to a beverage formed from the beverage precursor 12. For example, in embodiments, the compounds of Flavor Group 2 may be selected from the group consisting of 3-methylbutanol, 2-methylbutanol, 2,3-butanedione, vanilline, ethyl vanilline, 2-methylpropanol, 3-methylbutanal, 2,3-pentanedione, 2-methylpropanal, 2-methylbutanal, acetylpyrazine, maltol, methylenecyclopentenolone, furaneol, 2-aminoacetophenone, ethylfuraneol, furfural, anis alcohol, and combinations thereof.

The range of each compound of Flavor Group 2 that can be included in a beverage precursor 12 for forming a wine-like beverage, the range of each compound for inclusion in a beverage precursor 12 for forming a whiskey-like beverage and the range of each compound for inclusion in a beverage precursor 12 for forming a beer-like beverage in micrograms per liter (µg/l) are shown in Table 2A. The range of each compound of Flavor Group 2 for inclusion in a beverage precursor 12 for forming a gin-like beverage, the range of each compound for inclusion in a beverage precursor 12 for forming a vermouth-like beverage, the range of each compound for inclusion in a beverage precursor 12 for forming a rum-like beverage, and the range of each compound for inclusion in a beverage precursor 12 for forming a tequila-like beverage are shown in Table 2B. Moreover, each of the Flavor Group 2 compounds can be substituted for other compounds in the same group to achieve a similar aroma.

**Table 2A**

| | | Range for Inclusion in Wine | | Range for Inclusion in Whiskey | | Range for Inclusion in Beer | |
|---|---|---|---|---|---|---|---|
| Category (descriptor) | Compound | low | high | low | high | low | high |
| | | µg/l | µg/l | µg/l | µg/l | µg/l | µg/l |
| Flavor Group 2-(malty, buttery, sweet aroma) | 3-methylbutanol | 30,000 | 1,500,000 | 100,000 | 5,000,000 | 5,000 | 250,000 |
| | 2-methylbutanol | 30,000 | 1,500,000 | 100,000 | 5,000,000 | 5,000 | 250,000 |
| | 2,3-butanedione | 100 | 50,000 | 5 | 200 | 5 | 50,000 |
| | vanilline | 50 | 10,000 | 100 | 25,000 | 1 | 50 |
| | ethyl vanilline | 50 | 10,000 | 100 | 25,000 | 1 | 50 |
| | 2-methylpropanol | 5,000 | 250,000 | 100,000 | 10,000,000 | 5,000 | 5,000,000 |
| | 3-methylbutanal | 10 | 1,000 | 20 | 5,000 | 3 | 150 |
| | 2,3-pentanedione | 1 | 50,000 | 1 | 50,000 | 1 | 50,000 |
| | 2-methylpropanal | 5 | 500 | 20 | 1,000 | 1 | 50 |
| | 2-methylbutanal | 20 | 2,000 | 100 | 8,000 | 0.5 | 25 |
| | acetylpyrazine | 0.5 | 50 | 0.5 | 50 | 2 | 100 |
| | maltol | 10 | 1000 | 10 | 1,000 | 10 | 1,500 |
| | methylenecyclopent enolone | 1 | 100 | 1 | 100 | 1 | 100 |
| | furaneol | 10 | 1,000 | 10 | 1,000 | 30 | 1,500 |
| | 2-aminoacetophenone | 0 | 0 | 0 | 0 | 0.1 | 50 |
| | ethylfuraneol | 0.5 | 50 | 0.5 | 50 | 2 | 100 |
| | furfural | 10 | 1,000 | 10 | 1,000 | 30 | 1,500 |

**Table 2B**

| | | Range for Inclusion in Gin | | Range for Inclusion in Vermouth | | Range for Inclusion in Rum (White and Dark) | | Range for Inclusion in Tequila | |
|---|---|---|---|---|---|---|---|---|---|
| Category (descriptor) | Compound | low | high | low | high | low | high | low | high |
| | | µg/l | µg/l | µg/l | µg/l | µg/l | µg/l | µg/l | µg/l |
| | 3-methylbutanol | 0 | 0 | 5,000 | 500,000 | 10,000 | 5,000,000 | 50,000 | 5,000,000 |
| | 2-methylbutanol | 0 | 0 | 5,000 | 500,000 | 50,000 | 5,000,000 | 5,000 | 5,000,000 |
| | 2,3-butanedione | 0 | 0 | 5 | 25,000 | 5 | 25,000 | 100 | 50,000 |
| Flavor Group 2-(malty, buttery, sweet aroma) | vanilline | 0 | 0 | 10 | 1,000 | 10 | 10,000 | 10 | 10,000 |
| | ethyl vanilline | 0 | 0 | 10 | 1,000 | 10 | 10,000 | 10 | 10,000 |
| | 2-methylpropanol | 0 | 0 | 5,000 | 500,000 | 5,000 | 5,000,000 | 10,000 | 1,000,000 |
| | 3-methylbutanal | 0 | 0 | 10 | 1,000 | 5 | 5,000 | 50 | 5,000 |
| | 2,3-pentanedione | 0 | 0 | 1 | 50,000 | 1 | 50,000 | 1 | 50,000 |
| | 2-methylpropanal | 0 | 0 | 5 | 500 | 20 | 5,000 | 1 | 2,000 |
| | 2-methylbutanal | 0 | 0 | 20 | 2,000 | 5 | 1,000 | 50 | 5,000 |
| | acetylpyrazine | 0 | 0 | 0.1 | 50 | 0.5 | 5,000 | 0 | 0 |
| | maltol | 0 | 0 | 10 | 1,000 | 100 | 10,000 | 0 | 0 |
| | methylenecyclope ntenolone | 0 | 0 | 1 | 100 | 1 | 500 | 0.01 | 10 |
| | furaneol | 0 | 0 | 10 | 1,000 | 10 | 1,000 | 0.01 | 50 |
| | 2-aminoacetopheno ne | 0 | 0 | 0 | 0 | 0 | 0 | .01 | 10 |
| | anis alcohol | 0 | 0 | 0 | 0 | 0 | 0 | 10 | 10,000 |
| | furfural | 0 | 0 | 10 | 1,000 | 10 | 1,000 | 0.01 | 50 |
| | ethylfuraneol | 0 | 0 | 0.5 | 50 | 0.5 | 5,000 | 0 | 0 |

As shown in Tables 3A and 3B, Flavor Group 3 includes fifteen compounds that can impart a floral and/or honey aroma to a beverage formed from the beverage precursor 12. The compounds of Flavor Group 3 are selected from the group consisting of 2-phenylethanol, 2-phenylacetic acid, 2-phenylethyl acetate, phenylacetaldehyde, myrcene, geraniol, alpha-pinene, limonene, alpha-terpineol, p-cymene, 1,3,5-undecatriene, terpinolene, linalool, b-citronellol, thymol, and combinations thereof.

The range of each compound of Flavor Group 3 that can be included in a beverage precursor 12 for forming a wine-like beverage, the range of each compound in a beverage precursor 12 for forming a whiskey-like beverage and the range of each compound in a beverage precursor 12 for forming a beer-like beverage in micrograms per liter (µg/l) is shown in Table 3A. The range of each compound of Flavor Group 3 that can be included in a beverage precursor 12 for forming a gin-like beverage, the range of each compound in a beverage precursor 12 for forming a vermouth-like beverage, the range of each compound in a beverage precursor 12 for forming a rum-like beverage, and the range of each compound in a beverage precursor 12 for forming a tequila-like beverage in micrograms per liter (µg/l) are shown in Table 3B. Moreover, each of the Flavor Group 3 compounds can be substituted for other compounds in the same group to achieve a similar aroma.

**Table 3A**

| | | Range for Inclusion in Wine | | Range for Inclusion in Whiskey | | Range for Inclusion in Beer | |
|---|---|---|---|---|---|---|---|
| Category (descriptor) | Compound | low | high | low | high | low | high |
| | | µg/l | µg/l | µg/l | µg/l | µg/l | µg/l |
| Flavor Group 3-(Floral, Honey) | 2-phenylethanol | 1,000 | 200,000 | 5,000 | 200,000 | 1,500 | 75,000 |
| | 2-phenylacetic acid | 10 | 750 | 10 | 1,000 | 25 | 1,500 |
| | 2-phenylethyl acetate | 5 | 500 | 100 | 10,000 | 5 | 500 |
| | phenylacetaldehyde | 1 | 500 | 1 | 500 | 1 | 500 |
| | myrcene | 0 | 0 | 0 | 0 | 500 | 50,000 |
| | geraniol | 1 | 100 | 1 | 100 | 1 | 100 |
| | alpha-pinene | 0 | 0 | 0 | 0 | 0 | 0 |
| | limonene | 0 | 0 | 0 | 0 | 0 | 0 |
| | alpha-terpineol | 0 | 0 | 0 | 0 | 0 | 0 |
| | p-cymene | 0 | 0 | 0 | 0 | 0 | 0 |
| | 1,3,5-undecatriene | 0 | 0 | 0 | 0 | 0 | 0 |
| | terpinolene | 0 | 0 | 0 | 0 | 0 | 0 |
| | linalool | 0.5 | 500 | 0.5 | 500 | 10 | 10,000 |
| | b-citronellol | 1 | 100 | 1 | 100 | 1 | 100 |

**Table 3B**

| | | Range for Inclusion in Gin | | Range for Inclusion in Vermouth | | Range for Inclusion in Rum (White and Dark) | | Range for Inclusion in Tequila | |
|---|---|---|---|---|---|---|---|---|---|
| Category (descriptor) | Compound | low | high | low | high | low | high | low | high |
| | | µg/l | µg/l | µg/l | µg/l | µg/l | µg/l | µg/l | µg/l |
| Flavor Group 3-(Floral, Honey) | 2-phenylethanol | 0 | 0 | 1,000 | 200,000 | 100 | 20,000 | 1,000 | 200,000 |
| | 2-phenylacetic acid | 0 | 0 | 10 | 750 | 10 | 750 | 10 | 750 |
| | 2-phenylethyl acetate | 0 | 0 | 5 | 500 | 5 | 500 | 5 | 500 |
| | phenylacetaldehyde | 0 | 0 | 1 | 500 | 1 | 500 | 1 | 500 |
| | myrcene | 500 | 50,000 | 0 | 0 | 0 | 0 | 0 | 0 |
| | geraniol | 10 | 10,000 | 1 | 100 | 1 | 100 | 1 | 500 |
| | alpha-pinene | 1,000 | 50,000 | 0 | 0 | 0 | 0 | 0.1 | 100 |
| | limonene | 1,000 | 50,000 | 0 | 0 | 0 | 0 | 0 | 0 |
| | alpha-terpineol | 200 | 20,000 | 0 | 0 | 0 | 0 | 1 | 1,000 |
| | p-cymene | 100 | 10,000 | 0 | 0 | 0 | 0 | 0 | 0 |
| | 1,3,5-undecatriene | 1 | 1,000 | 0 | 0 | 0 | 0 | 0.001 | 1 |
| | terpinolene | 100 | 10,000 | 0 | 0 | 0 | 0 | 1 | 1,000 |
| | linalool | 1,000 | 100,000 | 0.5 | 500 | 0.1 | 100 | 10 | 2000 |
| | b-citronellol | 10 | 10,000 | 1 | 100 | 1 | 100 | 1 | 1,000 |
| | thymol | 0.1 | 1,000 | 0.1 | 1,000 | 0 | 0 | 0.1 | 100 |

As shown in Tables 4A and 4B, Flavor Group 4 includes twenty-two compounds that can impart a fruity aroma to a beverage formed from the beverage precursor 12. The compounds of Flavor Group 4 are selected from the group consisting of acetaldehyde, ethyl butyrate, ethyl-2-methylpropanoate, ethyl octanoate, ethyl hexanoate, ethyl-3-methylbutyrate, ethyl-2-methylbutyrate, (E)-b-damascenone, 3-methylbutyl acetate, 1,1-diethoxyethane, trans-ethyl cinnamate, phenylethylphenylacetate, 4-mercapto-4-methylpentan-2-ol, ethylacetate, ethyl laurate, lauryl alcohol, ethyl nonanoate, methylmethylpropanoate, ethyl-3-phenylpropanoate, ethyl decanoate, ethyl propanoate, and combinations thereof.

The range of each compound of Flavor Group 4 that can be included in the beverage precursor for forming a wine-like beverage, the range of each compound in a beverage precursor 12 for forming a whiskey-like beverage and the range of each compound in a beverage precursor 12 for forming a beer-like beverage in micrograms per liter (µg/l) is shown in Table 4A. The range of each compound of Flavor Group 4 that can be included in a beverage precursor 12 for forming a gin-like beverage, the range of each compound in a beverage precursor 12 for forming a vermouth-like beverage, the range of each compound in a beverage precursor 12 for forming a rum-like beverage, and the range of each compound in a beverage precursor 12 for forming a tequila-like beverage are shown in Table 4B. Moreover, each of the Flavor Group 4 compounds can be substituted for other compounds in the same group to achieve a similar aroma.

**Table 4A**

| | | Range for Inclusion in Wine | | Range for Inclusion in Whiskey | | Range for Inclusion in Beer | |
|---|---|---|---|---|---|---|---|
| Category (descriptor) | Compound | low | high | low | high | low | high |
| | | µg/l | µg/l | µg/l | µg/l | µg/l | µg/l |
| | acetaldehyde | 1,000 | 50,000 | 3,000 | 300,000 | 25 | 25,000 |
| | ethyl butyrate | 10 | 750 | 100 | 5,000 | 20 | 1,000 |
| | ethyl-2-methylpropanoate | 5 | 500 | 50 | 2,500 | 0.3 | 15 |
| | ethyl octanoate | 1 | 2,000 | 500 | 25,000 | 20 | 1,000 |
| | ethyl hexanoate | 5 | 2,000 | 100 | 10,000 | 20 | 1,000 |
| Flavor Group 4-(fruity aroma) | ethyl-3-methylbutyrate | 1 | 250 | 10 | 1,000 | 0.04 | 2 |
| | ethyl-2-methylbutyrate | 0.5 | 50 | 10 | 500 | 0.06 | 3 |
| | (E)-b-damascenone | 0.1 | 5 | 1 | 100 | 0.2 | 10 |
| | 3-methylbutyl acetate | 300 | 10,000 | 500 | 25,000 | 100 | 15,000 |
| | 1,1-diethoxyethane | 50 | 2,000 | 2,000 | 100,000 | 5 | 250 |
| | trans-ethyl cinnamate | 0.2 | 10 | 1 | 100 | 0.2 | 10 |
| | phenylethylphenylacetate | 5 | 500 | 50 | 5,000 | 5 | 500 |
| | 4-mercapto-4-methylpentan-2-ol | 0.001 | 0.1 | 0 | 0 | 0 | 0 |
| | ethylacetate | 100,0 00 | 5,000,000 | 300,000 | 30,000,000 | 2,500 | 2,500,000 |
| | ethyl laurate | 100 | 5,000 | 100 | 50,000 | 100 | 5,000 |
| | lauryl alcohol | 50 | 10,000 | 50 | 100,000 | 50 | 10,000 |
| | ethyl nonanoate | 1 | 500 | 10 | 10,000 | 1 | 500 |
| | methylmethylpropanoate | 0.5 | 100 | 5 | 1,000 | 0.5 | 100 |
| | ethyl-3-phenylpropanoate | 1 | 500 | 10 | 1000 | 1 | 500 |
| | ethyl decanoate | 1 | 1,000 | 100 | 100,000 | 1 | 1000 |
| | ethyl propanoate | 5 | 500 | 50 | 5000 | 5 | 500 |

**Table 4B**

| | | Range for Inclusion in Gin | | Range for Inclusion in Vermouth | | Range for Inclusion in Rum (White and Dark) | | Range for Inclusion in Tequila | |
|---|---|---|---|---|---|---|---|---|---|
| Category (descriptor) | Compound | low | high | low | high | low | high | low | high |
| | | µg/l | µg/l | µg/l | µg/l | µg/l | µg/l | µg/l | µg/l |
| | acetaldehyde | 25 | 25,000 | 500 | 50,000 | 100 | 10,000 | 50 | 10,000 |
| | ethyl butyrate | 20 | 5,000 | 10 | 3,000 | 0.5 | 500 | 10 | 5,000 |
| | ethyl-2-methylpropanoate | 5 | 2,500 | 5 | 500 | 1 | 500 | 10 | 2,500 |
| | ethyl octanoate | 1 | 20,000 | 1 | 5,000 | 50 | 50,000 | 100 | 10,000 |
| | ethyl hexanoate | 5 | 5,000 | 5 | 5,000 | 5 | 20,000 | 5 | 10,000 |
| Flavor Group 4-(fruity aroma) | ethyl-3-methylbutyrate | 200 | 10,000 | 1 | 500 | 0.1 | 500 | 0.5 | 1,000 |
| | ethyl-2-methylbutyrate | 10 | 1,000 | 1 | 500 | 0.5 | 500 | 0.5 | 500 |
| | (E)-b-damascenone | 0.1 | 100 | 0.05 | 5 | 0.1 | 100 | 0.01 | 10 |
| | 3-methylbutyl acetate | 300 | 15,000 | 300 | 10,000 | 5 | 10,000 | 100 | 10,000 |
| | 1,1-diethoxy ethane | 5 | 50,000 | 10,000 | 300,000 | 100 | 100,000 | 1000 | 100,000 |
| | trans-ethyl cinnamate | 0.5 | 100 | 0.2 | 10 | 0.5 | 100 | 1 | 100 |
| | phenylethylphenylacetate | 5 | 1,000 | 1 | 500 | 5 | 1,000 | 10 | 5,000 |
| | 4-mercapto-4-methylpentan-2-ol | 0 | 0 | 0.001 | 0.1 | 0 | 0 | 0.0001 | 0.1 |
| | ethylacetate | 25 | 2,500,000 | 50,000 | 50,000,000 | 10,000 | 1,000,000 | 10,000 | 1,000,000 |
| | ethyl laurate | 100 | 5,000 | 100 | 5,000 | 100 | 5,000 | 0 | 0 |
| | lauryl alcohol | 50 | 10,000 | 50 | 10,000 | 50 | 10,000 | 0 | 0 |
| | ethyl nonanoate | 1 | 5,000 | 1 | 500 | 50 | 10,000 | 1 | 500 |
| | methylmethylpropanoate | 0.5 | 100 | 500 | 50,000 | 0.5 | 500 | 0.5 | 500 |
| | ethyl-3-phenylpropanoate | 10 | 1,000 | 1 | 500 | 1 | 500 | 1 | 1,000 |
| | ethyl decanoate | 1 | 50,000 | 1 | 1,000 | 100 | 100,000 | 100 | 100,000 |
| | ethyl propanoate | 5 | 1,000 | 5 | 500 | 5 | 1,000 | 10 | 5,000 |
| | ethyl lactate | 0 | 0 | 0 | 0 | 0 | 0 | 10,000 | 1,000,000 |

As shown in Tables 5A and 5B, Flavor Group 5 includes eleven compounds that can impart a smoky, coconut, and/or woody aroma to a beverage formed from the beverage precursor 12. The compounds of Flavor Group 5 are selected from the group consisting of whiskey lactone, 2-methoxyphenol, 4-allyl-2-methoxyphenol, 5-pentyldihydrofuran-2(3H)-one, 4-ethyl-2-methoxyphenol, 4-methyl-2-methoxyphenol, 4-propyl-2-methoxyphenol, 5-hexyldihydrofuran-2(3H)-one, 2-methoxy-5-methylphenol, 2,6-dimethoxyphenol, ethyl lactate, farnesol, and combinations thereof.

The range of each compound of Flavor Group 5 that can be included in the beverage precursor 12 for forming a wine-like beverage, the range of each compound in a beverage precursor 12 for forming a whiskey-like beverage and the range of each compound in a beverage precursor 12 for forming a beer-like beverage in micrograms per liter (µg/l) is shown in Table 5A. The range of each compound of Flavor Group 5 that can be included in the beverage precursor 12 for forming a gin-like beverage, the range of each compound in a beverage precursor 12 for forming a vermouth-like beverage, the range of each compound in a beverage precursor 12 for forming a rum-like beverage, and the range of each compound in a beverage precursor 12 for forming a tequila-like beverage in micrograms per liter (µg/l) is shown in Table 5B. Moreover, each of the Flavor Group 5 compounds can be substituted for other compounds in the same group to achieve a similar aroma.

**Table 5A**

| | | Range for Inclusion in Wine | | Range for Inclusion in Whiskey | | Range for Inclusion in Beer | |
|---|---|---|---|---|---|---|---|
| Category (descriptor) | Compound | low | high | low | high | low | high |
| | | µg/l | µg/l | µg/l | µg/l | µg/l | µg/l |
| Flavor Group 5-(Smoky, coconut, woody aroma) | whiskey lactone | 50 | 2,000 | 100 | 50,000 | 0 | 0 |
| | 2-methoxyphenol | 0.1 | 200 | 10 | 10,000 | 0.1 | 500 |
| | 4-allyl-2-methoxyphenol | 0.1 | 100 | 10 | 1,000 | 0.1 | 500 |
| | 5-pentyldihydrofuran-2(3H)-one | 2 | 100 | 10 | 500 | 0 | 0 |
| | 4-ethyl-2-methoxyphenol | 0.5 | 100 | 5 | 5,000 | 0.5 | 1,000 |
| | 4-methyl-2-methoxyphenol | 0.5 | 50 | 10 | 10,000 | 0.5 | 1,000 |
| | 4-propyl-2-methoxyphenol | 0.5 | 50 | 1 | 500 | 0.5 | 1,000 |
| | 5-hexyldihydrofuran-2(3H)-one | 0.3 | 10 | 1 | 70 | 0 | 0 |
| | 2-methoxy-5-methylphenol | 0.1 | 100 | 10 | 1000 | 0.1 | 100 |
| | 2,6-dimethoxyphenol | 10 | 1000 | 10 | 1000 | 10 | 1000 |
| | farnesol | 1 | 100 | 0 | 0 | 0 | 0 |

**Table 5B**

| | | Range for Inclusion in Gin | | Range for Inclusion in Vermouth | | Range for Inclusion in Rum (White and Dark) | | Range for Inclusion in Tequila | |
|---|---|---|---|---|---|---|---|---|---|
| Category (descriptor) | Compound | low | high | low | high | low | high | low | high |
| | | µg/l | µg/l | µg/l | µg/l | µg/l | µg/l | µg/l | µg/l |
| | whiskey lactone | 0 | 0 | 0 | 0 | 10 | 5,000 | 50 | 20,000 |
| Flavor Group 5-(Smoky, coconut, woody aroma) | 2 -methoxyphenol | 10 | 10,000 | 0.1 | 50 | 10 | 5,000 | 1 | 1,000 |
| | 4-allyl-2-methoxyphenol | 10 | 1,000 | 0.1 | 500 | 1 | 1,000 | 0.01 | 1000 |
| | 5-pentyldihydrofuran-2(3H)-one | 0 | 0 | 0 | 0 | 1 | 1,000 | 10 | 500 |
| | 4-ethyl-2-methoxyphenol | 5 | 5,000 | 0.5 | 100 | 0.1 | 100 | 1 | 1,000 |
| | 4-methyl-2-methoxyphenol | 10 | 10,000 | 0.5 | 50 | 10 | 5,000 | 1 | 1,000 |
| | 4-propyl-2-methoxyphenol | 1 | 500 | 0.5 | 50 | 1 | 500 | 0.5 | 500 |
| | 5-hexyldihydrofuran-2(3H)-one | 0 | 0 | 0 | 0 | 1 | 200 | 1 | 100 |
| | 2-methoxy-5-methylphenol | 0.1 | 100 | 0.1 | 100 | 10 | 500 | 1 | 100 |
| | 2,6-dimethoxyphenol | 10 | 1,000 | 0.1 | 200 | 10 | 500 | 10 | 1,000 |
| | farnesol | 0 | 0 | 1 | 100 | 0 | 0 | 10 | 1,000 |

As shown in Tables 6A and 6B, Flavor Group 6 includes fourteen compounds that can impart a cooked, seasoning and/or fatty aroma to a beverage formed from the beverage precursor 12. The compounds of Flavor Group 6 are selected from the group consisting of 3-hydroxy-4,5-dimethyl-2(5H)-furanone, dimethyl sulfide, dimethyltrisulfide, 3-(methylthio)-1-propanol, 3-(methylthio)-1-propanal, 3-methyl-2-butene-1-thiol, 2,6-dimethylpyrazine, 2,3-dimethylpyrazine, 2-isopropyl-3-methoxypyrazine, 3-isobutyl-2-methoxypyrazine, (E)-2-nonenal, (E,E)-2,4-decadienal, (E,E)-2,4-nonadienal, dimethyl disulfide, and combinations thereof.

The range of each compound of Flavor Group 6 that can be included in the beverage precursor 12 for forming a wine-like beverage, the range of each compound in a beverage precursor 12 for forming a whiskey-like beverage and the range of each compound in a beverage precursor 12 for forming a beer-like beverage in micrograms per liter (µg/l) is shown in Table 6A. The range of each compound of Flavor Group 6 that can be included in the beverage precursor 12 for forming a gin-like beverage, the range of each compound in a beverage precursor 12 for forming a vermouth-like beverage, the range of each compound in a beverage precursor 12 for forming a rum-like beverage, and the range of each compound in a beverage precursor 12 for forming a tequila-like beverage in micrograms per liter (µg/l) is shown in Table 6B. Moreover, each of the Flavor Group 6 compounds can be substituted for other compounds in the same group to achieve a similar aroma.

**Table 6A**

| | | Range for Inclusion in Wine | | Range for Inclusion in Whiskey | | Range for Inclusion in Beer | |
|---|---|---|---|---|---|---|---|
| Category (descriptor) | Compound | low | high | low | high | low | high |
| | | µg/l | µg/l | µg/l | µg/l | µg/l | µg/l |
| | 3-hydroxy-4,5-dimethyl-2(5H)-furanone | 0.5 | 25 | 0.1 | 5 | 0.1 | 5 |
| Flavor Group 6-(cooked, seasoning, fatty aroma) | dimethyl sulfide | 1 | 50 | 0 | 0 | 1 | 250 |
| | dimethyl disulfide | 1 | 50 | 0 | 0 | 1 | 250 |
| | dimethyltrisulfide | 0.02 | 2 | 0 | 0 | 0.02 | 2 |
| | 3-(methylthio)-1-propanol | 250 | 10,000 | 250 | 10,000 | 100 | 5,000 |
| | 3-(methylthio)-1-propanal | 0.1 | 10 | 0.1 | 10 | 0.05 | 5 |
| | 3-methyl-2-butene-1-thiol | 0 | 0 | 0 | 0 | 0.001 | 1 |
| | 2,6-dimethylpyrazine | 0.5 | 500 | 0.1 | 50 | 0.1 | 50 |
| | 2,3-dimethylpyrazine | 0.5 | 500 | 0.1 | 50 | 0.1 | 50 |
| | 2-isopropyl-3-methoxypyrazine | 0.01 | 5 | 0.01 | 5 | 0.01 | 5 |
| | 3-isobutyl-2-methoxypyrazine | 0.001 | 1 | 0.001 | 1 | 0.001 | 1 |
| | (E)-2-nonenal | 1 | 100 | 1 | 100 | 1 | 100 |
| | (E,E)-2,4-decadienal | 1 | 100 | 1 | 100 | 1 | 100 |
| | (E,E)-2,4-nonadienal | 0.1 | 10 | 0.1 | 10 | 0.1 | 10 |

**Table 6B**

| | | Range for Inclusion in Gin | | Range for Inclusion in Vermouth | | Range for Inclusion in Rum (White and Dark) | | Range for Inclusion in Tequila | |
|---|---|---|---|---|---|---|---|---|---|
| Category (descriptor) | Compound | low | high | low | high | low | high | low | high |
| | | µg/l | µg/l | µg/l | µg/l | µg/l | µg/l | µg/l | µg/l |
| | 3-hydroxy-4,5-dimethyl-2(5H)-furanone | 0 | 0 | 0.1 | 25 | 0.1 | 100 | 0.001 | 100 |
| Flavor Group 6-(cooked, seasoning, fatty aroma) | dimethyl sulfide | 0 | 0 | 0 | 0 | 0 | 0 | 0.001 | 10 |
| | dimethyl disulfide | 0 | 0 | 0 | 0 | 0 | 0 | 0.001 | 10 |
| | dimethyltrisulfide | 0 | 0 | 0 | 0 | 0 | 0 | 0 | 0 |
| | 3-(methylthio)-1-propanol | 0 | 0 | 10 | 1,000 | 10 | 1,000 | 0 | 0 |
| | 3-(methylthio)-1-propanal | 0 | 0 | 0.1 | 50 | 0.1 | 10 | 0 | 0 |
| | 3-methyl-2-butene-1-thiol | 0 | 0 | 0 | 0 | 0 | 0 | 0 | 0 |
| | 2,6-dimethylpyrazine | 0.1 | 50 | 0.5 | 500 | 0.1 | 50 | 0 | 0 |
| | 2,3-dimethylpyrazine | 0.1 | 50 | 0.5 | 500 | 0.1 | 50 | 0 | 0 |
| | 2-isopropyl-3-methoxypyrazine | 0.01 | 5 | 0.01 | 5 | 0.01 | 5 | 0.000001 | 0.001 |
| | 3-isobutyl-2-methoxypyrazine | 0.001 | 1 | 0.001 | 1 | 0.001 | 1 | 0.000 01 | 0.001 |
| | (E)-2-nonenal | 1 | 1,000 | 0 | 0 | 0.1 | 50 | 0 | 0 |
| | (E,E)-2,4-decadienal | 1 | 1,000 | 0 | 0 | 0.1 | 50 | 0 | 0 |
| | (E,E)-2,4-nonadienal | 0.1 | 100 | 0 | 0 | 0.5 | 500 | 0.1 | 10 |

As shown in Tables 7A and 7B, Flavor Group 7 includes seven compounds that can impart a phenolic and/or medicinal aroma to a beverage formed from the beverage precursor 12. The compounds of Flavor Group 7 are selected from the group consisting of 4-ethylphenol, 4-methylphenol, 3-methylphenol, 2-methylphenol, 3-ethylphenol, 2-ethylphenol, phenol, and combinations thereof.

The range of each compound of Flavor Group 7 that can be included in the beverage precursor 12 for forming a wine-like beverage, the range of each compound in a beverage precursor 12 for forming a whiskey-like beverage and the range of each compound in a beverage precursor 12 for forming a beer-like beverage in micrograms per liter (µg/l) are shown in Table 7A. The range of each compound in a beverage precursor 12 for forming a gin-like beverage, the range of each compound in a beverage precursor 12 for forming a vermouth-like beverage, the range of each compound in a beverage precursor 12 for forming a rum-like beverage, and the range of each compound in a beverage precursor 12 for forming a tequila-like beverage are shown in Table 7B. Moreover, each of the Flavor Group 7 compounds can be substituted for other compounds in the same group to achieve a similar aroma.

**Table 7A**

| | | Range for Inclusion in Wine | | Range for Inclusion in Whiskey | | Range for Inclusion in Beer | |
|---|---|---|---|---|---|---|---|
| Category (descriptor) | Compound | low | high | low | high | low | high |
| | | µg/l | µg/l | µg/l | µg/l | µg/l | µg/l |
| Flavor Group 7-(phenolic, medicinal aroma) | 4-ethylphenol | 0 | 0 | 50 | 10,000 | 0 | 0 |
| | 4-methylphenol | 0 | 0 | 1 | 10,000 | 0 | 0 |
| | 3-methylphenol | 0 | 0 | 1 | 8,000 | 0 | 0 |
| | 2-methylphenol | 0 | 0 | 1 | 20,000 | 0 | 0 |
| | 3-ethylphenol | 0 | 0 | 1 | 5,000 | 0 | 0 |
| | 2-ethylphenol | 0 | 0 | 1 | 5,000 | 0 | 0 |
| | phenol | 0 | 0 | 50 | 20,000 | 0 | 0 |

**Table 7B**

| | | Range for Inclusion in Gin | | Range for Inclusion in Vermouth | | Range for Inclusion in Rum | | Range for Inclusion in Tequila | |
|---|---|---|---|---|---|---|---|---|---|
| Category (descriptor) | Compound | low | high | low | high | low | high | low | high |
| | | µg/l | µg/l | µg/l | µg/l | µg/l | µg/l | µg/l | µg/l |
| Flavor Group 7-(phenolic, medicinal aroma) | 4-ethylphenol | 0 | 0 | 0 | 0 | 0.5 | 500 | 0.1 | 500 |
| | 4-methylphenol | 0 | 0 | 0 | 0 | 0.1 | 500 | 0.1 | 1000 |
| | 3-methylphenol | 0 | 0 | 0 | 0 | 0.1 | 500 | 0.1 | 100 |
| | 2-methylphenol | 0 | 0 | 0 | 0 | 0.1 | 500 | 0.1 | 100 |
| | 3-ethylphenol | 0 | 0 | 0 | 0 | 0.1 | 500 | 0.1 | 500 |
| | 2-ethylphenol | 0 | 0 | 0 | 0 | 0.5 | 500 | 0.5 | 500 |
| | phenol | 0 | 0 | 0 | 0 | 0.5 | 500 | 0.5 | 500 |

As shown in Tables 8A and 8B, Flavor Group 8 includes ten compounds that can impart a sour taste to a beverage formed from the beverage precursor 12. The compounds of Flavor Group 8 are selected from the group consisting of tartaric acid, succinic acid, lactic acid, citric acid, galacturonic acid, pyruvic acid, malic acid, fumaric acid, shikimic acid, acetic acid, and combinations thereof.

The range of each compound of Flavor Group 8 that can be included in the beverage precursor 12 for forming a wine-like beverage, the range of each compound in a beverage precursor 12 for forming a whiskey-like beverage and the range of each compound in a beverage precursor 12 for forming a beer-like beverage in micrograms per liter (µg/l) is shown in Table 8A. The range of each compound of Flavor Group 8 that can be included in the beverage precursor 12 for forming a gin-like beverage, the range of each compound in a beverage precursor 12 for forming a vermouth-like beverage, the range of each compound in a beverage precursor 12 for forming a rum-like beverage, and the range of each compound in a beverage precursor 12 for forming a tequila-like beverage is shown in Table 8B. Moreover, each of the Flavor Group 8 compounds can be substituted for other compounds in the same group to form a beverage precursor 12 which produces a beverage having a similar taste.

**Table 8A**

| | | Range for Inclusion in Wine | | Range for Inclusion in Whiskey | | Range for Inclusion in Beer | |
|---|---|---|---|---|---|---|---|
| Category (descriptor) | Compound | low | high | low | high | low | high |
| | | µg/l | µg/l | µg/l | µg/l | µg/l | µg/l |
| Flavor Group 8-sour taste | tartaric acid | 300,000 | 10,000,000 | 10,000 | 1,000,000 | 10,000 | 500,000 |
| | succinic acid | 10,000 | 5,000,000 | 1,000 | 500,000 | 200,000 | 5,000,000 |
| | lactic acid | 1,000 | 7,500,000 | 1,000 | 1,000,000 | 10,000 | 7,500,000 |
| | citric acid | 1,000 | 7,500,000 | 1,000 | 1,000,000 | 10,000 | 7,500,000 |
| | galacturonic acid | 10,000 | 5,000,000 | 10,000 | 5,000,000 | 10,000 | 5,000,000 |
| | pyruvic acid | 10,000 | 1,000,000 | 1,000 | 100,000 | 10,000 | 1,000,000 |
| | malic acid | 10,000 | 1,000,000 | 1,000 | 100,000 | 10,000 | 1,000,000 |
| | fumaric acid | 10,000 | 5,000,000 | 10,000 | 5,000,000 | 10,000 | 5,000,000 |
| | shikimic acid | 10,000 | 5,000,000 | 10,000 | 5,000,000 | 10,000 | 5,000,000 |
| | acetic acid | 75,000 | 10,000,000 | 10,000 | 1,000,000 | 10,000 | 1,000,000 |

**Table 8B**

| | | Range for Inclusion in Gin | | Range for Inclusion in Vermouth | | Range for Inclusion in Rum | | Range for Inclusion in Tequila | |
|---|---|---|---|---|---|---|---|---|---|
| Category (descriptor) | Compound | low | high | low | high | low | high | low | high |
| | | µg/l | µg/l | µg/l | µg/l | µg/l | µg/l | µg/l | µg/l |
| Flavor Group 8-sour taste | tartaric acid | 0 | 0 | 500,000 | 20,000,000 | 1000 | 100,000 | 0 | 0 |
| | succinic acid | 0 | 0 | 1,000 | 100,000 | 1000 | 100,000 | 0 | 0 |
| | lactic acid | 0 | 0 | 50,000 | 7,500,000 | 1000 | 100,000 | 0 | 0 |
| | citric acid | 0 | 0 | 1,000 | 7,500,000 | 1000 | 1,000,000 | 0 | 0 |
| | galacturonic acid | 0 | 0 | 10,000 | 5,000,000 | 1000 | 5,000,000 | 0 | 0 |
| | pyruvic acid | 0 | 0 | 1,000 | 1,000,000 | 1000 | 100,000 | 0 | 0 |
| | malic acid | 0 | 0 | 1,000 | 1,000,000 | 1000 | 100,000 | 0 | 0 |
| | fumaric acid | 0 | 0 | 10,000 | 5,000,000 | 1000 | 5,000,000 | 0 | 0 |
| | shikimic acid | 0 | 0 | 10,000 | 5,000,000 | 1000 | 5,000,000 | 0 | 0 |
| | acetic acid | 0 | 0 | 10,000 | 2,000,000 | 1000 | 1,000,000 | 0 | 0 |

As shown in Tables 9A and 9B, Flavor Group 9 includes nine compounds that can impart a sweet taste to a beverage. The compounds of Flavor Group 9 are selected from the group consisting of glycerol, glucose, fructose, L-proline, saccharose, 5-hydroxymethylfufural, 5-ethoxymethylfufural, 5-methoxymethylfufural, 5-acetoxymethylfufural, and combinations thereof.

The range of each compound of Flavor Group 9 that can be included in the beverage precursor 12 for forming a wine-like beverage, the range of each compound in a beverage precursor 12 for forming a whiskey-like beverage and the range of each compound in a beverage precursor 12 for forming a beer-like beverage in micrograms per liter (µg/l) is shown in Table 9A. The range of each compound in a beverage precursor 12 for forming a gin-like beverage, the range of each compound in a beverage precursor 12 for forming a vermouth-like beverage, the range of each compound in a beverage precursor 12 for forming a rum-like beverage, and the range of each compound in a beverage precursor 12 for forming a tequila-like beverage is shown in Table 9B. Moreover, each of the Taste Group 2 compounds can be substituted for other compounds in the same group to form a beverage precursor which produces a beverage having a similar taste.

In embodiments, glycerol and/or other sugars may also be added to enhance mouthfeel.

**Table 9A**

| | | Range for Inclusion in Wine | | Range for Inclusion in Whiskey | | Range for Inclusion in Beer | |
|---|---|---|---|---|---|---|---|
| Category (descriptor) | Compound | low | high | low | high | low | high |
| | | µg/l | µg/l | µg/l | µg/l | µg/l | µg/l |
| Flavor Group 9-(sweet taste) | glycerol | 2,500,000 | 50,000,000 | 5,000 | 10,000,000 | 50,000 | 5,000,000 |
| | glucose | 20,000 | 500,000 | 0 | 0 | 20,000 | 500,000 |
| | fructose | 10,000 | 10,000,000 | 0 | 0 | 100,000 | 10,000,000 |
| | L-proline | 100,000 | 10,000,000 | 0 | 0 | 100,000 | 10,000,000 |
| | saccharose | 500,000 | 10,000,000 | 0 | 0 | 10,000 | 10,000,000 |
| | 5-hydroxyme thylfufural | 0 | 0 | 10 | 50,000 | 0 | 0 |
| | 5-ethoxymeth ylfufural | 0 | 0 | 10 | 1,000 | 0 | 0 |
| | 5-methoxyme thylfufural | 0 | 0 | 10 | 1,000 | 0 | 0 |
| | 5-acetoxymet hylfufural | 0 | 0 | 10 | 1,000 | 0 | 0 |

**Table 9B**

| | | Range for Inclusion in Gin | | Range for Inclusion in Vermouth | | Range for Inclusion in Rum | | Range for Inclusion in Tequila | |
|---|---|---|---|---|---|---|---|---|---|
| Category (descriptor) | Compound | low | high | low | high | low | high | low | high |
| | | µg/l | µg/l | µg/l | µg/l | µg/l | µg/l | µg/l | µg/l |
| Flavor Group 9-(sweet taste) | glycerol | 0 | 0 | 500,000 | 10,000,000 | 1,000,000 | 50,000,000 | 5,000 | 10,000,000 |
| | glucose | 0 | 0 | 500,000 | 20,000,000 | 20,000 | 50,000,000 | 0 | 0 |
| | fructose | 0 | 0 | 1,000,000 | 50,000,000 | 500,000 | 50,000,000 | 0 | 0 |
| | L-proline | 0 | 0 | 10,000 | 10,000,000 | 10,000 | 10,000,000 | 0 | 0 |
| | saccharose | 0 | 0 | 1,000,000 | 50,000,000 | 20,000 | 50,000,000 | 0 | 0 |
| | 5-hydroxyme thylfufural | 0 | 0 | 0 | 0 | 0 | 0 | 0 | 0 |
| | 5-ethoxymeth ylfufural | 0 | 0 | 0 | 0 | 0 | 0 | 0 | 0 |
| | 5-methoxyme thylfufural | 0 | 0 | 0 | 0 | 0 | 0 | 0 | 0 |
| | 5-acetoxymet hylfufural | 0 | 0 | 0 | 0 | 0 | 0 | 0 | 0 |

As shown in Tables 10A and 10B, Flavor Group 10 includes eight compounds that can impart a salty and/or bitter taste to a beverage precursor for forming a beverage. The compounds of Flavor Group 10 are selected from the group consisting of compounds including or providing ions of potassium, magnesium, sodium, chloride, phosphate, ammonium, sulfate, calcium, and combinations thereof. As used herein, potassium refers to a potassium ion or a compound that contains potassium. As used herein, magnesium refers to a magnesium ion or a compound that contains magnesium. As used herein, sodium refers to a sodium ion or a compound that contains sodium. As used herein, chloride refers to a chloride ion or a compound that contains chloride. As used herein, phosphate refers to a phosphate ion or a compound that contains phosphate. As used herein, ammonium refers to an ammonium ion or a compound that contains ammonium. As used herein, sulfate refers to a sulfate ion or a compound that contains sulfate. As used herein, calcium refers to a calcium ion or a compound that contains calcium.

The range of each compound of Flavor Group 10 that can be included in the beverage precursor 12 for forming a wine-like beverage, the range of each compound in a beverage precursor 12 for forming a whiskey-like beverage and the range of each compound in a beverage precursor 12 for forming a beer-like beverage in micrograms per liter (µg/l) is shown in Table 10A. The range of each compound of Flavor Group 10 that can be included in the beverage precursor 12 for forming a gin-type beverage, the range of each compound in a beverage precursor 12 for forming a vermouth-like beverage, the range of each compound in a beverage precursor 12 for forming a rum-like beverage, and the range of each compound in a beverage precursor 12 for forming a tequila-like beverage are shown in Table 10B. Moreover, each of the Flavor Group 10 compounds can be substituted for other compounds in the same group to form a beverage precursor 12 which produces a beverage having a similar taste.

**Table 10A**

| | | Range for Inclusion in Wine | | Range for Inclusion in Whiskey | | Range for Inclusion in Beer | |
|---|---|---|---|---|---|---|---|
| Category (descriptor) | Ion of or Compound Including | low | high | low | high | low | high |
| | | µg/l | µg/l | µg/l | µg/l | µg/l | µg/l |
| Flavor Group 10-(Salty, Bitter Taste) | potassium | 300,000 | 10,000,000 | 0 | 0 | 10,000 | 1,000,000 |
| | magnesium | 10,000 | 2,000,000 | 0 | 0 | 5,000 | 2,000,000 |
| | sodium | 20,000 | 5,000,000 | 0 | 0 | 500 | 500,000 |
| | chloride | 20,000 | 500,000 | 0 | 0 | 20,000 | 500,000 |
| | phosphate | 100,000 | 5,000,000 | 0 | 0 | 100,000 | 5,000,000 |
| | ammonium | 50 | 100,000 | 0 | 0 | 500 | 100,000 |
| | sulfate | 10,000 | 500,000 | 0 | 0 | 10,000 | 500,000 |
| | calcium | 10,000 | 500,000 | 0 | 0 | 5,000 | 500,000 |

**Table 10B**

| | | Range for Inclusion in Gin | | Range for Inclusion in Vermouth | | Range for Inclusion in Rum | | Range for Inclusion in Tequila | |
|---|---|---|---|---|---|---|---|---|---|
| Category (descriptor) | Ion of or Compound Including | low | high | low | high | low | high | low | high |
| | | µg/l | µg/l | µg/l | µg/l | µg/l | µg/l | µg/l | µg/l |
| Flavor Group 10-(Salty, Bitter Taste) | potassium | 0 | 0 | 100,000 | 10,000,000 | 0 | 0 | 0 | 0 |
| | magnesium | 0 | 0 | 10,000 | 2,000,000 | 0 | 0 | 0 | 0 |
| | sodium | 0 | 0 | 20,000 | 5,000,000 | 0 | 0 | 0 | 0 |
| | chloride | 0 | 0 | 20,000 | 500,000 | 0 | 0 | 0 | 0 |
| | phosphate | 0 | 0 | 100,000 | 5,000,000 | 0 | 0 | 0 | 0 |
| | ammonium | 0 | 0 | 50 | 100,000 | 0 | 0 | 0 | 0 |
| | sulfate | 0 | 0 | 10,000 | 500,000 | 0 | 0 | 0 | 0 |
| | calcium | 0 | 0 | 10,000 | 500,000 | 0 | 0 | 0 | 0 |

As shown in Tables 11A and 11B, Flavor Group 11 includes twenty-two compounds that can impart an astringent mouthfeel to a beverage precursor 12 for forming a beverage. The compounds of Flavor Group 11 are selected from the group consisting of tannic acid, trans aconitic acid, cis-aconitic acid, ellagic acid, caftaric acid, caffeic acid, castalagin, coutaric acid, fertaric acid, gallic acid, quercetin-3-O-galactoside, syringetin-3-O-glucoside, quercetin-3-O-glucuronide, kaempferol-3-O-glucoside, isorhamnetinglucoside, grape seed extract, agmatine, cytidine, gamma-aminobutyric acid, hordenine, lyoniresinol, oak extract, and combinations thereof. Additionally, including glycerol and/or other sugars in the beverage precursor 12 can add to the mouthfeel of a beverage formed from the beverage precursor.

The range of each compound of Flavor Group 11 that can be included in the beverage precursor 12 for forming a wine-like beverage, the range of each compound in a beverage precursor 12 for forming a whiskey-like beverage and the range of each compound in a beverage precursor 12 for forming a beer-like beverage in micrograms per liter (µg/l) is shown in Table 11A. The range of each compound of Flavor Group 11 that can be included in the beverage precursor 12 for forming a gin-like beverage, the range of each compound in a beverage precursor 12 for forming a vermouth-like beverage, the range of each compound in a beverage precursor 12 for forming a rum-like beverage, and the range of each compound in a beverage precursor 12 for forming a tequila-like beverage are shown in Table 11B. Moreover, each of the Flavor Group 11 compounds can be substituted for other compounds in the same group to form a beverage precursor 12 which produces a beverage having a similar taste.

**Table 11A**

| | | Range for Inclusion in Wine | | Range for Inclusion in Whiskey | | Range for Inclusion in Beer | |
|---|---|---|---|---|---|---|---|
| Category (descriptor) | Compound | low | high | low | high | low | high |
| | | µg/l | µg/l | µg/l | µg/l | µg/l | µg/l |
| | tannic acid | 30,000 | 150,000 | 30,000 | 150,000 | 1,00 0 | 100000 |
| | trans aconitic acid | 500 | 25,000 | 500 | 25,000 | 500 | 25000 |
| | cis-aconitic acid | 100 | 10,000 | 100 | 25,000 | 100 | 25000 |
| | ellagic acid | 200 | 30,000 | 200 | 30,000 | 0 | 0 |
| | caftaric acid | 1000 | 100,000 | 0 | 0 | 0 | 0 |
| | caffeic acid | 1000 | 100,000 | 0 | 0 | 0 | 0 |
| | castalagin | 50 | 5,000 | 0 | 0 | 0 | 0 |
| | coutaric acid | 100 | 30,000 | 0 | 0 | 0 | 0 |
| | fertaric acid | 500 | 50,000 | 0 | 0 | 0 | 0 |
| Flavor Group 11-(Astringent mouthfeel) | gallic acid | 50 | 250,000 | 0 | 0 | 50 | 50000 |
| | quercetin-3-O-galactoside | 100 | 100,000 | 0 | 0 | 0 | 0 |
| | syringetin-3-O-glucoside | 50 | 20,000 | 0 | 0 | 0 | 0 |
| | quercetin-3-O-glucuronide | 100 | 100,000 | 0 | 0 | 0 | 0 |
| | kaempferol-3-O-glucoside | 50 | 10,000 | 0 | 0 | 0 | 0 |
| | isorhamnetinglucosid e | 50 | 20,000 | 0 | 0 | 0 | 0 |
| | grape seed extract | 100,000 | 10,000,000 | 10,000 | 5,000,000 | 0 | 0 |
| | agmatine | 0 | 0 | 0 | 0 | 1000 | 150000 |
| | cytidine | 0 | 0 | 0 | 0 | 1000 | 500000 |
| | gamma-aminobutyric acid | 0 | 0 | 0 | 0 | 5000 | 100000 |
| | hordenine | 0 | 0 | 0 | 0 | 200 | 20000 |
| | lyoniresinol | 0 | 0 | 1000 | 500,000 | 0 | 0 |
| | oak essence | 1,000,000 | 5,000,000 | 1,000,000 | 5,000,000 | 0 | 0 |

**Table 11B**

| | | Range for Inclusion in Gin | | Range for Inclusion in Vermouth | | Range for Inclusion in Rum | | Range for Inclusion in Tequila | |
|---|---|---|---|---|---|---|---|---|---|
| Category (descriptor) | Compound | low | high | low | high | low | high | low | high |
| | | µg/l | µg/l | µg/l | µg/l | µg/l | µg/l | µg/l | µg/l |
| | tannic acid | 0 | 0 | 0 | 0 | 0 | 0 | 0 | 0 |
| | trans aconitic acid | 0 | 0 | 500 | 25,000 | 0 | 0 | 0 | 0 |
| | cis-aconitic acid | 0 | 0 | 100 | 10,000 | 0 | 0 | 0 | 0 |
| | ellagic acid | 0 | 0 | 0 | 0 | 0 | 0 | 0 | 0 |
| | caftaric acid | 0 | 0 | 0 | 0 | 0 | 0 | 0 | 0 |
| | caffeic acid | 0 | 0 | 0 | 0 | 0 | 0 | 0 | 0 |
| | castalagin | 0 | 0 | 0 | 0 | 0 | 0 | 0 | 0 |
| | coutaric acid | 0 | 0 | 0 | 0 | 0 | 0 | 0 | 0 |
| Flavor Group 11-(Astringent mouthfeel) | fertaric acid | 0 | 0 | 0 | 0 | 0 | 0 | 0 | 0 |
| | gallic acid | 0 | 0 | 0 | 0 | 0 | 0 | 0 | 0 |
| | quercetin-3-O-galactoside | 0 | 0 | 0 | 0 | 0 | 0 | 0 | 0 |
| | syringetin-3-O-glucoside | 0 | 0 | 0 | 0 | 0 | 0 | 0 | 0 |
| | quercetin-3-O-glucuronide | 0 | 0 | 0 | 0 | 0 | 0 | 0 | 0 |
| | kaempferol-3-O-glucoside | 0 | 0 | 0 | 0 | 0 | 0 | 0 | 0 |
| | isorhamneti nglucoside | 0 | 0 | 0 | 0 | 0 | 0 | 0 | 0 |
| | grape seed extract | 0 | 0 | 100,000 | 5,000,000 | 0 | 0 | 0 | 0 |
| | agmatine | 0 | 0 | 0 | 0 | 0 | 0 | 0 | 0 |
| | cytidine | 0 | 0 | 0 | 0 | 0 | 0 | 0 | 0 |
| | gamma-aminobutyric acid | 0 | 0 | 0 | 0 | 0 | 0 | 0 | 0 |
| | hordenine | 0 | 0 | 0 | 0 | 0 | 0 | 0 | 0 |
| | lyoniresinol | 0 | 0 | 0 | 0 | 0 | 0 | 0 | 0 |
| | oak essence | 0 | 0 | 0 | 0 | 0 | 0 | 0 | 0 |

As shown in Tables 12A and 12B, Flavor Group 12 includes ten compounds that can impart a bitter taste to a beverage precursor 12 for forming a beverage. The compounds of Flavor Group 12 are selected from the group consisting of hops extract, tetra-iso-extract 10%, rho-iso-extract 10%, isomerized hop extract 30%, cis-isohumolone, trans-isohumolone, cis-isocohumulone, trans-isocohumulone, isoadhumulone, comultifidolglycoside, and combinations thereof.

The range of each compound of Flavor Group 12 that can be included in the beverage precursor 12 for forming a wine-like beverage, the range of each compound in a beverage precursor 12 for forming a whiskey-like beverage and the range of each compound in a beverage precursor 12 for forming a beer-like beverage in micrograms per liter (µg/l) is shown in Table 12A. The range of each compound of Flavor Group 12 that can be included in the beverage precursor 12 for forming a gin-like beverage, the range of each compound in a beverage precursor 12 for forming a vermouth-like beverage, the range of each compound in a beverage precursor 12 for forming a rum-like beverage, and the range of each compound in a beverage precursor 12 for forming a tequila-like beverage in micrograms per liter (µg/l) is shown in Table 12B. Moreover, each of the Flavor Group 12 compounds can be substituted for other compounds in the same group to form a beverage precursor 12 which produces a beverage having a similar taste.

**Table 12A**

| | | Range for Inclusion in Wine | | Range for Inclusion in Whiskey | | Range for Inclusion in Beer | |
|---|---|---|---|---|---|---|---|
| Category (descriptor) | Compound | low | high | low | high | low | high |
| | | µg/l | µg/l | µg/l | µg/l | µg/l | µg/l |
| | hops extract | 0 | 0 | 0 | 0 | 1,000,000 | 30,000,000 |
| Flavor Group 12-(bitter taste) | tetra-iso-extract 10% | 0 | 0 | 0 | 0 | 25,000 | 650,000 |
| | rho-iso-extract 10% | 0 | 0 | 0 | 0 | 25,000 | 650,000 |
| | isomerized hop extract 30% | 0 | 0 | 0 | 0 | 10,000 | 250,000 |
| | cis-isohumolone | 0 | 0 | 0 | 0 | 1000 | 150000 |
| | trans-isohumolone | 0 | 0 | 0 | 0 | 100 | 50000 |
| | cis-isocohumulone | 0 | 0 | 0 | 0 | 1000 | 150000 |
| | trans-isocohumulone | 0 | 0 | 0 | 0 | 500 | 50000 |
| | isoadhumulone | 0 | 0 | 0 | 0 | 500 | 100000 |
| | comultifidolglycoside | 0 | 0 | 0 | 0 | 1 | 10000 |

**Table 12B**

| | | Range for Inclusion in Gin | | Range for Inclusion in Vermouth | | Range for Inclusion in Rum | | Range for Inclusion in Tequila | |
|---|---|---|---|---|---|---|---|---|---|
| Category (descriptor) | Compound | low | high | low | high | low | high | low | high |
| | | µg/l | µg/l | µg/l | µg/l | µg/l | µg/l | µg/l | µg/l |
| Flavor Group 12-(bitter taste) | hops extract | 0 | 0 | 0 | 0 | 0 | 0 | 0 | 0 |
| | tetra-iso-extract 10% | 0 | 0 | 0 | 0 | 0 | 0 | 0 | 0 |
| | rho-iso-extract 10% | 0 | 0 | 0 | 0 | 0 | 0 | 0 | 0 |
| | isomerized hop extract 30% | 0 | 0 | 0 | 0 | 0 | 0 | 0 | 0 |
| | cis-isohumolone | 0 | 0 | 0 | 0 | 0 | 0 | 0 | 0 |
| | trans-isohumolone | 0 | 0 | 0 | 0 | 0 | 0 | 0 | 0 |
| | cis-isocohumulone | 0 | 0 | 0 | 0 | 0 | 0 | 0 | 0 |
| | trans-isocohumulone | 0 | 0 | 0 | 0 | 0 | 0 | 0 | 0 |
| | isoadhumulone | 0 | 0 | 0 | 0 | 0 | 0 | 0 | 0 |
| | comultifidolglycoside | 0 | 0 | 0 | 0 | 0 | 0 | 0 | 0 |

As shown in Tables 13A and 13B, Flavor Group 13 includes twenty-one compounds that can impart umami and/or mouthfeel to a beverage precursor 12 for forming a beverage. The compounds of Flavor Group 13 are selected from the group consisting of carrageenan, whey protein, monosodium glutamate, maltodextrin, pectin, xanthan gum, gellan gum, cellulose gum, lauric acid, myristic acid, palmitic acid, stearic acid, palmitolic acid, oleic acid, linoleic acid, linolenic acid, ethyl laurate, ethyl myristate, ethyl palmitate, ethyl palmitoleate, ethyl stearate, and combinations thereof.

The range of each compound of Flavor Group 13 that can be included in the beverage precursor 12 for forming a wine-like beverage, the range of each compound in a beverage precursor 12 for forming a whiskey-like beverage and the range of each compound in a beverage precursor 12 for forming a beer-like beverage in micrograms per liter (µg/l) is shown in Table 13A. The range of each compound of Flavor Group 13 that can be included in the beverage precursor 12 for forming a gin-like beverage, the range of each compound in a beverage precursor 12 for forming a vermouth-like beverage, the range of each compound in a beverage precursor 12 for forming a rum-like beverage, and the range of each compound in a beverage precursor 12 for forming a tequila-like beverage in micrograms per liter (µg/l) is shown in Table 13B. Moreover, each of the Flavor Group 13 compounds can be substituted for other compounds in the same group to form a beverage precursor 12 which produces a beverage having a similar taste.

**Table 13A**

| | | Range for Inclusion in Wine | | Range for Inclusion in Whiskey | | Range for Inclusion in Beer | |
|---|---|---|---|---|---|---|---|
| | | low | high | low | high | low | high |
| Category (descriptor) | Compound | µg/l | µg/l | µg/l | µg/l | µg/l | µg/l |
| | carrageenan | 0 | 0 | 0 | 0 | 50,000 | 1,500,000 |
| | whey protein | 0 | 0 | 0 | 0 | 10,000 | 250,000 |
| | monosodium glutamate | 0 | 0 | 0 | 0 | 500 | 750,000 |
| | maltodextrin | 0 | 0 | 0 | 0 | 3,000,000 | 70,000,000 |
| | pectin | 10 | 10,000 | 0 | 10 | 10 | 50,000 |
| Flavor Group 13-(Umami taste, Mouthfeel) | xanthan gum | 10 | 10,000 | 0 | 10 | 10 | 50,000 |
| | gellan gum | 10 | 10,000 | 0 | 10 | 10 | 50,000 |
| | cellulose gum | 10 | 10,000 | 0 | 10 | 10 | 50,000 |
| | lauric acid | 0 | 0 | 10 | 100,000 | 0 | 0 |
| | myristic acid | 0 | 0 | 10 | 100,000 | 0 | 0 |
| | palmitic acid | 0 | 0 | 100 | 100,000 | 0 | 0 |
| | stearic acid | 0 | 0 | 10 | 10,000 | 0 | 0 |
| | palmitolic acid | 0 | 0 | 100 | 100,000 | 0 | 0 |
| | oleic acid | 0 | 0 | 10 | 10,000 | 0 | 0 |
| | linoleic acid | 0 | 0 | 10 | 10,000 | 0 | 0 |
| | linolenic acid | 0 | 0 | 0 | 10,000 | 0 | 0 |
| | ethyl laurate | 0 | 0 | 10 | 100,000 | 0 | 0 |
| | ethyl myristate | 0 | 0 | 10 | 100,000 | 0 | 0 |
| | ethyl palmitate | 0 | 0 | 10 | 100,000 | 0 | 0 |
| | ethyl palmitoleate | 0 | 0 | 1 | 10,000 | 0 | 0 |
| | ethyl stearate | 0 | 0 | 10 | 10,000 | 0 | 0 |

**Table 13B**

| | | Range for Inclusion in Gin | | Range for Inclusion in Vermouth | | Range for Inclusion in Rum | | Range for Inclusion in Tequila | |
|---|---|---|---|---|---|---|---|---|---|
| Category (descriptor) | Compound | low | high | low | high | low | high | low | high |
| | | µg/l | µg/l | µg/l | µg/l | µg/l | µg/l | µg/l | µg/l |
| | carrageenan | 0 | 0 | 0 | 0 | 0 | 0 | 0 | 0 |
| | whey protein | 0 | 0 | 0 | 0 | 0 | 0 | 0 | 0 |
| | monosodium glutamate | 0 | 0 | 0 | 0 | 0 | 0 | 0 | 0 |
| | maltodextrin | 0 | 0 | 0 | 0 | 0 | 0 | 0 | 0 |
| | pectin | 0 | 0 | 0 | 0 | 10 | 5,000 | 0 | 0 |
| | xanthan gum | 0 | 0 | 0 | 0 | 10 | 5,000 | 0 | 0 |
| | gellan gum | 0 | 0 | 0 | 0 | 10 | 5,000 | 0 | 0 |
| Flavor Group 13-(Umami taste, Mouthfeel) | cellulose gum | 0 | 0 | 0 | 0 | 10 | 5,000 | 0 | 0 |
| | lauric acid | 0 | 0 | 0 | 0 | 0 | 0 | 0 | 0 |
| | myristic acid | 0 | 0 | 0 | 0 | 0 | 0 | 0 | 0 |
| | palmitic acid | 0 | 0 | 0 | 0 | 0 | 0 | 0 | 0 |
| | stearic acid | 0 | 0 | 0 | 0 | 0 | 0 | 0 | 0 |
| | palmitolic acid | 0 | 0 | 0 | 0 | 0 | 0 | 0 | 0 |
| | oleic acid | 0 | 0 | 0 | 0 | 0 | 0 | 0 | 0 |
| | linoleic acid | 0 | 0 | 0 | 0 | 0 | 0 | 0 | 0 |
| | linolenic acid | 0 | 0 | 0 | 0 | 0 | 0 | 0 | 0 |
| | ethyl laurate | 0 | 0 | 0 | 0 | 0 | 0 | 0 | 0 |
| | ethyl myristate | 0 | 0 | 0 | 0 | 0 | 0 | 0 | 0 |
| | ethyl palmitate | 0 | 0 | 0 | 0 | 0 | 0 | 0 | 0 |
| | ethyl palmitoleate | 0 | 0 | 0 | 0 | 0 | 0 | 0 | 0 |
| | ethyl stearate | 0 | 0 | 0 | 0 | 0 | 0 | 0 | 0 |

In embodiments, the beverage precursor 12 is free of extracts. In embodiments, the beverage precursor 12 is free of concentrates. In embodiments, the beverage precursor 12 is free of solids.

In embodiments, the beverage precursor 12 is alcohol-free. In other embodiments, the beverage precursor 12 can also include ethanol and/or vodka so as to produce an alcoholic beverage therefrom or ethanol and/or vodka can be added to the liquid base in addition to the beverage precursor. When an alcoholic beverage is desired, ethanol can be included in an amount ranging from about 0 microgram/liter (µg/l) to about 474,000,000 µg/l (e.g., about 1000 µg/l to about 400,000,000 µg/l, about 10,000 to about 300,000,000 µg/l, about 100,000 µg/l to about 20,000,0000 µg/l, about 200,000 µg/l to about 10,000,000 µg/l or about 300,000 µg/l to about 900,000 µg/l).

Moreover, ethanol and/or vodka can be added in an amount sufficient to produce a beverage having an alcohol content ranging from about 0.1% alcohol by volume to about 80% alcohol by volume (ABV). For example, in embodiments, ethanol and/or vodka may be added to a beverage precursor as described herein, optionally with water, to produce a beverage having an alcohol content ranging from about 0.1% to about 80%, such as from about 0.1% to about 25% ABV, or from about 0.1% to about 20% ABV, or from about 5% to about 60% ABV, or from about 30% to about 50% ABV, or about 40% ABV. For example, in embodiments, a wine as produced herein can include ethanol in an amount sufficient to produce a wine-like beverage having an alcohol content of about 0.1% alcohol by volume to about 25% alcohol by volume. A beer-like beverage can include ethanol in an amount sufficient to have an alcohol content of about 0.1% alcohol by volume to about 20% alcohol by volume. A whiskey-like beverage may include ethanol and/or vodka in an amount sufficient to have an alcohol content ranging from about 0.1% to about 70% alcohol by volume, such as from about 5% to about 60% ABV, or from about 30% to about 50% ABV, or about 40% ABV. A gin-like beverage may include ethanol and/or vodka in an amount sufficient to have an alcohol content of from about 0.1% to about 70% ABV, such as from about 5% to about 60% ABV, or from about 30% to about 50% ABV, or about 40% ABV. A rum-like beverage may include ethanol and/or vodka in an amount sufficient to yield an alcohol content of from about 0.1% to about 70% ABV, such as from about 5% to about 60% ABV, or from about 30% to about 50% ABV, or about 40% ABV. A tequila-like beverage may include ethanol and/or vodka in an amount sufficient to yield an alcohol content of from about 0.1% to about 70% ABV, such as from about 5% to about 60% ABV, or from about 30% to about 50% ABV, or about 40% ABV.

By including one or more (e.g., two or more, three or more, four or more, five or more, six or more, etc.) compounds from each of the aroma and/or flavor groups as described above, the beverage precursor 12 can be tailored to provide a beverage precursor 12 which mimics the flavor of various beers, wines, liquors (including whiskey), and mixed beverages when the beverage precursor 12 is combined with a liquid base such as liquid base including water and/or ethanol and/or vodka. The choice of flavor compounds and the amount included in the beverage precursor allows a user and/or manufacturer to adjust the flavor of the beverage precursor 12 and resulting beverage 14. Embodiments, disclosed herein identify preferred compounds for each of the respective beverage precursors having the flavor and/or aroma/mouthfeel of wine, beer, whiskey, gin, vermouth, rum, and tequila. However, compounds in the above and below tables may be substituted for other compounds in the same group to achieve a similar flavor and/or aroma/mouthfeel. For example, a compound found in Table 2A, but not found in Table 2B, which is described as giving a malty, buttery, sweet aroma for a beverage precursor having the aroma of wine may be used in a beverage precursor having the aroma of tequila in which a malty, buttery, sweet aroma is desired. Furthermore, compounds from other flavor and/or aroma/mouthfeel groups can be added in the noted amounts to refine the flavor and/or aroma/mouthfeel of a particular beverage.

Preferably, a beverage having a wine taste and/or mouthfeel includes at least one (e.g., at least two or at least three) compound from flavor group 4 (fruity flavor), at least one (e.g., at least two or at least three) compound from flavor group 5 (smoky, coconut, woody flavor), at least one (e.g., at least two or at least three) compound from flavor group 8 (sour flavor), and at least one (e.g., at least two or at least three) compound from flavor group 11 (astringent mouthfeel). In other embodiments, the beverage having a wine flavor can include at least one (e.g., at least two or at least three) compound from one or more of the remaining flavor groups.

Preferably, a beverage having a beer taste and/or mouthfeel includes at least one (e.g., at least two, at least three, or at least four) compound from flavor group 2 (malty, buttery, sweet flavor), at least one (e.g., at least two, at least three, or at least four) compound from flavor group 3 (floral, honey flavor) and at least one (e.g., at least two, at least three, or at least four) compound from flavor group 12 (bitter flavor). In other embodiments, the beverage having a beer flavor can include at least one (e.g., at least two, at least three, or at least four) compound from one or more of the remaining flavor groups.

Preferably, a beverage having a whiskey taste and/or mouthfeel includes at least one (e.g., at least two or at least three) compound from flavor group 4 (fruity flavor), at least one (e.g., at least two or at least three) compound from flavor group 5 (smoky, coconut, woody flavor), at least one (e.g., at least two or at least three) compound from flavor group 7 (phenolic, medicinal) and at least one (e.g., at least two or at least three) compound from flavor group 11 (astringent mouthfeel). In other embodiments, the beverage having a whiskey flavor can include at least one (e.g., at least two or at least three) compound from one or more of the remaining flavor groups.

In embodiments, the beverage precursor may be mixed with ethanol, vodka, and/or water to produce a final beverage which mimics the flavor of various nature craft identical beers, wines, liquors, including whiskey, and mixed beverages. In embodiments, a mixed drink (i.e., a drink in which multiple ingredients are combined, such as by combining alcohol with fruit juice or other ingredients) may be prepared by replacing a traditionally-present alcoholic ingredient in a mixed drink with a corresponding amount of a beverage precursor or a beverage prepared from a beverage precursor. For example, a typical daiquiri recipe may contain 4.5 cl white rum, 2.5 cl lime juice or an equivalent of lime juice concentrate, and 1.5 cl simple syrup or an equivalent of sugar or sweeteners to provide the preferred sweetness. In embodiments, a daiquiri may be prepared by replacing the white rum with a rum-like beverage prepared using a beverage precursor as described herein. A list of the International Bartenders Association (IBA) Official Cocktails and their traditional recipes may be found at http://www.iba-world.com/index.php?option=com_content&view=article&id=88&Itemid=532, the entire contents of which is incorporated by reference herein. As discussed above, a cocktail may be prepared by replacing the alcoholic ingredients in the cocktail with a beverage prepared from a beverage precursor as described herein. Some cocktails require more than one type of alcohol-in such cocktails, any or all of the alcoholic ingredients may be replaced by beverages prepared from beverage precursors. For example, a gin martini may contain both gin and vermouth-in embodiments, a gin martini may be prepared by combining a gin-type beverage prepared from a beverage precursor with a traditionally-prepared vermouth, or it could be prepared by combining a traditionally-prepared gin with a vermouth-type beverage prepared from a beverage precursor, or it could be prepared by combining a gin-type beverage and a vermouth-type beverage, each prepared from beverage precursors.

In embodiments, a mixed drink concentrate may be prepared by combining a beverage precursor (i.e., a wine, beer, whiskey, gin, vermouth, rum, or tequila beverage precursor) or a beverage prepared from a beverage precursor (i.e., a wine-type beverage, a beer-type beverage, a gin-type beverage, a vermouth-type beverage, a whiskey-type beverage, a rum-type beverage, or a tequila-type beverage) with juice concentrates and/or sugar. Water, ethanol, and/or vodka may then be added to the mixed drink concentrate to prepare a mixed drink beverage. The mixed drink concentrates may thus be pre-prepared and shipped as concentrates, rather than full beverages, and then made into full beverages later by adding, for example, water, ethanol, and/or vodka.

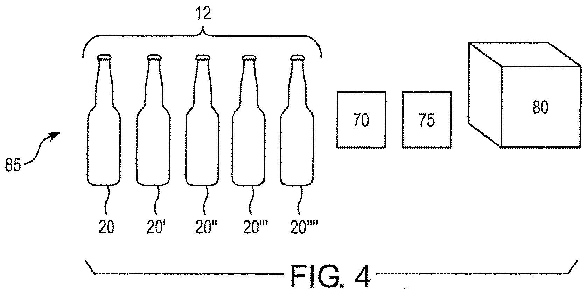

As shown in Figure 4, a kit 85 for making a flavored beverage includes a beverage precursor 12 including a quantity of each of a plurality of flavor and/or aroma compounds 20, 20', 20", 20"', 20"", a quantity of yeast 70, a quantity of sugar 75 and a container 80. Preferably, the kit includes at least one flavor compound from each of the Aroma Compound Groups and Taste Compound Groups described above. The container 80 is sized to contain the beverage precursor 12, yeast 80, sugar 75 and a predetermined quantity of water (not shown). The kit 85 is operable to form a beverage having the flavors and/or aromas of a wine. The sugar 75 can be table sugar (sucrose), which is also known as priming sugar. Preferably, the plurality of flavor and/or aroma compounds can be mixed in various combinations and amounts to form a beer-like, wine-like, whiskey-like and/or cider like beverage.

The kit 85 can include instructions for combining the various flavor and/or aroma compounds 20, 20', 20", 20"', 20"" in different combinations and quantities to form a variety of different beverages which mimic the taste of wine, beer and liquors. Preferably, the instructions also indicate the necessary time and conditions for forming a carbonated beverage using the kit 85. By mixing the desired components of the beverage precursor 12 along with yeast 70, sugar 75 and water in the container 80 and maintaining the contents at a temperature greater than about 70°F for about 2 to about 10 days, preferably about 4 to about 7 days, to create a carbonated beverage having the desired flavor and/or aroma characteristics.

For example, a beer-like beverage can be formed by placing an appropriate amount of a beverage precursor configured to create a beverage having the flavor of beer, ethanol, maltodextrins, hop extract, 0.25 teaspoon yeast, 2.5 teaspoons of sugar and 1 liter of water in a sealed container for about one week at a temperature of about 72°F±4°F. Preferably, the beverage is created in less than about 10 days. By using yeast and sugar, carbonation is created in the beverage. In embodiments disclosed herein, the sequence (which) and timing (when) for the addition of flavors making up the beverage precursor could be tailored in order to enhance the flavor stability and quality of the final beverage.

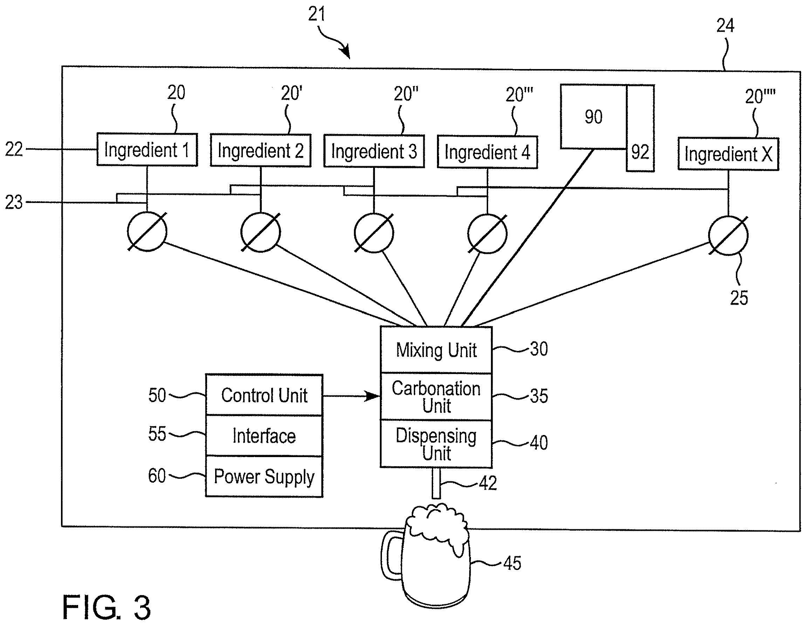

As shown in Figure 3, an apparatus 21 for making a flavored beverage comprises a plurality of reservoirs 22, each reservoir configured to hold an individual flavor or aroma compound or mixtures of compounds from the 13 flavor groups previously described or mixtures made from these groups 20, 20', 20", 20"', 20"". The apparatus 21 includes an outlet 23, a water source 90 operable to supply water, a mixing unit 30 operable to mix water from the water source 90 with a quantity of one or more flavor or aroma compounds 20, 20', 20", 20"', 20"" to form a beverage, a source of pressurized gas 35, the source of pressurized gas 35 being operable to deliver pressurized gas to the mixing unit 30 so as to provide carbonation to the beverage, and a dispensing unit 40 operable to dispense the beverage from the apparatus 21 via an outlet 42 into a container 45.

The apparatus 21 for making a beverage includes a housing 24 which houses the mechanical and electronic components of the apparatus 21. Preferably, the housing 24 can be formed of plastic and/or metal.

The apparatus 21 can be a compact, counter-sized device or a larger device for use in restaurants, bars or other establishments which serve beverages.

Preferably, as shown in Figure 3, the water reservoir 90 is used to supply the water necessary for making a serving of a beverage. Alternatively, instead of a water reservoir 90, the apparatus 21 can include a water line (not shown) connected to an external water supply source. In one embodiment, the water reservoir 90 or the water line can be cooled by a cooling system 92 so as to provide a chilled beverage if desired. The cooling system 92 can include an apparatus that is operable to cool the water.

Also preferably, the source of pressurized gas canister 35 is used to supply carbonation if desired. Preferably, the source of pressurized gas canister 35 is replaceable. The source of pressurized gas canister 35 preferably includes carbon dioxide. However, in an alternative embodiment, the source of pressurized gas canister 35 can include nitrogen. Preferably, the amount of carbonation provided by the source of pressurized gas canister 35 can be controlled depending on the preference as to the level of carbonation of the adult consumer. For example, the adult consumer can use input a desired level of carbonation into a control system 50 via a user interface 55, which can be a touch screen or other suitable input device. The control system 50 can control the amount of pressurized gas to be released from the source of pressurized gas canister 35.

The control system 50 and the user interface 55, can also allow an adult consumer to input system requirements including the desired amount of carbonation, desired alcohol content, chilling of the drink, mixing of the drink, flavor and/or aroma compounds desired in the beverage, and other such functions. The apparatus 21 can also include a power supply 60 operable to provide power to the apparatus 21 during use. The power supply 60 can include a battery or an AC adapter. The control system 50 can include manual or automatic controls 25 for controlling the amount of flavor and/or aroma compounds to be released from each of the reservoirs 22.

Preferably, the apparatus 21 is able to prepare a drink within about 5 minutes or less upon demand and without the need for a bartender or other human intervention.

In use, the adult consumer can activate the apparatus 21 using the user interface 55 of the control unit 50 and await dispensing of their beverage. Water from the water supply 90 and optionally pressurized gas from the pressurized gas source 35 are dispensed simultaneously or in series to the mixing unit 30 wherein the pressurized gas and water are mixed with the flavor and/or aroma compounds 20, 20', 20", 20"' of the beverage precursor and optionally alcohol.

The method and apparatus described herein can be modified for home use or on a larger scale in manufacturing facilities. Thus, instead of brewing a variety of different beers, a manufacturer could brew a single low flavor beer and modify the taste and aroma by using the low flavor beer as a main liquid in the apparatus 21 and adding different beverage precursors thereto to provide a variety of different beers. In addition, since the liquid base is a low flavor beer, the addition of a beverage precursor thereto can provide a full flavor beer having fewer calories and a lower alcohol content than conventionally brewed full flavor beers.

In embodiments, the beverage precursor may be provided in a container, such as a drum, a cylinder, a single-serve container (such as a capsule or a cup or a pod), and so forth. The beverage precursor provided in the container may be mixed with water, ethanol, and/or vodka to create a final beverage. In embodiments, the beverage precursor is provided within the container in an amount of from about 0.001% to about 50% by weight of the final beverage, preferably less than about 10%, such as from about 0.001% to about 5% or from about 5% to about 10%.

The examples provided below are exemplary and are not meant to limit any aspects of the embodiments disclosed herein.

### EXAMPLE 1

A red wine having the flavor of a Cabernet Sauvignon can be made by combining 3,000 µg/l of octanoic acid, 2,500 µg/l of 2-methylpropanoic acid, 5,000 µg/l of 3-methylbutanoic acid, 5,000 µg/l of 2-methylbutanoic acid, 2,000 µg/l of hexanoic acid, 150,000 µg/l of 3-methylbutanol, 150,000 µg/l of 2-methylbutanol, 1,000 µg/l of 2,3-butanedione, 500 µg/l of vanilline, 5,000 µg/l of 2,3-pentanedione, 100 µg/l of furaneol, 150 µg/l of 2-phenylacetic acid, 2,000 µg/l of acetaldehyde, 100 µg/l of ethyl butyrate, 100 µg/l of ethyl hexanoate, 10 µg/l of ethyl-3-methylbutyrate, 10 µg/l of ethyl-2-methylbutyrate, 1 µg/l of (E)-b-damascenone, 500 µg/l of whiskey lactone, 30 µg/l of 2-methoxyphenol, 20 µg/l of 4-allyl-2-methoxyphenol, 4,000 µg/l of 3-(methylthio)-1-propanol, 2,000,000 µg/l of tartaric acid, 1,000,000 of succinic acid, 750,000 µg/l of acetic acid, 15,000,000 µg/l of glycerol, 2,000,000 µg/l of L-proline, 1,000,000 µg/l of potassium, 80,000 µg/l of tannic acid, 2,000,000 µg/l of oak extract, 10,000,000 µg/l of ethanol and water. Optionally, colorants can be added to provide a wine beverage having a pleasing color.

### EXAMPLE 2

An American style whiskey can be made by combining 1,000,000 µg/l of 3-methylbutanol, 500,000 µg/l of 2-methylbutanol, 5,000 µg/l of vanilline, 500 µg/l of 3-methylbutanal, 10,000 µg/l of 2-phenylehtanol, 1,000 µg/l of 2-phenylacetic acid, 3,000 µg/l of 2-phenylethyl acetate, 500 µg/l of ethyl butyrate, 10,000 µg/l of ethyl octanoate, 200 µg/l of ethyl-2-methylbutyrate, 10 µg/l of (E)-b-damascenone, 2,500 µg/l of 3-methylbutyl acetate, 15,000 µg/l of 1,1-diethoxyethane, 5,000 µg/l of whiskey lactone, 50 µg/l of 2-methoxyphenol, 400 µg/l of 4-allyl-2-methoxyphenol, 300 µg/l of 5-pentyldihydrofuran-2(3H)-one, 15 µg/l of 4-methyl-2-methoxyphenol, 5 µg/l of 5-hexyldihydrofuran-2(3H)-one, 40 µg/l of (E,E)-2,4-decadienal, 5 µg/l of (E,E)2,4-nonadienal, 150 µg/l of 4-ethylphenol, 10 µg/l of 4-methylphenol, 5,000,000 µg/l of glycerol, 100,000 µg/l of tannic acid, 4,000,000 µg/l of oak extract, 316,000,000 µg/l of ethanol and water.

### EXAMPLE 3

A pilsner-type beer can be made by combining (E)-b-damascenone in an amount of about 3 µg/l, 2-methylbutanoic acid in an amount of about 2,000 µg/l, 2-phenylethanol in an amount of about 10,000 µg/l, 3-(methylthio)propanol in an amount of about 1,000 µg/l, 3-methylbutanoic acid in an amount of about 2000 µg/l, 3-methylbutanal in an amount of about 200 µg/l, 3-methylbutanol in an amount of about 50,000 µg/l, dimethyl sulfide in an amount of about 150 µg/l, ethyl butyrate in an amount of about 200 µg/l, ethyl hexanoate in an amount of about 200 µg/l, ethyl octanoate in an amount of about 150 µg/l, furaneol in an amount of about 500 µg/l, 2-phenylacetic acid in an amount of about 500 µg/l, 3-hydroxy-4,5-dimethyl-2(5H)-furanone in an amount of about 5 µg /l, 3-methylbutanol in an amount of about 50,000 µg/l, 2-methylbutanol in an amount of about 50,000 µg/l, ethylfuraneol in an amount of about 100 µg/l, linalool in an amount of about 300 µg/l, 4-allyl-2-methoxyphenol in an amount of about 150 µg/l, 3-(methylthio)-1-propanal in an amount of about 5 µg/l, citric acid in an amount of about 400,000 µg/l, saccharose in an amount of about 1,500,000 µg/l, potassium in an amount of about 1,500,000 µg/l, hops extract in an amount of about 5,000,000 µg/l, isomerized hops extract 30% in an amount of about 100,000 µg/l, monosodium glutamate in an amount of about 100,000 µg/l , ethanol in an amount of about 37,500,000 µg/l and water.

### EXAMPLE 4

A light pilsner-type beer can be made by combining (E)-b-damascenone in an amount of about 3 µg/l, 2-methylbutanoic acid in an amount of about 2000 µg/l, 2-phenylethanol in an amount of about 10,000 µg/l, 3-(methylthio)propanol in an amount of about 1,000 µg/l, 3-methylbutanoic acid in an amount of about 2,000 µg/l, 3-methylbutanal in an amount of about 200 µg/l, 3-methylbutanol in an amount of about 50,000 µg/l, dimethyl sulfide in an amount of about 150 µg/l, ethyl butyrate in an amount of about 200 µg/l, ethyl hexanoate in an amount of about 200 µg/l, ethyl octanoate in an amount of about 150 µg/l, furaneol in an amount of about 500 µg/l, 2-phenylacetic acid in an amount of about 500 µg/l, 3-hydroxy-4,5-dimethyl-2(5H)-furanone in an amount of about 5 µg/l, 3-methylbutanol in an amount of about 50,000 µg/l, 2-methylbutanol in an amount of about 50,000 µg/l, ethylfuraneol in an amount of about 100 µg/l, linalool in an amount of about 300 µg/l, 4-allyl-2-methoxyphenol in an amount of about 150 µg/l, 3-(methylthio)-1-propanal in an amount of about 5 µg/l, citric acid in an amount of about 400,000 µg/l, saccharose in an amount of about 1,500,000 µg/l, potassium in an amount of about 1,500,000 µg/l, hops extract in an amount of about 5,000,000 µg/l, isomerized hops extract 30% in an amount of about 100,000 µg/l, monosodium glutamate in an amount of about 100,000 µg/l , ethanol in an amount of about 33,100,000 µg/l and water.

Advantageously, the beverages created using the beverage precursor and method described herein have fewer calories than a traditionally brewed and/or fermented beverage having substantially the same flavor characteristics. As shown in Table 14, the pilsner-type of Example 3 has fewer calories than commercially brewed and fermented beers. The calorie count for the commercially brewed beers was obtained from www.beer100.com/beercalorie and is based on a 12 ounce beverage. The calorie count of the beer of Example 3 is based on the following: ethanol: 7 kcal/g and carbohydrates: 4 kcal/g.

**Table 14**

| Beer Brand | total | alcohol | carbs |
|---|---|---|---|
| | kcal | kcal | kcal |
| | | | |
| BUDWEISER | 145 | 97 | 42.4 |
| MILLER GENUINE DRAFT | 143 | 91 | 52.4 |
| SAM ADAMS BOSTON LAGER | 160 | 92 | 72 |
| Pilsner-type beer of Example 3 | 100 | 92 | 8 |

As shown in Table 15, the light pilsner-type beer of Example 4 has fewer calories than commercially brewed and fermented light beers. The calorie count for the commercially brewed beers was obtained from www.beer100.com/beercalorie and is based on a 12 ounce beverage. The calorie count of the beer of Example 4 is based on the following: ethanol: 7 kcal/g and carbohydrates: 4 kcal/g.

**Table 15**

| Beer Brand | total | alcohol | carbs |
|---|---|---|---|
| | kcal | kcal | kcal |
| | | | |
| BUD LIGHT | 110 | 81 | 26.4 |
| MILLER LITE | 96 | 81 | 12.8 |
| Light pilsner-type beer of Example 4 | 89 | 81 | 8 |

As shown both the pilsner-type beverage of Example 3 and the light pilsner-type beverage of Example 4 provide a beverage having at least 7% fewer calories than a conventionally brewed and/or fermented beverage having a similar flavor. Preferably, the beverages formed as described herein will have at least 5% fewer calories (e.g., at least 10% fewer calories, at least 15% fewer calories, at least 20% fewer calories, at least 25% fewer calories) than traditionally brewed and/or fermented beverages having similar flavors.

### EXAMPLE 5

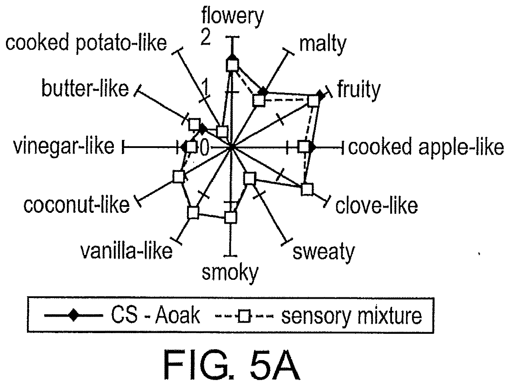

A cabernet sauvignon red wine sensory mixture was prepared using compounds within the ranges set forth for wine in Tables 1A-13B above. Aroma profile analysis was then carried out on the prepared cabernet sauvignon red wine sensory mixture using a traditional cabernet sauvignon red wine (i.e., a cabernet sauvignon red wine formed by fermenting grapes) maturated in American oak as a reference material. For aroma profile analysis, the reference material and the prepared sensory mixture were filled into sensory glasses and given to a panel of 17 sensory experts trained in flavor identification and evaluation. The panelists determined the intensity of the odor impressions on a scale from 0 (not perceivable) to 3 (intensely perceivable). FIG. 5A illustrates the results of this analysis.

As shown in FIG. 5A, the trained panelists found the aroma profiles of the sensory mixture and the reference wine to be almost identical, with the aroma of the beverage precursor being slightly less malty and cooked-apple-like than the reference wine. The panel concluded that the aroma of the beverage precursor was identifiable as the aroma of a cabernet sauvignon red wine.

### EXAMPLE 6

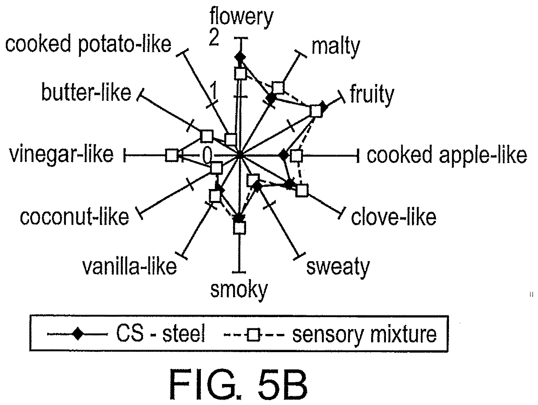

A sensory mixture having the flavor of a cabernet sauvignon red wine maturated in a steel tank was prepared by combining compounds within the ranges set forth for wine in Tables 1A-13B above. Aroma profile analysis was then carried out on the prepared cabernet sauvignon red wine sensory mixture using a traditionally-produced cabernet sauvignon red wine (i.e., a cabernet sauvignon red wine formed by fermenting grapes) maturated in a steel tank as a reference material. For aroma profile analysis, the reference material and the prepared sensory mixture were filled into sensory glasses and given to a panel of 17 sensory experts trained in flavor identification and evaluation. The panelists determined the intensity of the odor impressions on a scale from 0 (not perceivable) to 3 (intensely perceivable). FIG. 5B illustrates the results of this analysis.

As shown in FIG. 5B, the trained panelists found the aroma profiles of the sensory mixture and the reference wine to be almost identical, with the aroma of the sensory mixture being more malty, cooked-apple-like and clove-like than the reference wine. The panel concluded that the aroma of the sensory mixture was identifiable as the aroma of Cabernet Sauvignon red wine.

### EXAMPLE 7

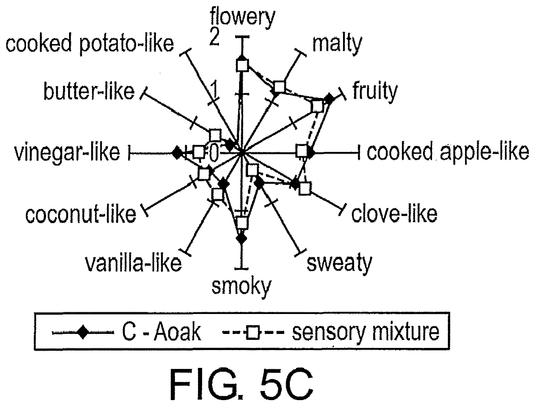

A sensory mixture having the flavor of a Chardonnay white wine maturated in American oak was prepared by combining compounds within the ranges set forth for wine in Tables 1A-13B above. Aroma profile analysis was then carried out on the prepared sensory mixture using a traditionally-produced Chardonnay white wine (i.e., a Chardonnay white wine formed by fermenting grapes) maturated in American oak as a reference material. For aroma profile analysis, the reference material and the prepared sensory mixture were filled into sensory glasses and given to a panel of 17 sensory experts trained in flavor identification and evaluation. The panelists determined the intensity of the odor impressions on a scale from 0 (not perceivable) to 3 (intensely perceivable). FIG. 5C illustrates the results of this analysis.

As shown in FIG. 5C, the trained panelists found the aroma profiles of the sensory mixture and the reference wine to be almost identical, with the aroma of the sensory mixture being slightly more clove but slightly less fruity and sweaty than the reference wine. The panel concluded that the aroma of the sensory mixture was identifiable as the aroma of Chardonnay white wine.

### EXAMPLE 8

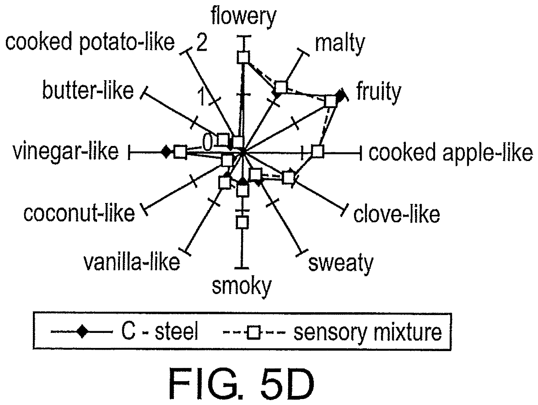

A sensory mixture having the flavor of a Chardonnay white wine maturated in a steel tank was prepared by combining compounds within the ranges set forth for wine in Tables 1A-13B above. Aroma profile analysis was then carried out on the prepared Chardonnay sensory mixture using a traditionally-produced Chardonnay white wine (i.e., a Chardonnay white wine formed by fermenting grapes) maturated in a steel tank as a reference material. For aroma profile analysis, the reference material and the prepared sensory mixture were filled into sensory glasses and given to a panel of 17 sensory experts trained in flavor identification and evaluation. The panelists determined the intensity of the odor impressions on a scale from 0 (not perceivable) to 3 (intensely perceivable). FIG. 5D illustrates the results of this analysis.

As shown in FIG. 5D, the trained panelists found the aroma profiles of the sensory mixture and the reference wine to be almost identical, with the aroma of the sensory mixture being slightly less fruity than the reference wine. The panel concluded that the aroma of the sensory mixture was identifiable as the aroma of Chardonnay white wine.

### EXAMPLE 9

A sensory mixture having the flavor of a riesling white wine maturated in a steel tank was prepared by combining compounds within the ranges set forth for wine in Tables 1A-13B above.

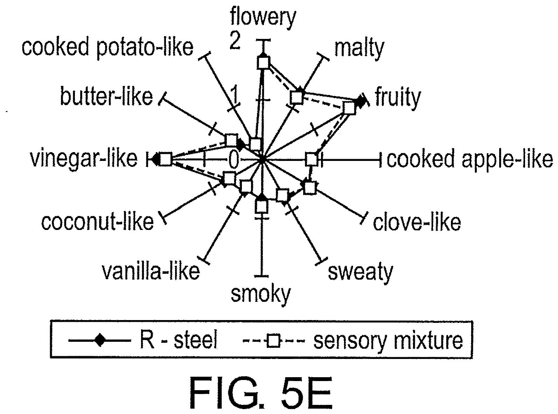

Aroma profile analysis was then carried out on the prepared riesling sensory mixture using a traditionally-produced riesling white wine (i.e., a riesling white wine formed by fermenting grapes) maturated in a steel tank as a reference material. For aroma profile analysis, the reference material and the prepared sensory mixture were filled into sensory glasses and given to a panel of 17 sensory experts trained in flavor identification and evaluation. The panelists determined the intensity of the odor impressions on a scale from 0 (not perceivable) to 3 (intensely perceivable). FIG. 5E illustrates the results of this analysis.

As shown in FIG. 5E, the trained panelists found the aroma profiles of the sensory mixture and the reference wine to be almost identical, with the aroma of the sensory mixture being slightly less fruity and malty than the reference wine. The panel concluded that the aroma of the sensory mixture was identifiable as the aroma of riesling white wine.

### EXAMPLE 10

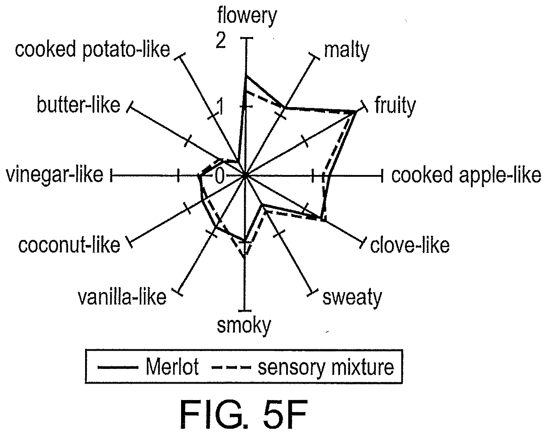

A sensory mixture having the flavor of an Italian Merlot wine was prepared by combining compounds within the ranges set forth for wine in Tables 1A-13B above. Aroma profile analysis was then carried out on the prepared merlot sensory mixture using a traditionally-produced Italian Merlot red wine (i.e., a merlot red wine formed by fermenting grapes) as a reference material. For aroma profile analysis, the reference material and the prepared sensory mixture were filled into sensory glasses and given to a panel of 17 sensory experts trained in flavor identification and evaluation. The panelists determined the intensity of the odor impressions on a scale from 0 (not perceivable) to 3 (intensely perceivable). FIG. 5F illustrates the results of this analysis.

As shown in FIG. 5F, the trained panelists found the aroma profiles of the sensory mixture and the reference wine to be almost identical, with the aroma of the sensory mixture being slightly less flowery but more smoky than the reference wine. The panel concluded that the aroma of the sensory mixture was identifiable as the aroma of merlot red wine.

### EXAMPLE 11

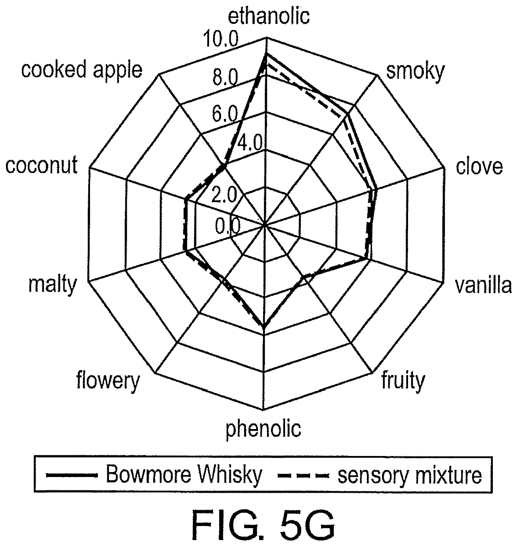

A sensory mixture having the flavor of a Scotch Whiskey was prepared by combining compounds within the ranges set forth for whiskey in Tables 1A-13B above. Aroma profile analysis was then carried out on the prepared Scotch Whiskey sensory mixture using a traditionally-produced Scotch Whisky (i.e., a Scotch Whisky made from fermented grain) as a reference material. Specifically, for the purposes of this analysis, Bowmore Islay Single Malt Whisky was used as a reference material. For aroma profile analysis, the reference material and the prepared sensory mixture were filled into sensory glasses and given to a panel of 17 sensory experts trained in flavor identification and evaluation. The panelists determined the intensity of the odor impressions on a scale from 0 (not perceivable) to 3 (intensely perceivable). FIG. 5G illustrates the results of this analysis.

As shown in FIG. 5G, the trained panelists found the aroma profiles of the sensory mixture and the reference Scotch Whisky to be almost identical, with the aroma of the sensory mixture being slightly less ethanolic and smoky than the reference Scotch Whisky. The panel concluded that the aroma of the sensory mixture was identifiable as the aroma of Scotch Whisky.

### EXAMPLE 12

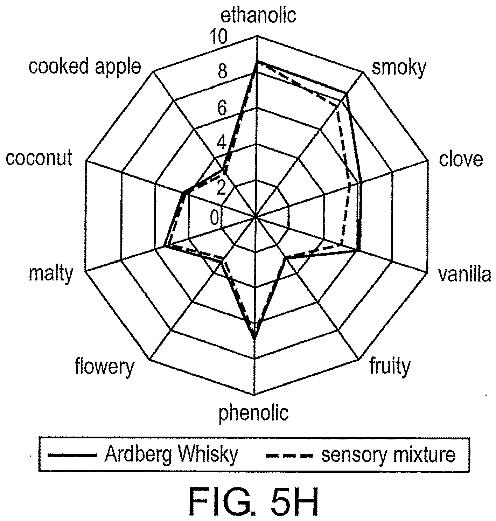

A sensory mixture having the flavor of a Scotch Whiskey was prepared by combining compounds within the ranges set forth for whiskey in Tables 1A-13B above. Aroma profile analysis was then carried out on the prepared Scotch Whiskey sensory mixture using a traditionally-produced Scotch Whisky (i.e., a Scotch Whisky made from fermented grain) as a reference material. Specifically, for the purposes of this analysis, Ardbeg Islay Single Malt Whisky was used as a reference material. For aroma profile analysis, the reference material and the prepared sensory mixture were filled into sensory glasses and given to a panel of 17 sensory experts trained in flavor identification and evaluation. The panelists determined the intensity of the odor impressions on a scale from 0 (not perceivable) to 3 (intensely perceivable). FIG. 5H illustrates the results of this analysis.

As shown in FIG. 5H, the trained panelists found the aroma profiles of the sensory mixture and the reference Scotch Whisky to be almost identical, with the aroma of the sensory mixture having less smoky, clove, and vanilla notes than the reference Scotch. The panel concluded that the aroma of the sensory mixture was identifiable as the aroma of Scotch whiskey.

### EXAMPLE 13

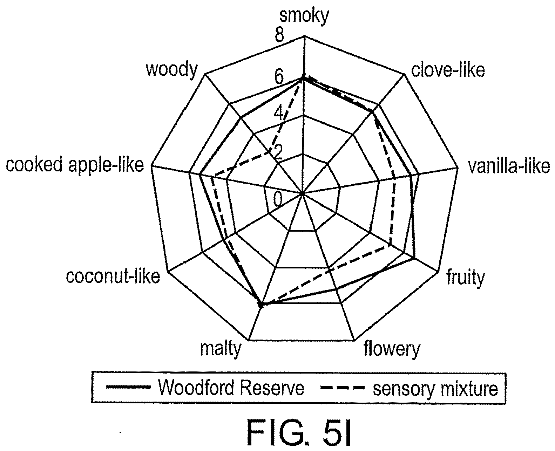

A sensory mixture having the flavor of a bourbon whiskey was prepared by combining compounds within the ranges set forth for whiskey in Tables 1A-13B above. Aroma profile analysis was then carried out on the prepared bourbon whiskey sensory mixture using a traditionally-produced bourbon whiskey (i.e., a bourbon whiskey made from fermented grain) as a reference material. Specifically, for the purposes of this analysis, Woodford Reserve bourbon whiskey was used as a reference material. For aroma profile analysis, the reference material and the prepared sensory mixture were filled into sensory glasses and given to a panel of 17 sensory experts trained in flavor identification and evaluation. The panelists determined the intensity of the odor impressions on a scale from 0 (not perceivable) to 3 (intensely perceivable). FIG. 5I illustrates the results of this analysis.

As shown in FIG. 5I, the trained panelists found the aroma profiles of the sensory mixture and the reference bourbon whiskey to be similar, with the aroma of the sensory mixture being less woody fruity than the reference bourbon whiskey. The panel concluded that the aroma of the sensory mixture was identifiable as the aroma of bourbon whiskey.

### EXAMPLE 14

A sensory mixture having the flavor of a bourbon whiskey was prepared by combining compounds within the ranges set forth for whiskey in Tables 1A-13B above.

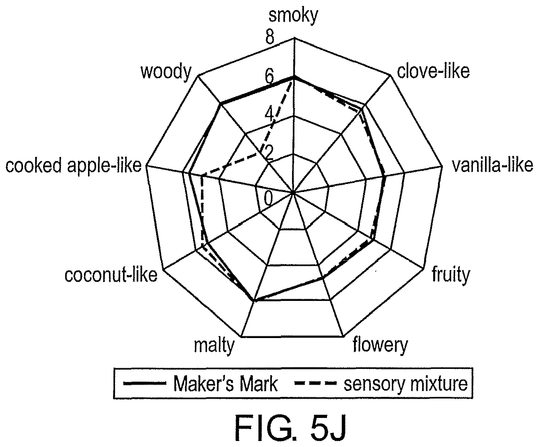

Aroma profile analysis was then carried out on the prepared bourbon whiskey sensory mixture using a traditionally-produced bourbon whiskey (i.e., a bourbon whiskey made from fermented grain) as a reference material. Specifically, for the purposes of this analysis, Maker's Mark bourbon whiskey was used as a reference material. For aroma profile analysis, the reference material and the prepared sensory mixture were filled into sensory glasses and given to a panel of 17 sensory experts trained in flavor identification and evaluation. The panelists determined the intensity of the odor impressions on a scale from 0 (not perceivable) to 3 (intensely perceivable). FIG. 5J illustrates the results of this analysis.

As shown in FIG. 5J, the trained panelists found the aroma profiles of the sensory mixture and the reference bourbon whiskey to be similar, with the aroma of the sensory mixture being less woody than the reference bourbon whiskey. The panel concluded that the aroma of the sensory mixture was identifiable as the aroma of bourbon whiskey.

### EXAMPLE 15

A sensory mixture having the taste of a cabernet sauvignon red wine was prepared by combining compounds within the ranges set forth for wine in Tables 1A-13B above.

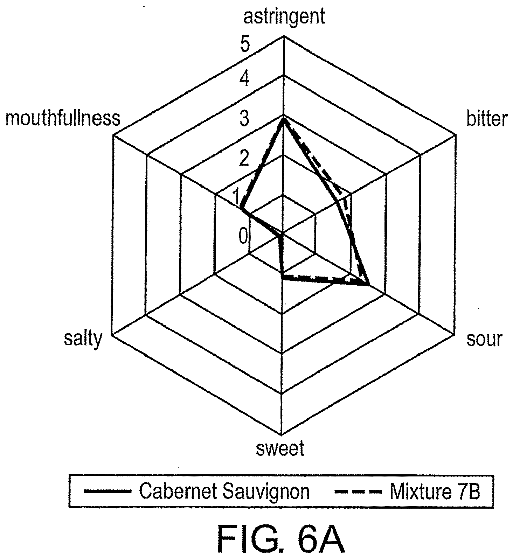

Taste profile analysis was then carried out on the prepared cabernet sauvignon sensory mixture by a panel of seventeen sensory experts trained in flavor identification and evaluation. Specifically, the panelists evaluated the taste of the prepared sensory mixture on a scale from 0 (not detectable) to 5 (strong impression), in comparison to a traditionally-produced cabernet sauvignon red wine (i.e., an authentic cabernet sauvignon formed by fermenting grapes) as a reference. Standard deviation for the taste intensities were <0.3. The results of this analysis are summarized in Table 16 and FIG. 6A.

**Table 16**

| | | Astringent | Bitter | Sour | Sweet | Salty | Mouthfulness |
|---|---|---|---|---|---|---|---|
| Cabernet Sauvignon | Authentic wine (reference) | 2.9 | 1.6 | 2.5 | 1.1 | 0.1 | 1.3 |
| | Sensory mixture | 2.9 | 1.8 | 2.3 | 1.1 | 0.1 | 1.3 |

As shown in Table 16 and FIG. 6A, the panel found that the taste profiles of the sensory mixture and the reference cabernet sauvignon were almost identical, with the sensory mixture being slightly more bitter and less sour than the reference wine. The panel concluded that the taste of the sensory mixture was identifiable as the taste of Cabernet Sauvignon red wine.

### EXAMPLE 16

A sensory mixture having the taste of a merlot red wine was prepared by combining compounds within the ranges set forth for wine in Tables 1A-13B above.

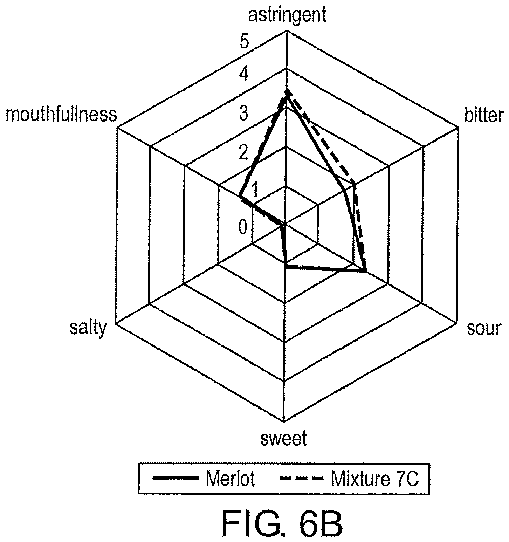

Taste profile analysis was then carried out on the prepared merlot sensory mixture by a panel of seventeen sensory experts trained in flavor identification and evaluation. Specifically, the panelists evaluated the taste of the prepared sensory mixture on a scale from 0 (not detectable) to 5 (strong impression), in comparison to a traditionally-produced merlot red wine (i.e., an authentic merlot formed by fermenting grapes) as a reference. Standard deviation for the taste intensities were <0.3. The results of this analysis are summarized in Table 17 and FIG. 6B.

**Table 17**

| | | Astringent | Bitter | Sour | Sweet | Salty | Mouthfulness |
|---|---|---|---|---|---|---|---|
| Merlot | Authentic wine (reference) | 3.3 | 1.7 | 2.4 | 1.1 | 0.1 | 1.4 |
| | Sensory mixture | 3.5 | 2.0 | 2.3 | 1.0 | 0.1 | 1.4 |

As shown in Table 17 and FIG. 6B, the panel found that the taste profiles of the sensory mixture and the reference merlot were almost identical, with the taste of the sensory mixture being slightly more bitter and astringent than the reference merlot wine. The panel concluded that the taste of the sensory mixture was identifiable as the taste of merlot red wine.

### EXAMPLE 17

A sensory mixture having the taste of a riesling white wine was prepared by combining compounds within the ranges set forth for wine in Tables 1A-13B above.

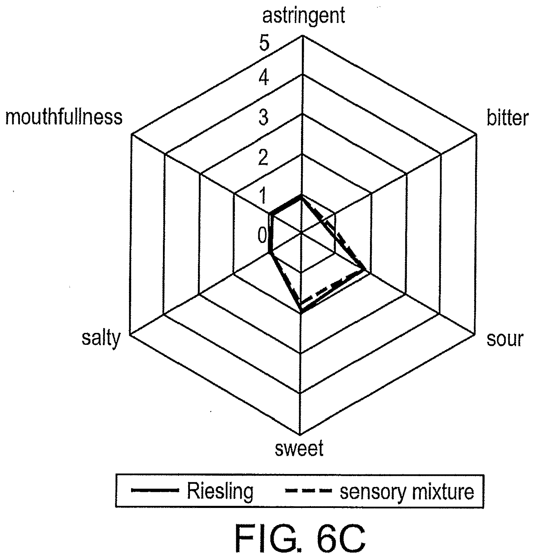

Taste profile analysis was then carried out on the prepared riesling sensory mixture by a panel of seventeen sensory experts trained in flavor identification and evaluation. Specifically, the panelists evaluated the taste of the prepared sensory mixture on a scale from 0 (not detectable) to 5 (strong impression), in comparison to a traditionally-produced riesling white wine (i.e., an authentic riesling formed by fermenting grapes) as a reference. Standard deviation for the taste intensities were <0.3. The results of this analysis are summarized in Table 18 and FIG. 6C.

**Table 18**

| | | Astringent | Bitter | Sour | Sweet | Salty | Mouthfulness |
|---|---|---|---|---|---|---|---|
| Riesling | Authentic wine (reference) | 0.9 | 0.6 | 1.8 | 1.9 | 0.9 | 0.9 |
| | Sensory mixture | 0.9 | 0.7 | 1.8 | 1.7 | 0.9 | 0.9 |

As shown in Table 18 and in FIG. 6C, the panel found that the taste profiles of the sensory mixture and the reference riesling white wine were almost identical, with the taste of the sensory mixture being slightly less sweet than the reference riesling wine. The panel concluded that the taste of the sensory mixture was identifiable as the taste of riesling white wine.

### EXAMPLE 18

A sensory mixture having the taste of a merlot red wine was prepared by combining compounds within the ranges set forth for wine in Tables 1A-13B above.

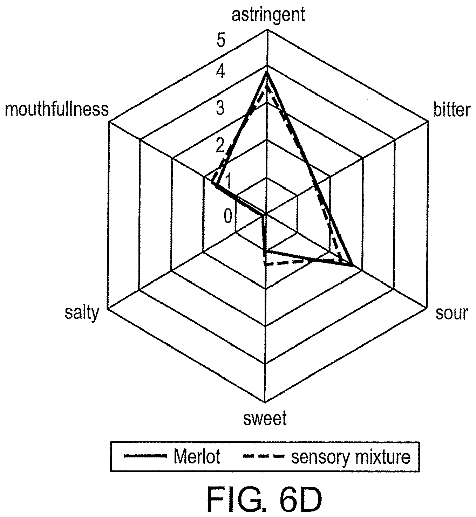

Taste profile analysis was then carried out on the prepared merlot sensory mixture by a panel of seventeen sensory experts trained in flavor identification and evaluation. Specifically, the panelists evaluated the taste of the prepared sensory mixture on a scale from 0 (not detectable) to 5 (strong impression), in comparison to a traditionally-produced merlot red wine (i.e., an authentic merlot formed by fermenting grapes) as a reference. Standard deviation for the taste intensities were <0.3. The results of this analysis are summarized in Table 19 and FIG. 6D.

**Table 19**

| | | Astringent | Bitter | Sour | Sweet | Salty | Mouthfulness |
|---|---|---|---|---|---|---|---|
| Merlot | Authentic wine (reference) | 3.9 | 1.6 | 2.7 | 0.9 | 0.1 | 1.6 |
| | Sensory mixture | 3.5 | 1.6 | 2.3 | 1.3 | 0.1 | 1.8 |

As shown in Table 19 and in FIG. 6C, the panel found that the taste profiles of the sensory mixture and the reference merlot red wine were very similar, with the taste of the sensory mixture being slightly less astringent and sour but more sweet than the reference merlot wine. The panel concluded that the taste of the sensory mixture was identifiable as the taste of merlot red wine.

### EXAMPLE 19

A sensory mixture having the flavor of a bourbon whiskey was prepared by combining compounds within the ranges set forth for whiskey in Tables 1A-13B above.

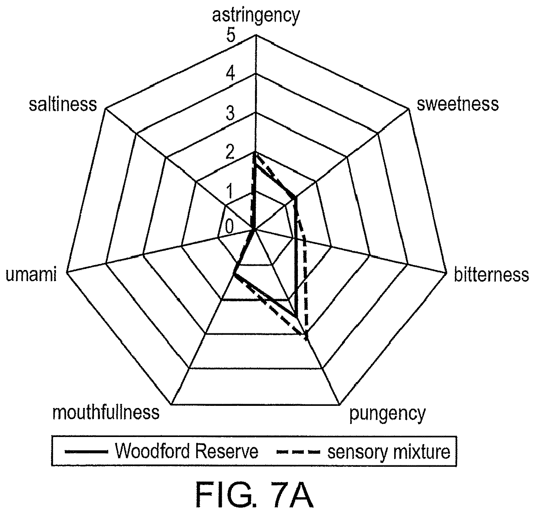

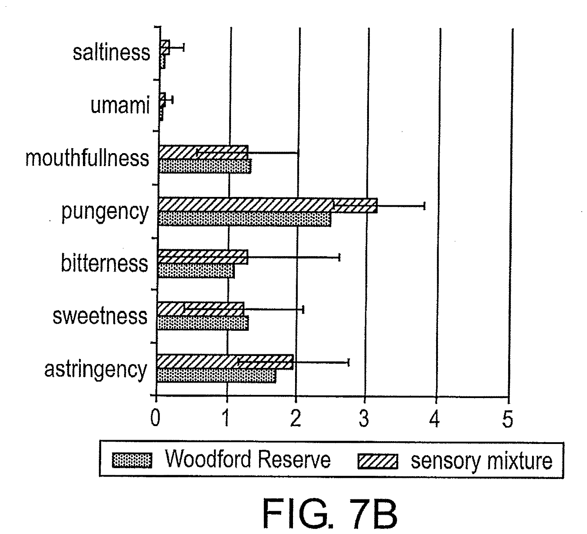

Taste profile analysis was then carried out on the prepared bourbon whiskey sensory mixture by a panel of seventeen sensory experts trained in flavor identification and evaluation. Specifically, the panelists evaluated the taste of the prepared sensory mixture on a scale from 0 (not detectable) to 5 (strong impression), in comparison to a traditionally-produced bourbon whiskey wine (i.e., a bourbon whiskey made from fermented grain, in this case Woodford Reserve bourbon whiskey) as a reference. The results of this analysis are summarized in FIGS. 7A and 7B.

As shown in FIGS. 7A and 7B, the panel found the taste profiles of the sensory mixture and the reference bourbon whiskey to be very similar, with the taste of the sensory mixture being slightly more bitter and more pungent than the reference bourbon whiskey. The panel concluded that the taste of the sensory mixture was identifiable as the taste of bourbon whiskey.

### EXAMPLE 20

Two sensory mixtures having the flavor of Scotch whiskey were prepared using compounds in the concentration ranges and food dyes to match the color according to the instant disclosure for comparison to an authentic Islay Scotch whisky.

A panel of 2-4 individuals with several years of expertise in flavor research and flavor evaluation were asked to assess the similarity of the sensory mixture samples to the authentic (i.e., traditionally-prepared) Scotch whisky, to describe their general sensorial perception (aroma, taste, mouthfeel, color), and to rate the samples based on how much the panelists liked them. The panel then assessed and described the samples. The samples were evaluated using both sniff (orthonasal) and sip-and-spit (retronasal) methods.

The panelists did not perceive any off-notes in the prepared sensory mixtures. The panel determined that both sensory mixtures were sensorially on par with the authentic sample in terms of how much they liked them. As used herein, an "x" in the preference column refers to the overall comparision between an authentic beverage and a beverage formed according to methods disclosed herein.

**Table 20**

| | Preference | Comments |
|---|---|---|
| Islay Scotch | xx | -- |
| Scotch Whiskey Sensory mixture #1 | xx | Slightly less smoky |
| Scotch Whiskey Sensory mixture #2 | xx | Lacking of distinct phenolic aftertaste; category of Speyside Scotch |

The panel was asked whether the two Scotch whiskey sensory mixtures were within the product category of an Islay Scotch. The panel determined that both sensory mixtures had the same typical characteristics as a scotch. Scotch whiskey sensory mixture #1 fell into the product category of an Islay Scotch. Scotch whiskey sensory mixture #2 was slightly less smoky than a typical Islay Scotch-the panelists described this sensory mixture as a Speyside-type Scotch (i.e., less smoky).

### EXAMPLE 21

Sensory mixtures having the flavor of bourbon whiskey (traditional), bourbon whiskey (light/sweet), and American whiskey were prepared using compounds in the concentration ranges and food dyes to match the color according to the instant disclosure for comparison to two authentic bourbon (traditional and light/sweet) reference materials and one American whiskey reference material.

A panel of 2-4 individuals with several years of expertise in flavor research and flavor evaluation were asked to assess the similarity of the sensory mixture samples to the authentic whiskeys, to describe their general sensorial perception (aroma, taste, mouthfeel, color), and to rate the samples based on how much the panelists liked them. The panel then assessed and described the samples. The samples were evaluated using both sniff (orthonasal) and sip-and-spit (retronasal) methods.

The panelists did not perceive any off-notes in the prepared sensory mixtures. The American whiskey sensory mixture was preferred over the authentic American whiskey, and the light/sweet bourbon sensory mixture was on par with the authentic light/sweet bourbon in terms of how much the panel liked it. The flavor of the traditional bourbon sensory mixture was liked overall-in comparison with the reference traditional bourbon, the sensory mixture had less sweetness and fruitiness, and the fusel alcohols were too predominant. The panelists' impressions are summarized in Table 21.

**Table 21**

| | Preference | Comments |
|---|---|---|
| Bourbon (Traditional - Reference) | xx | --- |
| Sensory mixture (Traditional) | x | Aroma good, fusel alcohols not optimally balanced |
| Bourbon (Light/Sweet - Reference) | xx | --- |
| Sensory mixture (Light/Sweet) | xx | Overall very close in flavor, slightly lower in vanilla |
| American Whiskey (reference) | x | --- |
| Sensory mixture (American Whiskey) | xx | Overall very close in flavor, slightly lower in caramel and higher in coconut |

The panel determined that each of the sensory mixtures was considered to be sensorially in the style of a bourbon or American whiskey. Each sensory mixture exhibited the unique characteristics specific to the targeted whiskey style.

### EXAMPLE 22

Four sensory mixtures having the flavor of gin (two having the flavor of London Dry Gin, two having the flavor of Light London Dry Gin) were prepared using compounds in the concentration ranges and food dyes to match the color according to the instant disclosure for comparison to London Dry Gin and Light London Dry Gin reference materials.

A panel of 2-4 individuals with several years of expertise in flavor research and flavor evaluation were asked to assess the similarity of the sensory mixture samples to the authentic gins, to describe their general sensorial perception (aroma, taste, mouthfeel, color), and to rate the samples based on how much the panelists liked them. The panel then assessed and described the samples. The samples were evaluated using both sniff (orthonasal) and sip-and-spit (retronasal) methods.

The panelists did not perceive any off-notes in the prepared sensory mixtures. The sensory mixtures and the authentic reference gins differed mainly in the top notes and the balance of terpenic and floral notes. The panelists' findings are summarized in Table 22.

**Table 22**

| | Preference | Comments |
|---|---|---|
| Authentic London Dry Gin | xx | --- |
| London Dry Gin Sensory mixture #1 | xx | Slightly sweeter; orange peel notes |
| London Dry Gin Sensory mixture #2 | xxx | very close |
| Authentic Light London Dry Gin | xx | --- |
| Light London Dry Gin Sensory mixture #1 | xx | Very close in aroma |
| Light London Dry Gin Sensory mixture #2 | x | Overall very close but described as "cleaner," fruitier |

The panel considered each sensory mixture to be sensorially in the style of gin. The sensory mixtures differed slightly in their flavor profiles in comparison to each other, each having the characteristics typical to the specific type of gin.

### EXAMPLE 23

A sensory mixture having the flavor of rum was prepared using the compounds in the concentration ranges and food dyes to match the color according to the instant disclosure for comparison to an authentic dark rum reference material.

A panel of 2-4 individuals with several years of expertise in flavor research and flavor evaluation were asked to assess the similarity of the sensory mixture system to the authentic rum, to describe their general sensorial perception (aroma, taste, mouthfeel, color), and to rate the samples based on how much the panelists liked them. The panel then assessed and described the samples. The samples were evaluated using both sniff (orthonasal) and sip-and-spit (retronasal) methods.

The panelists did not perceive any off-notes in the sensory mixture. The panelists found that the sensory mixture was on par with the authentic rum reference in terms of liking (i.e., preference). The panel found that the sensory mixture was slightly higher in its sweetness and caramel notes. The panelists' findings are summarized in Table 23.

**Table 23**

| | Preference | Comments |
|---|---|---|
| Authentic Dark Rum | xx | --- |
| Rum Sensory mixture | xx | Slightly sweeter/darker |

The panel considered the sensory mixture to be sensorially within the style of dark rum.

### EXAMPLE 24

Three sensory mixtures having the flavor of white rum were prepared using compounds in the concentration ranges and food dyes to match the color for rum according to the instant disclosure for comparison to an authentic white rum reference material.

A panel of 2-4 individuals with several years of expertise in flavor research and flavor evaluation were asked to assess the similarity of the sensory mixture system to the authentic rum, to describe their general sensorial perception (aroma, taste, mouthfeel, color), and to rate the samples based on how much the panelists liked them. The panel then assessed and described the samples. The samples were evaluated using both sniff (orthonasal) and sip-and-spit (retronasal) methods.

The panelists did not perceive any off-flavors in the prepared sensory mixtures, but the white rum was perceived as having a noticeable off-flavor (two bottles of the white rum were tested). Each of the sensory mixtures scored higher in liking/preference than the authentic white rum reference material. The panelists' findings are summarized in Table 24.

**Table 24**

| | Preference | Comments |
|---|---|---|
| Authentic White Rum | x | Noticeable off-flavor/aftertaste |
| White Rum Sensory mixture #1 | xx | A bit flat |
| White Rum Sensory mixture #2 | xxx | Overall very similar to original but no off-flavor |
| White Rum Sensory mixture #3 | xx | More mouthfeel |

The panel considered each of the sensory mixtures to be sensorially within the style of white rum.

### EXAMPLE 25

A sensory mixture having the flavor of vermouth prepared using compounds in the concentration ranges and food dyes to match the color for vermouth according to the instant disclosure was used to prepare a vodka martini cocktail. More particularly, the cocktail was prepared using the vermouth sensory mixture in combination with additional ingredients traditionally found in a vodka martini (including an authentic vodka). An authentic vodka martini (using an authentic vermouth) was also prepared as a reference.

A panel of 2-4 individuals with several years of expertise in flavor research and flavor evaluation were asked to assess the similarity of the vermouth sensory mixture martini to the authentic martini, to describe their general sensorial perception (aroma, taste, mouthfeel, color), and to rate the samples based on how much the panelists liked them. The panel then assessed and described the samples. The samples were evaluated using both sniff (orthonasal) and sip-and-spit (retronasal) methods.

The panelists did not perceive any off-flavors in the vermouth sensory mixture martini. The sensory mixture martini was preferred over the authentic martini reference, and was described as fruitier and overall more flavorful. The panelists' findings are summarized in Table 25.

**Table 25**

| | Preference | Comments |
|---|---|---|
| Vodka Martini (Authentic) | xx | --- |
| Sensory mixture Vodka Martini | xxx | Fruitier, more flavorful |

The panel considered the sensory mixture vodka martini to be sensorially in the style of a vodka martini.

### EXAMPLE 26

A sensory mixture having the flavor of London Dry Gin and a sensory mixture having the flavor of vermouth prepared using compounds in the concentration ranges and food dyes to match the color according to the instant disclosure were used to prepare Sensory mixture Gin Martini #1. A sensory mixture having the flavor of Light London Dry Gin and a sensory mixture having the flavor of vermouth were prepared using compounds in the concentration ranges according to the instant disclosure were used to prepare Sensory mixture Gin Martini #2. An authentic gin martini (prepared from authentic London Dry Gin and vermouth) was prepared as a reference.

A panel of 2-4 individuals with several years of expertise in flavor research and flavor evaluation were asked to assess the similarity of the sensory mixture gin martinis to the authentic gin martini, to describe their general sensorial perception (aroma, taste, mouthfeel, color), and to rate the samples based on how much the panelists liked them. The panel then assessed and described the samples. The samples were evaluated using both sniff (orthonasal) and sip-and-spit (retronasal) methods.

The panelists did not perceive any off-flavors in the sensory mixture gin martinis. The differences in the notes between Sensory mixture Gin Martini #1 and Sensory mixture Gin Martini #2 were characteristic for the different types of gin. Both of the Sensory mixture Gin Martinis were liked, but the panelists preferred Sensory mixture Gin Martini #1 (i.e., the panelists preferred the martini prepared with the London Dry Gin sensory mixture over the one prepared with the Light London Dry Gin sensory mixture). Sensory mixture Gin Martini #1 (prepared using the London Dry Gin sensory mixture) was on par in terms of liking with the reference gin martini (prepared with London Dry Gin). The panelists' findings are summarized in Table 26.

**Table 26**

| | Preference | Comments |
|---|---|---|
| Authentic Gin Martini | xxx | --- |
| Sensory mixture Gin Martini #1 (London dry Gin style) | xxx | Good |
| Sensory mixture Gin Martini #2 (Light London Dry Gin style) | xx | Good |

The panel considered the sensory mixture gin martinis to be sensorially in the style of a gin martini.

### EXAMPLE 27

Two sensory mixtures having the sensory mixture and food dyes to match the color of vermouth were prepared using compounds in the concentration ranges according to the instant disclosure for comparison to two authentic vermouths.

A panel of 2-4 individuals with several years of expertise in flavor research and flavor evaluation were asked to assess the similarity of the vermouth sensory mixtures to the authentic vermouth, to describe their general sensorial perception (aroma, taste, mouthfeel, color), and to rate the samples based on how much the panelists liked them. Samples were presented on a blind basis, encoded with numbers/letters, and presented in a random order. The panel then assessed and described the samples. The samples were evaluated using both sniff (orthonasal) and sip-and-spit (retronasal) methods.

The panelists did not perceive any off-flavors in the sensory mixtures. The vermouth sensory mixtures were each preferred over the authentic vermouth. The panelists' findings are summarized in Table 27.

**Table 27**

| | Preference | Comments |
|---|---|---|
| Authentic Vermouth (encoded) | x | Bitter |
| Authentic Vermouth (encoded) | xx | Slight sulfuric aroma |
| Vermouth Sensory mixture #1 (encoded) | xxx | A bit flat in aroma and taste |
| Vermouth Sensory mixture #2 (encoded) | xxx | Less bitter |

The panel considered the vermouth sensory mixtures to be sensorially in the style of vermouth. The panel was not able to identify the authentic vermouths.

### EXAMPLE 28

Two sensory mixtures having the flavor of rum prepared using compounds in the concentration ranges and food dyes to match the color according to the instant disclosure were used to prepare sensory mixture daiquiris. That is, each sensory mixture white rum was mixed with the traditional ingredients of a daiquiri (aside from authentic white rum). An authentic daiquiri prepared from authentic white rum (encoded) was also prepared.

A panel of 2-4 individuals with several years of expertise in flavor research and flavor evaluation were asked to assess the similarity of the sensory mixture daiquiris to the authentic daiquiri, to describe their general sensorial perception (aroma, taste, mouthfeel, color), and to rate the samples based on how much the panelists liked them. Samples were presented on a blind basis, encoded with numbers/letters, and presented in a random order. The panel then assessed and described the samples. The samples were evaluated using both sniff (orthonasal) and sip-and-spit (retronasal) methods.

The panelists did not perceive any off-flavors in any of the samples. The sensory mixture daiquiris were preferred over the authentic daiquiri. The panelists' findings are summarized in Table 28.

**Table 28**

| | Preference | Comments |
|---|---|---|
| Authentic Daiquiri (encoded) | x | Flat aroma |
| Sensory mixture Daiquiri #1 (encoded) | xx | Good |
| Sensory mixture Daiquiri #2 (encoded) | xx | Good |

All samples were considered to be in the style of daiquiri. The panelists did not identify the authentic daiquiri from the sensory mixture daiquiris.

### EXAMPLE 29

Four sensory mixtures having the flavor of white rum prepared using compounds in the concentration ranges and food dyes to match the color according to the instant disclosure were used to prepare sensory mixture mojitos. That is, each white rum sensory mixture was mixed with the remaining traditional ingredients of a mojito (aside from authentic white rum). An authentic mojito prepared from authentic white rum (encoded) was also prepared.

A panel of 2-4 individuals with several years of expertise in flavor research and flavor evaluation were asked to assess the similarity of the sensory mixture mojitos to the authentic mojito, to describe their general sensorial perception (aroma, taste, mouthfeel, color), and to rate the samples based on how much the panelists liked them. Samples were presented on a blind basis, encoded with numbers/letters, and presented in a random order. The panel then assessed and described the samples. The samples were evaluated using both sniff (orthonasal) and sip-and-spit (retronasal) methods.

The panelists perceived an off-flavor in the authentic mojito, but not in the sensory mixture mojitos. The sensory mixture mojitos were either preferred or on par with the authentic mojito in terms of liking. The panelists' findings are summarized in Table 29.

**Table 29**

| | Preference | Comments |
|---|---|---|
| Authentic Mojito (encoded) | x | Unpleasant Aftertaste |
| Sensory mixture Mojito #1 (encoded) | xx | No off-flavor |
| Sensory mixture Mojito #2 (encoded) | xxx | More citrusy/refreshing; no off-flavor |
| Sensory mixture Mojito #3 (encoded) | xx | No off-flavor |
| Sensory mixture Mojito #4 (encoded) | xx | No off-flavor |

All samples were considered to be sensorially in the style of a mojito. The authentic mojitos were not identified by three of the panelists; one panelist recognized the authentic mojito.

### EXAMPLE 30

Two white rum sensory mixtures prepared using compounds in the concentration ranges and food dyes to match the color according to the instant disclosure were used to prepare Sensory Mixture Cuba Libre #1 and Sensory mixture Cuba Libre #2 (i.e., the white rum sensory mixtures were each mixed with Coca-Cola). Two Cuba Libres prepared from Coca-Cola and two different types of authentic available white rum were also prepared.

A panel of 2-4 individuals with several years of expertise in flavor research and flavor evaluation were asked to assess the similarity of the sensory mixture Cuba Libres to the authentic Cuba Libres, to describe their general sensorial perception (aroma, taste, mouthfeel, color), and to rate the samples based on how much the panelists liked them. Samples were presented on a blind basis, encoded with numbers/letters, and presented in a random order. The panel then assessed and described the samples. The samples were evaluated using both sniff (orthonasal) and sip-and-spit (retronasal) methods.

The panelists did not perceive an off-flavor in any of the samples. Sensory mixture Cuba Libre #1 was preferred over the authentic Cuba Libres. The panelists' findings are summarized in Table 30.

**Table 30**

| | Preference | Comments |
|---|---|---|
| Reference Cuba Libre A (encoded) | xx | Citrus note more pronounced, light |
| Reference Cuba Libre B (encoded) | xxx | No off-flavor |
| Sensory mixture Cuba Libre #1 (encoded) | xxxx | No off-flavor |
| Sensory mixture Cuba Libre #2 (encoded) | x | No off-flavor |

All samples were considered to be in the style of a Cuba Libre. The authentic Cuba Libre references were not identified.

### EXAMPLE 31

Four sensory mixtures having the flavor of gin prepared using compounds in the concentration ranges and food dyes to match the color according to the instant disclosure were mixed with tonic water to prepare sensory mixture Gin and Tonic beverages. Authentic gin and tonic beverages prepared from three different authentic gins and tonic water were also prepared.

A panel of 2-4 individuals with several years of expertise in flavor research and flavor evaluation were asked to assess the similarity of the sensory mixture gin and tonics to the authentic gin and tonics, to describe their general sensorial perception (aroma, taste, mouthfeel, color), and to rate the samples based on how much the panelists liked them. Samples were presented on a blind basis, encoded with numbers/letters, and presented in a random order. The panel then assessed and described the samples. The samples were evaluated using both sniff (orthonasal) and sip-and-spit (retronasal) methods.

The panelists liked all of the samples, and did not perceive any of them to have an off flavor. The panelists' findings are summarized in Table 31.

**Table 31**

| | Preference | Comments |
|---|---|---|
| Authentic Gin & Tonic #1 (encoded) | x | Good, too floral |
| Authentic Gin & Tonic #2 (encoded) | xxx | Good, flavorful |
| Authentic Gin & Tonic #3 (encoded) | xx | Good |
| Sensory mixture Gin & Tonic #1 (encoded) | x | Good, too floral |
| Sensory mixture Gin & Tonic #2 (encoded) | xx | Good |
| Sensory mixture Gin & Tonic #3 (encoded) | xx | Good |
| Sensory mixture Gin & Tonic #4 (encoded) | xx | Good |

All samples were considered to be sensorially in the style of a gin and tonic. No off-notes were perceived. The authentic gin and tonic samples were not identified from the sensory mixture gin & tonic samples.

### EXAMPLE 32

A red wine, a white wine, a scotch whiskey, a pilsner-style beer, and a pilsner-style light beer may be prepared using compounds in ranges as set forth in Table 32.

**Table 32**

| | | red wine | white wine | Whiskey | beer | light beer |
|---|---|---|---|---|---|---|
| Category | flavor compound | | | Scotch | Pilsner | Pilsner |
| descriptor | | ug/l | ug/l | u/gl | ug/l | ug/l |
| | | | | | | |
| Flavor Group | octanoic acid | 2500 | 5000 | | 15000 | 15000 |
| cheesy, sweaty aroma | 2-methylpropanoic acid | 2500 | 1000 | | 1000 | 1000 |
| | butanoic acid | 1500 | 2000 | | 500 | 500 |
| | 3-methylbutanoic acid | 1500 | 500 | | 1000 | 1000 |
| | 2-methylbutanoic acid | 1000 | 500 | | 500 | 500 |
| | decanoic acid | 300 | 500 | 20000 | 500 | 500 |
| | | | | | | |
| Flavor Group II | 3-methylbutanol | 150000 | 100000 | 800000 | 15000 | 15000 |
| malty, buttery, sweet aroma | 2-methylbutanol | 150000 | 100000 | 400000 | 15000 | 15000 |
| | 2,3-butanedione | 12000 | 8000 | | 50 | 50 |
| | vanilline | 2000 | 500 | 3000 | 20 | 20 |
| | 2-methylpropanol | | | 80000 | | |
| | 3-Methylbutanal | | | 500 | 20 | 20 |
| | 2-methylbutanal | | | 200 | | |
| | furaneol | | | | 1000 | 1000 |
| | 2-aminoacetophenone | | | | 5 | 5 |
| | | | | | | |
| Flavor Group III | 2-phenylethanol | 30000 | 10000 | 40000 | 10000 | 10000 |
| floral, honey aroma | 2-phenylacetic acid | 150 | 30 | | 500 | 500 |
| | 2-phenylethyl acetate | 100 | 30 | 3000 | 200 | 200 |
| | phenylacetaldehyde | | | | 20 | 20 |
| | geraniol | | | | 10 | 10 |
| | linalool | 5 | 2 | | | |
| | | | | | | |
| Flavor Group IV | acetaldehyde | 7500 | 15000 | 60000 | 500 | 500 |
| fruity aroma | ethyl butyrate | 100 | 300 | 500 | 200 | 200 |
| | ethyl-2-methylpropanoate | 50 | 100 | 500 | 2 | 2 |
| | ethyl octanoate | 50 | 1000 | 10000 | 150 | 150 |
| | ethyl hexanoate | 50 | 500 | 2000 | 100 | 100 |
| | ethyl-3-methylbutyrate | 10 | 20 | 200 | | |
| | ethyl-2-methylbutyrate | 10 | 10 | 100 | | |
| | (E)-b-damascenone | 1 | 2 | 30 | 2 | 2 |
| | 3-methylbutyl acetate | | | 5000 | 500 | 500 |
| | 1,1-diethoxyethane | | | 50000 | 30 | 30 |
| | ethyl-3-phenylpropanoate | | | 100 | | |
| | ethyl decanoate | | | 20000 | | |
| Flavor Group V | whiskey lactone | 300 | 400 | 2000 | | |
| smoky, coconut, woody aroma | 2-methoxyphenol | 30 | 30 | 2500 | 2 | 2 |
| | 4-allyl-2-methoxyphenol | 20 | 30 | 100 | 100 | 100 |
| | 5-pentyldihydrofuran-2(3H)-one | 20 | 5 | 100 | | |
| | 4-ethyl-2-methoxyphenol | 10 | 3 | 1000 | | |
| | 4-methyl-2-methoxyphenol | | | 2000 | | |
| | 4-propyl-2-methoxyphenol | | | 100 | | |
| | 5-hexyldihydrofuran-2(3H)-one | 3 | 1 | | | |
| | 2-methoxy-5-methylphenol | | | 100 | | |
| | | | | | | |
| Flavor Group VI | 3-hydroxy-4,5-dimethyl-2(5H)-furanone | 5 | 5 | | 2 | 2 |
| cooked, seasoning, | dimethyl sulfide | | | | 50 | 50 |
| fatty aroma | 3-(methylthio)-1-propanol | 3000 | 1000 | | 1000 | 1000 |
| | 3-(methylthio)-1-propanal | 1 | 5 | | 2 | 2 |
| | 3-methyl-2-butene-1-thiol | | | | 0.1 | 0.1 |
| | | | | | | |
| Flavor Group VII | 4-methylphenol | | | 3000 | | |
| phenolic, | 4-methylphenol | | | 3000 | | |
| medicinal aroma | 3-methylphenol | | | 1000 | | |
| | 2-methylphenol | | | 5000 | | |
| | 3-ethylphenol | | | 500 | | |
| | 2-ethylphenol | | | 1000 | | |
| | phenol | | | 5000 | | |
| | | | | | | |
| Flavor Group VIII | tartaric acid | 1800000 | 2500000 | | | |
| sour taste | succinic acid | 1300000 | 800000 | | | |
| | lactic acid | 1500000 | 1300000 | | | |
| | citric acid | 13000 | 8000 | | 200000 | 200000 |
| | galacturonic acid | 130000 | 250000 | | | |
| | pyruvic acid | | | | 100000 | 100000 |
| | malic acid | | | | 200000 | 200000 |
| | acetic acid | 800000 | 350000 | 300000 | 200000 | 200000 |
| Flavor Group IX | glycerol | 13000000 | 10000000 | 300000 | 1000000 | 1000000 |
| sweet taste | glucose | 100000 | 300000 | | 100000 | 100000 |
| | fructose | 600000 | 500000 | | 5000000 | 5000000 |
| | L-proline | 1800000 | 1000000 | | | |
| | 5-hydroxymethylfurfural | | | 5000 | | |
| | 5-ethoxymethylfurfural | | | 20 | | |
| | 5-acetoxymethylfurfural | | | 50 | | |
| | | | | | | |
| Flavor Group X | potassium | 1300000 | 600000 | | 300000 | 300000 |
| salty/bitter | magnesium | 300000 | 200000 | | 50000 | 50000 |
| taste | sodium | | | | 20000 | 20000 |
| | chloride | | | | 100000 | 100000 |
| | phosphate | | | | 500000 | 500000 |
| | ammonium | | | | 10000 | 10000 |
| | sulfate | | | | 250000 | 250000 |
| | calcium | 150000 | 100000 | | 30000 | 30000 |
| | | | | | | |
| Flavor Group XI | tannic acid | 50000 | | | | |
| astringent | trans aconitic acid | 5000 | 4000 | | 2000 | 2000 |
| mouthfeel | cis-aconitic acid | 5000 | 1500 | | 2000 | 2000 |
| | ellagic acid | 10000 | | 2000 | | |
| | caftaric acid | 10000 | | | | |
| | caffeic acid | 15000 | | | | |
| | castalagin | 1000 | | | | |
| | coutaric acid | 2500 | 1000 | | | |
| | fertaric acid | 2500 | 6000 | | | |
| | gallic acid | 15000 | | | | |
| | quercetin-3-O-galactoside | 13000 | | | | |
| | syringetin-3-O-glucoside | 2500 | | | | |
| | quercetin-3-O-glucuronide | 13000 | | | | |
| | kaempferol-3-O-glucoside | 2500 | | | | |
| | isorhamnetinglucoside | 5000 | | | | |
| | grape seed extract | 2000000 | | | | |
| | agmatine | | | | 10000 | 10000 |
| | cytidine | | | | 50000 | 50000 |
| | gamma-aminobutyric acid | | | | 20000 | 20000 |
| | hordenine | | | | 5000 | 5000 |
| | lyoniresinol | | | 60000 | | |
| Flavor Group XII | cis-isohumolone | | | | 20000 | 20000 |
| bitter taste | trans-isohumolone | | | | 3000 | 3000 |
| | cis-isocohumulone | | | | 10000 | 10000 |
| | trans-isocohumulone | | | | 10000 | 10000 |
| | isoadhumulone | | | | 10000 | 10000 |
| | comultifidolglycoside | | | | 1000 | 1000 |
| | | | | | | |
| Flavor Group XIII | lauric acid | | | 30000 | | |
| umami taste, | myristic acid | | | 15000 | | |
| mouthfeel | palmitic acid | | | 10000 | | |
| | palmitolic acid | | | 50000 | | |
| | ethyl laurate | | | 10000 | | |
| | ethyl palmitate | | | 3000 | | |
| | ethyl palmitoleate | | | 5000 | | |
| | | | | | | |
| Ethanol | ethanol | 10000000 | 10000000 | 387000000 | 3800000 | 33100000 |

While the foregoing describes in detail a beverage precursor (i.e., flavor system or sensory mixture) and method for forming a beverage with reference to a specific embodiment thereof, it will be apparent to one skilled in the art that various changes and modifications and equivalents to the beverage precursor and method may be employed, which do not materially depart from the spirit and scope of the invention.

Further preferred embodiments of the present invention are described below.

Preferably, to carry out a method of making a wine-flavored beverage, the beverage precursor used for preparing said beverage comprises: the acetaldehyde, ethyl butyrate, ethyl-2-methylpropanoate, ethyl octanoate, ethyl hexanoate, ethyl-3-methylbutyrate, ethyl-2-methylbutyrate, and (E)-b-damascenone are selected from the first group of compounds; whiskey lactone, 2-methoxyphenol, 4-allyl-2-methoxyphenol, 5-pentyldihydrofuran-2(3H)-one, 4-ethyl-2-methoxyphenol, and 5-hexyldihydrofuran-2(3H)-one of the beverage precursor are selected from the second group of compounds; tartaric acid, succinic acid, lactic acid, citric acid, galacturonic acid, and acetic acid are selected from the third group of compounds; and tannic acid, trans aconitic acid, cis-aconitic acid, ellagic acid, caftaric acid, caffeic acid, castalagin, coutaric acid, fertaric acid, gallic acid, quercetin-3-O-galactoside, syringetin-3-O-glucoside, quercetin-3-O-glucuronide, kaempferol-3-O-glucoside, isorhamnetinglucoside, and grape seed extract are selected from the fourth group of compounds.

The beverage precursor further comprises octanoic acid, 2-methylpropanoic acid, butanoic acid, 3-methylbutanoic acid, 2-methylbutanoic acid, decanoic acid, 3-methylbutanol, 2-methylbutanol, 2,3-butanedione, vanilline, 2-phenylethanol, 2-phenylacetic acid, 2-phenylethyl acetate, linalool, 3-hydroxy-4,5-dimethyl-2(5H)-furanone, 3-(methylthio)-1-propanol, 3-(methylthio)-1-propanal, glycerol, glucose, fructose, L-proline, ions of potassium, ions of magnesium, and ions calcium.

The beverage precursor can include about 2,500 µg/l of octanoic acid, about 2,500 µg/l of 2-methylpropanoic acid, about 1,500 µg/l of butanoic acid, about 1,500 µg/l of 3-methylbutanoic acid, about 1,000 µg/l of 2-methylbutanoic acid, about 300 µg/l of decanoic acid, about 150,000 µg/l of 3-methylbutanol, about 150,000 µg/l of 2-methylbutanol, about 12,000 µg/l of 2,3-butanedione, about 2,000 µg/l of vanilline, about 30,000 µg/l of 2-phenylethanol, about 150 µg/l of 2-phenylacetic acid, about 100 µg/l of 2-phenylethyl acetate, about 5 µg/l of linalool, about 7,500 µg/l of acetaldehyde, about 100 µg/l of ethyl butyrate, about 50 µg/l of ethyl-2-methylpropanoate, about 50 µg/l of ethyl octanoate, about 50 µg/l of ethyl hexanoate, about 10 µg/l of ethyl-3-methylbutyrate, about 10 µg/l of ethyl-2-methylbutyrate, about 1 µg/l of (E)-b-damascenone, about 300 µg/l of whiskey lactone, about 30 µg/l of 2-methoxyphenol, about 20 µg/l of 4-allyl-2-methoxyphenol, about 20 µg/l of 5-pentyldihydrofuran-2(3H)-one, about 10 µg/l of 4-ethyl-2-methoxyphenol, about 3 µg/l of 5-hexyldihydrofuran-2(3H)-one, about 5 µg/l of 3-hydroxy-4,5-dimethyl-2(5H)-furanone, about 3,000 µg/l of 3-(methylthio)-1-propanol, about 1 µg/l of 3-(methylthio)-1-propanal, about 1,800,000 µg/l of tartaric acid, about 1,300,000 µg/l of succinic acid, about 1,500,000 µg/l of lactic acid, about 13,000 µg/l of citric acid, about 130,000 µg/l of galacturonic acid, about 800,000 µg/l of acetic acid, about 13,000,000 µg/l of glycerol, about 100,000 µg/l of glucose, about 600,000 µg/l of fructose, about 1,800,000 µg/l of L-proline, about 1,300,000 µg/l of potassium, about 300,000 µg/l of magnesium, about 150,000 µg/l of calcium, about 50,000 µg/l of tannic acid, about 5,000 µg/l of trans aconitic acid, about 5,000 µg/l of cis-aconitic acid, about 10,000 µg/l of ellagic acid, about 10,000 µg/l of caftaric acid, about 15,000 µg/l of caffeic acid, about 1,000 µg/l of castalagin, about 2,500 µg/l of coutaric acid, about 2,500 µg/l of fertaric acid, about 15,000 µg/l of gallic acid, about 13,000 µg/l of quercetin-3-O-galactoside, about 2,500 µg/l of syringetin-3-O-glucoside, about 13,000 µg/l of quercetin-3-O-glucuronide, about 2,500 µg/l of kaempferol-3-O-glucoside, about 5,000 µg/l of isorhamnetinglucoside, about 2,000,000 µg/l of grape seed extract.

The beverage precursor can further comprise a colorant such that a beverage formed from the beverage precursor has the color of a desired beverage.

Preferably, the method of making a wine-flavored beverage comprises adding a quantity of water, ethanol, and/or vodka to the beverage precursor.

Preferably, a packaged beverage precursor comprises a container and the beverage precursor for making wine-flavored precursor is sealed in the container.

Preferably, the acetaldehyde, ethyl butyrate, ethyl-2-methylpropanoate, ethyl octanoate, ethyl hexanoate, ethyl-3-methylbutyrate, ethyl-2-methylbutyrate, and (E)-b-damascenone are selected from the first group of compounds; whiskey lactone, 2-methoxyphenol, 4-allyl-2-methoxyphenol, 5-pentyldihydrofuran-2(3H)-one, 4-ethyl-2-methoxyphenol, and 5-hexyldihydrofuran-2(3H)-one are selected from the second group of compounds; tartaric acid, succinic acid, lactic acid, citric acid, galacturonic acid, and acetic acid are selected from the third group of compounds; and tannic acid, trans aconitic acid, cis-aconitic acid, ellagic acid, caftaric acid, caffeic acid, castalagin, coutaric acid, fertaric acid, gallic acid, quercetin-3-O-galactoside, syringetin-3-O-glucoside, quercetin-3-O-glucuronide, kaempferol-3-O-glucoside, isorhamnetinglucoside, and grape seed extract are selected from the fourth group of compounds.

Preferably, the octanoic acid, 2-methylpropanoic acid, butanoic acid, 3-methylbutanoic acid, 2-methylbutanoic acid, decanoic acid, 3-methylbutanol, 2-methylbutanol, 2,3-butanedione, vanilline, 2-phenylethanol, 2-phenylacetic acid, 2-phenylethyl acetate, linalool, 3-hydroxy-4,5-dimethyl-2(5H)-furanone, 3-(methylthio)-1-propanol, 3-(methylthio)-1-propanal, glycerol, glucose, fructose, L-proline, ions of potassium, ions of magnesium, and ions calcium are combined together with the respective compounds of the first, second, third, fourth, and fifth groups.

Preferably, to perform the method of making a wine-flavored beverage, about 2,500 µg/l of octanoic acid, about 2,500 µg/l of 2-methylpropanoic acid, about 1,500 µg/l of butanoic acid, about 1,500 µg/l of 3-methylbutanoic acid, about 1,000 µg/l of 2-methylbutanoic acid, about 300 µg/l of decanoic acid, about 150,000 µg/l of 3-methylbutanol, about 150,000 µg/l of 2-methylbutanol, about 12,000 µg/l of 2,3-butanedione, about 2,000 µg/l of vanilline, about 30,000 µg/l of 2-phenylethanol, about 150 µg/l of 2-phenylacetic acid, about 100 µg/l of 2-phenylethyl acetate, about 5 µg/l of linalool, about 7,500 µg/l of acetaldehyde, about 100 µg/l of ethyl butyrate, about 50 µg/l of ethyl-2-methylpropanoate, about 50 µg/l of ethyl octanoate, about 50 µg/l of ethyl hexanoate, about 10 µg/l of ethyl-3-methylbutyrate, about 10 µg/l of ethyl-2-methylbutyrate, about 1 µg/l of (E)-b-damascenone, about 300 µg/l of whiskey lactone, about 30 µg/l of 2-methoxyphenol, about 20 µg/l of 4-allyl-2-methoxyphenol, about 20 µg/l of 5-pentyldihydrofuran-2(3H)-one, about 10 µg/l of 4-ethyl-2-methoxyphenol, about 3 µg/l of 5-hexyldihydrofuran-2(3H)-one, about 5 µg/l of 3-hydroxy-4,5-dimethyl-2(5H)-furanone, about 3,000 µg/l of 3-(methylthio)-1-propanol, about 1 µg/l of 3-(methylthio)-1-propanal, about 1,800,000 µg/l of tartaric acid, about 1,300,000 µg/l of succinic acid, about 1,500,000 µg/l of lactic acid, about 13,000 µg/l of citric acid, about 130,000 µg/l of galacturonic acid, about 800,000 µg/l of acetic acid, about 13,000,000 µg/l of glycerol, about 100,000 µg/l of glucose, about 600,000 µg/l of fructose, about 1,800,000 µg/l of L-proline, about 1,300,000 µg/l of potassium, about 300,000 µg/l of magnesium, about 150,000 µg/l of calcium, about 50,000 µg/l of tannic acid, about 5,000 µg/l of trans aconitic acid, about 5,000 µg/l of cis-aconitic acid, about 10,000 µg/l of ellagic acid, about 10,000 µg/l of caftaric acid, about 15,000 µg/l of caffeic acid, about 1,000 µg/l of castalagin, about 2,500 µg/l of coutaric acid, about 2,500 µg/l of fertaric acid, about 15,000 µg/l of gallic acid, about 13,000 µg/l of quercetin-3-O-galactoside, about 2,500 µg/l of syringetin-3-O-glucoside, about 13,000 µg/l of quercetin-3-O-glucuronide, about 2,500 µg/l of kaempferol-3-O-glucoside, about 5,000 µg/l of isorhamnetinglucoside, and about 2,000,000 µg/l of grape seed extract are combined together.

Preferably, the beverage precursor of the method of making wine-flavored beverage comprises: acetaldehyde, ethyl butyrate, ethyl-2-methylpropanoate, ethyl octanoate, ethyl hexanoate, ethyl-3-methylbutyrate, ethyl-2-methylbutyrate, and (E)-b-damascenone, which are selected from the first group of compounds; whiskey lactone, 2-methoxyphenol, 4-allyl-2-methoxyphenol, 5-pentyldihydrofuran-2(3H)-one, 4-ethyl-2-methoxyphenol, and 5-hexyldihydrofuran-2(3H)-one, which are selected from the second group of compounds; tartaric acid, succinic acid, lactic acid, citric acid, galacturonic acid, and acetic acid, which are selected from the third group of compounds; and trans aconitic acid, cis-aconitic acid, coutaric acid, and fertaric acid, which are selected from the fourth group of compounds.

Preferably, the beverage precursor for preparing the wine-flavored beverage further comprises octanoic acid, 2-methylpropanoic acid, butanoic acid, 3-methylbutanoic acid, 2-methylbutanoic acid, decanoic acid, 3-methylbutanol, 2-methylbutanol, 2,3-butanedione, vanilline, 2-phenylethanol, 2-phenylacetic acid, 2-phenylethyl acetate, linalool, 3-hydroxy-4,5-dimethyl-2(5H)-furanone, 3-(methylthio)-1-propanol, 3-(methylthio)-1-propanal, glycerol, glucose, fructose, L-proline, ions of potassium, ions of magnesium, and ions of calcium.

Preferably, said beverage precursor of the method of making wine-flavored beverage can include about 5,000 µg/l of octanoic acid, about 1,000 µg/l of 2-methylpropanoic acid, about 2,000 µg/l of butanoic acid, about 500 µg/l of 3-methylbutanoic acid, about 500 µg/l of 2-methylbutanoic acid, about 500 µg/l of decanoic acid, about 100,000 µg/l of 3-methylbutanol, about 100,000 µg/l of 2-methylbutanol, about 8,000 µg/l of 2,3-butanedione, about 500 µg/l of vanilline, about 10,000 µg/l of 2-phenylethanol, about 30 µg/l of 2-phenylacetic acid, about 30 µg/l of 2-phenylethyl acetate, about 2 µg/l of linalool, about 15,000 µg/l of acetaldehyde, about 300 µg/l of ethyl butyrate, about 100 µg/l of ethyl-2-methylpropanoate, about 1,000 µg/l of ethyl octanoate, about 500 µg/l of ethyl hexanoate, about 20 µg/l of ethyl-3-methylbutyrate, about 10 µg/l of ethyl-2-methylbutyrate, about 2 µg/l of (E)-b-damascenone, about 400 µg/l of whiskey lactone, about 30 µg/l of 2-methoxyphenol, about 30 µg/l of 4-allyl-2-methoxyphenol, about 5 µg/l of 5-pentyldihydrofuran-2(3H)-one, about 3 µg/l of 4-ethyl-2-methoxyphenol, about 1 µg/l of 5-hexyldihydrofuran-2(3H)-one, about 5 µg/l of 3-hydroxy-4,5-dimethyl-2(5H)-furanone, about 1,000 µg/l of 3-(methylthio)-1-propanol, about 5 µg/l of 3-(methylthio)-1-propanal, about 2,500,000 µg/l of tartaric acid, about 800,000 µg/l of succinic acid, about 1,300,000 µg/l of lactic acid, about 8,000 µg/l of citric acid, about 250,000 µg/l of galacturonic acid, about 350,000 µg/l of acetic acid, about 10,000,000 µg/l of glycerol, about 300,000 µg/l of glucose, about 500,000 µg/l of fructose, about 1,000,000 µg/l of L-proline, about 600,000 µg/l of potassium, about 200,000 µg/l of magnesium, about 100,000 µg/l of calcium, about 4,000 µg/l of trans aconitic acid, about 1,500 µg/l of cis-aconitic acid, about 1,000 µg/l of coutaric acid, and about 6,000 µg/l of fertaric acid.

Preferably, to perform the method of making the beverage precursor used for preparing a wine-flavored beverage, the acetaldehyde, ethyl butyrate, ethyl-2-methylpropanoate, ethyl octanoate, ethyl hexanoate, ethyl-3-methylbutyrate, ethyl-2-methylbutyrate, and (E)-b-damascenone are selected from the first group of compounds; the whiskey lactone, 2-methoxyphenol, 4-allyl-2-methoxyphenol, 5-pentyldihydrofuran-2(3H)-one, 4-ethyl-2-methoxyphenol, and 5-hexyldihydrofuran-2(3H)-one are selected from the second group of compounds; the tartaric acid, succinic acid, lactic acid, citric acid, galacturonic acid, and acetic acid are selected from the third group of compounds; and trans aconitic acid, cis-aconitic acid, coutaric acid, and fertaric acid are selected from the fourth group of compounds.

Preferably, the octanoic acid, 2-methylpropanoic acid, butanoic acid, 3-methylbutanoic acid, 2-methylbutanoic acid, decanoic acid, 3-methylbutanol, 2-methylbutanol, 2,3-butanedione, vanilline, 2-phenylethanol, 2-phenylacetic acid, 2-phenylethyl acetate, linalool, 3-hydroxy-4,5-dimethyl-2(5H)-furanone, 3-(methylthio)-1-propanol, 3-(methylthio)-1-propanal, glycerol, glucose, fructose, L-proline, ions of potassium, ions of magnesium, and ions of calcium are combined together with the respective compounds of the first, second, third, fourth, and fifth groups.

Preferably, to perform the method of making the beverage precursor used for preparing a wine-flavored beverage, about 5,000 µg/l of octanoic acid, about 1,000 µg/l of 2-methylpropanoic acid, about 2,000 µg/l of butanoic acid, about 500 µg/l of 3-methylbutanoic acid, about 500 µg/l of 2-methylbutanoic acid, about 500 µg/l of decanoic acid, about 100,000 µg/l of 3-methylbutanol, about 100,000 µg/l of 2-methylbutanol, about 8,000 µg/l of 2,3-butanedione, about 500 µg/l of vanilline, about 10,000 µg/l of 2-phenylethanol, about 30 µg/l of 2-phenylacetic acid, about 30 µg/l of 2-phenylethyl acetate, about 2 µg/l of linalool, about 15,000 µg/l of acetaldehyde, about 300 µg/l of ethyl butyrate, about 100 µg/l of ethyl-2-methylpropanoate, about 1,000 µg/l of ethyl octanoate, about 500 µg/l of ethyl hexanoate, about 20 µg/l of ethyl-3-methylbutyrate, about 10 µg/l of ethyl-2-methylbutyrate, about 2 µg/l of (E)-b-damascenone, about 400 µg/l of whiskey lactone, about 30 µg/l of 2-methoxyphenol, about 30 µg/l of 4-allyl-2-methoxyphenol, about 5 µg/l of 5-pentyldihydrofuran-2(3H)-one, about 3 µg/l of 4-ethyl-2-methoxyphenol, about 1 µg/l of 5-hexyldihydrofuran-2(3H)-one, about 5 µg/l of 3-hydroxy-4,5-dimethyl-2(5H)-furanone, about 1,000 µg/l of 3-(methylthio)-1-propanol, about 5 µg/l of 3-(methylthio)-1-propanal, about 2,500,000 µg/l of tartaric acid, about 800,000 µg/l of succinic acid, about 1,300,000 µg/l of lactic acid, about 8,000 µg/l of citric acid, about 250,000 µg/l of galacturonic acid, about 350,000 µg/l of acetic acid, about 10,000,000 µg/l of glycerol, about 300,000 µg/l of glucose, about 500,000 µg/l of fructose, about 1,000,000 µg/l of L-proline, about 600,000 µg/l of potassium, about 200,000 µg/l of magnesium, about 100,000 µg/l of calcium, about 4,000 µg/l of trans aconitic acid, about 1,500 µg/l of cis-aconitic acid, about 1,000 µg/l of coutaric acid, and about 6,000 µg/l of fertaric acid are combined together.

Preferably, the beverage precursor for preparing a beer-flavored beverage comprises 3-methylbutanol, 2-methylbutanol, 2,3-butanedione, vanilline, 3-methylbutanal, furaneol, and 2-aminoacetophenone, which are selected from the first group of compounds; 2-phenylethanol, 2-phenylacetic acid, 2-phenylethyl acetate, phenylacetaldehyde, and geraniol which are selected from the second group of compounds; and cis-isohumolone, trans-isohumolone, cis-isocohumulone, trans-isocohumulone, isoadhumulone, and comultifidolglycoside which are selected from the third group of compounds.

Preferably, said beverage precursor used for preparing a beer-flavored beverage further comprises octanoic acid, 2-methylpropanoic acid, butanoic acid, 3-methylbutanoic acid, 2-methylbutanoic acid, decanoic acid, acetaldehyde, ethyl butyrate, ethyl-2-methylpropanoate, ethyl octanoate, ethyl hexanoate, (E)-b-damascenone, 3-methylbutyl acetate, 1,1-diethoxyethane, 2-methoxyphenol, 4-allyl-2-methoxyphenol, 3-hydroxy-4,5-dimethyl-2(5H)-furanone, dimethyl sulfide, 3-(methylthio)-1-propanol, 3-(methylthio)-1-propanal, 3-methyl-2-butene-1-thiol, citric acid, pyruvic acid, malic acid, acetic acid, glycerol, glucose, fructose, ions of potassium, ions of magnesium, ions of sodium, ions of chloride, ions of phosphate, ions of ammonium, ions of sulfate, ions of calcium, trans aconitic acid, cis-aconitic acid, agamatine, cytidine, gamma-aminobutyric acid, and horedenine.

Preferably, the above beverage precursor includes about 15,000 µg/l of octanoic acid, about 1,000 µg/l of 2-methylpropanoic acid, about 500 µg/l of butanoic acid, about 1,000 µg/l of 3-methylbutanoic acid, about 500 µg/l of 2-methylbutanoic acid, about 500 µg/l of decanoic acid, about 15,000 µg/l of 3-methylbutanol, about 15,000 µg/l of 2-methylbutanol, about 50 µg/l of 2,3-butanedione, about 20 µg/l of vanilline, about 20 µg/l of 3-methylbutanal, about 1,000 µg/l of furaneol, about 5 µg/l of 2-aminoacetophenone, about 10,000 µg/l of 2-phenylethanol, about 500 µg/l of 2-phenylacetic acid, about 200 µg/l of 2-phenylethyl acetate, about 20 µg/l of phenylacetaldehyde, about 10 µg/l of geraniol, about 500 µg/l of acetaldehyde, about 200 µg/l of ethyl butyrate, about 2 µg/l of ethyl-2-methylpropanoate, about 150 µg/l of ethyl octanoate, about 100 µg/l of ethyl hexanoate, about 2 µg/l of (E)-b-damascenone, about 500 µg/l of 3-methylbutyl acetate, about 30 µg/l of 1,1-diethoxyethane, about 2 µg/l of 2-methoxyphenol, about 100 µg/l of 4-allyl-2-methoxyphenol, about 2 µg/l of 3-hydroxy-4,5-dimethyl-2(5H)-furanone, about 50 µg/l of dimethyl sulfide, about 1,000 µg/l of 3-(methylthio)-1-propanol, about 2 µg/l of 3-(methylthio)-1-propanal, about 0.1 µg/l of 3-methyl-2-butene-1-thiol, about 200,000 µg/l of citric acid, about 100,000 µg/l of pyruvic acid, about 200,000 µg/l of malic acid, about 200,000 µg/l of acetic acid, about 1,000,000 µg/l of glycerol, about 100,000 µg/l of glucose, about 5,000,000 µg/l of fructose, about 300,000 µg/l of potassium, about 50,000 µg/l of magnesium, about 20,000 µg/l of sodium, about 100,000 µg/l of chloride, about 500,000 µg/l of phosphate, about 10,000 µg/l of ammonium , about 250,000 µg/l of sulfate, about 30,000 µg/l of calcium, about 2,000 µg/l of trans aconitic acid, about 2,000 µg/l of cis-aconitic acid, about 10,000 µg/l of agamatine, about 50,000 µg/l of cytidine, about 20,000 µg/l of gamma-aminobutyric acid, and about 5,000 µg/l of horedenine, about 20,000 µg/l of cis-isohumolone, about 3,000 µg/l of trans-isohumolone, about 10,000 µg/l of cis-isocohumulone, about 10,000 µg/l of trans-isocohumulone, about 10,000 µg/l of isoadhumulone, and about 1,000 µg/l of comultifidolglycoside.

Preferably, the beverage precursor for the preparation of a beer-flavored beverage, further comprises a colorant such that a beverage formed from the beverage precursor has the color of a desired beverage.

Preferably, the method of making a beer-flavored beverage comprises adding a quantity of water, ethanol, and/or vodka to the beverage precursor.

Preferably, a packaged beverage precursor comprises a container and the beverage precursor used for preparing a beer-flavored beverage, which is sealed in the container.

Preferably, in the method of making the beverage precursor used for preparing a beer flavored beverage: 3-methylbutanol, 2-methylbutanol, 2,3-butanedione, vanilline, 3-methylbutanal, furaneol, and 2-aminoacetophenone are selected from the first group of compounds; 2-phenylethanol, 2-phenylacetic acid, 2-phenylethyl acetate, phenylacetaldehyde, and geraniol are selected from the second group of compounds; and cis-isohumolone, trans-isohumolone, cis-isocohumulone, trans-isocohumulone, isoadhumulone, and comultifidolglycoside are selected from the third group of compounds.

Preferably, to make the beverage precursor used for preparing the beer-flavored beverage, the octanoic acid, 2-methylpropanoic acid, butanoic acid, 3-methylbutanoic acid, 2-methylbutanoic acid, decanoic acid, acetaldehyde, ethyl butyrate, ethyl-2-methylpropanoate, ethyl octanoate, ethyl hexanoate, (E)-b-damascenone, 3-methylbutyl acetate, 1,1-diethoxyethane, 2-methoxyphenol, 4-allyl-2-methoxyphenol, 3-hydroxy-4,5-dimethyl-2(5H)-furanone, dimethyl sulfide, 3-(methylthio)-1-propanol, 3-(methylthio)-1-propanal, 3-methyl-2-butene-1-thiol, citric acid, pyruvic acid, malic acid, acetic acid, glycerol, glucose, fructose, ions of potassium, ions of magnesium, ions of sodium, ions of chloride, ions of phosphate, ions of ammonium, ions of sulfate, ions of calcium, trans aconitic acid, cis-aconitic acid, agamatine, cytidine, gamma-aminobutyric acid, and horedenine are combined together with the respective compounds of the first, second, and third groups.

Preferably, in the above method about 15,000 µg/l of octanoic acid, about 1,000 µg/l of 2-methylpropanoic acid, about 500 µg/l of butanoic acid, about 1,000 µg/l of 3-methylbutanoic acid, about 500 µg/l of 2-methylbutanoic acid, about 500 µg/l of decanoic acid, about 15,000 µg/l of 3-methylbutanol, about 15,000 µg/l of 2-methylbutanol, about 50 µg/l of 2,3-butanedione, about 20 µg/l of vanilline, about 20 µg/l of 3-methylbutanal, about 1,000 µg/l of furaneol, about 5 µg/l of 2-aminoacetophenone, about 10,000 µg/l of 2-phenylethanol, about 500 µg/l of 2-phenylacetic acid, about 200 µg/l of 2-phenylethyl acetate, about 20 µg/l of phenylacetaldehyde, about 10 µg/l of geraniol, about 500 µg/l of acetaldehyde, about 200 µg/l of ethyl butyrate, about 2 µg/l of ethyl-2-methylpropanoate, about 150 µg/l of ethyl octanoate, about 100 µg/l of ethyl hexanoate, about 2 µg/l of (E)-b-damascenone, about 500 µg/l of 3-methylbutyl acetate, about 30 µg/l of 1,1-diethoxyethane, about 2 µg/l of 2-methoxyphenol, about 100 µg/l of 4-allyl-2-methoxyphenol, about 2 µg/l of 3-hydroxy-4,5-dimethyl-2(5H)-furanone, about 50 µg/l of dimethyl sulfide, about 1,000 µg/l of 3-(methylthio)-1-propanol, about 2 µg/l of 3-(methylthio)-1-propanal, about 0.1 µg/l of 3-methyl-2-butene-1-thiol, about 200,000 µg/l of citric acid, about 100,000 µg/l of pyruvic acid, about 200,000 µg/l of malic acid, about 200,000 µg/l of acetic acid, about 1,000,000 µg/l of glycerol, about 100,000 µg/l of glucose, about 5,000,000 µg/l of fructose, about 300,000 µg/l of potassium, about 50,000 µg/l of magnesium, about 20,000 µg/l of sodium, about 100,000 µg/l of chloride, about 500,000 µg/l of phosphate, about 10,000 µg/l of ammonium , about 250,000 µg/l of sulfate, about 30,000 µg/l of calcium, about 2,000 µg/l of trans aconitic acid, about 2,000 µg/l of cis-aconitic acid, about 10,000 µg/l of agamatine, about 50,000 µg/l of cytidine, about 20,000 µg/l of gamma-aminobutyric acid, and about 5,000 µg/l of horedenine, about 20,000 µg/l of cis-isohumolone, about 3,000 µg/l of trans-isohumolone, about 10,000 µg/l of cis-isocohumulone, about 10,000 µg/l of trans-isocohumulone, about 10,000 µg/l of isoadhumulone, and about 1,000 µg/l of comultifidolglycoside are combined together.

## Claims

1. A beverage precursor useful for the preparation of a whiskey-flavored beverage, the beverage precursor comprising:
at least one flavor compound selected from a first group of compounds, at least one flavor compound selected from a second group of compounds, at least one flavor compound selected from a third group of compounds, at least one flavor compound selected from a fourth group of compounds, and at least one flavor compound selected from a fifth group of compounds,
the first group of compounds consisting of 3-methylbutanol, 2-methylbutanol, 2,3-butanedione, vanilline, 2-methylpropanol, 3-methylbutanal, 2,3-pentanedione, 2-methylpropanal, 2-methylbutanal, furaneol, and ethylfuraneol,
the second group of compounds consisting of acetaldehyde, ethyl butyrate, ethyl-2-methylpropanoate, ethyl octanoate, ethyl hexanoate, ethyl-3-methylbutyrate, ethyl-2-methylbutyrate, (E)-b-damascenone, 3-methylbutyl acetate, 1,1-diethoxyethane, trans-ethyl cinnamate, ethyl-3-phenylpropanoate, ethyl decanoate, and ethyl propanoate;
the third group of compounds consisting of whiskey lactone, 2-methoxyphenol, 4-allyl-2-methoxyphenol, 5-pentyldihydrofuran-2(3H)-one, 4-ethyl-2-methoxyphenol, 4-methyl-2-methoxyphenol, 4-propyl-2-methoxyphenol, 5-hexyldihydrofuran-2(3H)-one, 2-methoxy-5-methylphenol, and 2,6-dimethoxyphenol,
the fourth group of compounds consisting of tannic acid, oak extract, trans aconitic acid, cis-aconitic acid, ellagic acid, and lyoniresinol,
the fifth group of compounds consisting of 4-ethylphenol, 4-methylphenol, 3-methylphenol, 2-methylphenol, 3-ethylphenol, 2-ethylphenol, and phenol;
wherein the beverage precursor is mixable with water, ethanol, and/or vodka to form a beverage having the flavor of whiskey without brewing, fermentation, or distillation.

2. The beverage precursor of claim 1, further comprising at least one compound selected from the group consisting of 3-hydroxy-4,5-dimethyl-2(5H)-furanone, dimethyl sulfide, dimethyltrisulfide, 3-(methylthio)-1-propanol, 3-(methylthio)-1-propanal, (E)-2-nonenal, (E,E)-2,4-decadienal, and (E,E)-2,4-nonadienal.

3. The beverage precursor of claims 1 or 2, further comprising at least one compound selected from the group consisting of glycerol, 5-hydroxymethylfurfural, 5-ethoxymethylfufural, 5-methoxymethylfufural, and 5-acetoxymethylfufural.

4. The beverage precursor of claims 1 to 3, wherein the beverage precursor is a clear liquid, alcohol free, extract free, concentrate free, free of undissolved solids, and/or free of essential oils.

5. The beverage precursor of claims 1 to 4, further comprising a colorant such that a beverage formed from the beverage precursor has the color of a desired beverage.

6. The beverage precursor of claims 1 to 5, wherein:
3-methylbutanol, 2-methylbutanol, vanilline, 2-methylpropanol, 3-methylbutanal, and 2-methylbutanal are selected from the first group of compounds;
acetaldehyde, ethyl butyrate, ethyl-2-methylpropanoate, ethyl octanoate, ethyl hexanoate, ethyl-3-methylbutyrate, ethyl-2-methylbutyrate, (E)-b-damascenone, 3-methylbutyl acetate, 1,1-diethoxyethane, ethyl-3-phenylpropanoate, and ethyl decanoate are selected from the second group of compounds;
whiskey lactone, 2-methoxyphenol, 4-allyl-2-methoxyphenol, 5-pentyldihydrofuran-2(3H)-one, 4-ethyl-2-methoxyphenol, 4-methyl-2-methoxyphenol, 4-propyl-2-methoxyphenol, and 2-methoxy-5-methylphenol are selected from the third group of compounds;
ellagic acid and lyoniresinol are selected from the fourth group of compounds; and
4-ethylphenol, 4-methylphenol, 3-methylphenol, 2-methylphenol, 3-ethylphenol, 2-ethylphenol, and phenol are selected from the fifth group of compounds.

7. The beverage precursor of claim 6, further comprising decanoic acid, 2-phenylethanol, 2-phenylethyl acetate, acetic acid, glycerol, 5-hydroxymethylfurfural, 5-ethoxymethylfurfural, 5-acetoxymethylfurfural, lauric acid, myristic acid, palmitic acid, palmitolic acid, ethyl laurate, ethyl palmitate, and ethyl palmitoleate.

8. The beverage precursor of claim 7, wherein the beverage precursor includes about 20,000 µg/l of decanoic acid, about 800,000 µg/l of 3-methylbutanol, about 400,000 µg/l of 2-methylbutanol, about 3,000 µg/l of vanilline, about 80,000 µg/l of 2-methylpropanol, about 500 µg/l of 3-methylbutanal, about 200 µg/l of 2-methylbutanal, about 40,000 µg/l of 2-phenylethanol, about 3,000 µg/l of 2-phenylethyl acetate, about 60,000 µg/l of acetaldehyde, about 500 µg/l of ethyl butyrate, about 500 µg/l of ethyl-2-methylpropanoate, about 10,000 µg/l of ethyl octanoate, about 2,000 µg/l of ethyl hexanoate, about 200 µg/l of ethyl-3-methylbutyrate, about 100 µg/l of ethyl-2-methylbutyrate, about 30 µg/l of (E)-b-damascenone, about 5,000 µg/l of 3-methylbutyl acetate, about 50,000 µg/l of 1,1-diethoxyethane, about 100 µg/l of ethyl-3-phenylpropanoate, about 20,000 µg/l of ethyl decanoate, about 2,000 µg/l of whiskey lactone, about 2,500 µg/l of 2-methoxyphenol, about 100 µg/l of 4-allyl-2-methoxyphenol, about 100 µg/l of 5-pentyldihydrofuran-2(3H)-one, about 1,000 µg/l of 4-ethyl-2-methoxyphenol, about 2,000 µg/l of 4-methyl-2-methoxyphenol, about 100 µg/l of 4-propyl-2-methoxyphenol, about 100 µg/l of 2-methoxy-5-methylphenol, about 3,000 µg/l of 4-ethylphenol, about 3,000 µg/l of 4-methylphenol, about 1,000 µg/l of 3-methylphenol, about 5,000 µg/l of 2-methylphenol, about 500 µg/l of 3-ethylphenol, about 1,000 µg/l of 2-ethylphenol, about 5,000 µg/l of phenol, about 300,000 µg/l of acetic acid, about 300,000 µg/l of glycerol, about 5,000 µg/l of 5-hydroxymethylfurfural, about 20 µg/l of 5-ethoxymethylfurfural, about 50 µg/l of 5-acetoxymethylfurfural, about 2,000 µg/l of ellagic acid, about 60,000 µg/l of lyoniresinol, about 30,000 µg/l of lauric acid, about 15,000 µg/l of myristic acid, about 10,000 µg/l of palmitic acid, about 50,000 µg/l of palmitolic acid, about 10,000 µg/l of ethyl laurate, about 3,000 µg/l of ethyl palmitate, and about 5,000 µg/l of ethyl palmitoleate.

9. A method of making the beverage precursor of claims 1 to 8, the method comprising:
combining at least one flavor compound selected from a first group of compounds, at least one flavor compound selected from a second group of compounds, at least one flavor compound selected from a third group of compounds, at least one flavor compound selected from a fourth group of compounds, and at least one flavor compound selected from a fifth group of compounds together to form the beverage precursor,
the first group of compounds consisting of 3-methylbutanol, 2-methylbutanol, 2,3-butanedione, vanilline, 2-methylpropanol, 3-methylbutanal, 2,3-pentanedione, 2-methylpropanal, 2-methylbutanal, furaneol, and ethylfuraneol,
the second group of compounds consisting of acetaldehyde, ethyl butyrate, ethyl-2-methylpropanoate, ethyl octanoate, ethyl hexanoate, ethyl-3-methylbutyrate, ethyl-2-methylbutyrate, (E)-b-damascenone, 3-methylbutyl acetate, 1,1-diethoxyethane, trans-ethyl cinnamate, ethyl-3-phenylpropanoate, ethyl decanoate, and ethyl propanoate;
the third group of compounds consisting of whiskey lactone, 2-methoxyphenol, 4-allyl-2-methoxyphenol, 5-pentyldihydrofuran-2(3H)-one, 4-ethyl-2-methoxyphenol, 4-methyl-2-methoxyphenol, 4-propyl-2-methoxyphenol, 5-hexyldihydrofuran-2(3H)-one, 2-methoxy-5-methylphenol, and 2,6-dimethoxyphenol,
the fourth group of compounds consisting of tannic acid, oak extract, trans aconitic acid, cis-aconitic acid, ellagic acid, and lyoniresinol,
the fifth group of compounds consisting of 4-ethylphenol, 4-methylphenol, 3-methylphenol, 2-methylphenol, 3-ethylphenol, 2-ethylphenol, and phenol;
wherein the beverage precursor is mixable with water, ethanol, and/or vodka to form a beverage having the flavor of whiskey without brewing, fermentation, or distillation.

10. The method of claim 9, wherein:
3-methylbutanol, 2-methylbutanol, vanilline, 2-methylpropanol, 3-methylbutanal, and 2-methylbutanal are selected from the first group of compounds;
acetaldehyde, ethyl butyrate, ethyl-2-methylpropanoate, ethyl octanoate, ethyl hexanoate, ethyl-3-methylbutyrate, ethyl-2-methylbutyrate, (E)-b-damascenone, 3-methylbutyl acetate, 1,1-diethoxyethane, ethyl-3-phenylpropanoate, and ethyl decanoate are selected from the second group of compounds;
whiskey lactone, 2-methoxyphenol, 4-allyl-2-methoxyphenol, 5-pentyldihydrofuran-2(3H)-one, 4-ethyl-2-methoxyphenol, 4-methyl-2-methoxyphenol, 4-propyl-2-methoxyphenol, and 2-methoxy-5-methylphenol are selected from the third group of compounds;
ellagic acid and lyoniresinol are selected from the fourth group of compounds; and
4-ethylphenol, 4-methylphenol, 3-methylphenol, 2-methylphenol, 3-ethylphenol, 2-ethylphenol, and phenol are selected from the fifth group of compounds.

11. The method of claim 10, wherein decanoic acid, 2-phenylethanol, 2-phenylethyl acetate, acetic acid, glycerol, 5-hydroxymethylfurfural, 5-ethoxymethylfurfural, 5-acetoxymethylfurfural, lauric acid, myristic acid, palmitic acid, palmitolic acid, ethyl laurate, ethyl palmitate, and ethyl palmitoleate are combined together with the respective compounds of the first, second, third, fourth, and fifth groups of compounds.

12. The method of claim 11, wherein about 20,000 µg/l of decanoic acid, about 800,000 µg/l of 3-methylbutanol, about 400,000 µg/l of 2-methylbutanol, about 3,000 µg/l of vanilline, about 80,000 µg/l of 2-methylpropanol, about 500 µg/l of 3-methylbutanal, about 200 µg/l of 2-methylbutanal, about 40,000 µg/l of 2-phenylethanol, about 3,000 µg/l of 2-phenylethyl acetate, about 60,000 µg/l of acetaldehyde, about 500 µg/l of ethyl butyrate, about 500 µg/l of ethyl-2-methylpropanoate, about 10,000 µg/l of ethyl octanoate, about 2,000 µg/l of ethyl hexanoate, about 200 µg/l of ethyl-3-methylbutyrate, about 100 µg/l of ethyl-2-methylbutyrate, about 30 µg/l of (E)-b-damascenone, about 5,000 µg/l of 3-methylbutyl acetate, about 50,000 µg/l of 1,1-diethoxyethane, about 100 µg/l of ethyl-3-phenylpropanoate, about 20,000 µg/l of ethyl decanoate, about 2,000 µg/l of whiskey lactone, about 2,500 µg/l of 2-methoxyphenol, about 100 µg/l of 4-allyl-2-methoxyphenol, about 100 µg/l of 5-pentyldihydrofuran-2(3H)-one, about 1,000 µg/l of 4-ethyl-2-methoxyphenol, about 2,000 µg/l of 4-methyl-2-methoxyphenol, about 100 µg/l of 4-propyl-2-methoxyphenol, about 100 µg/l of 2-methoxy-5-methylphenol, about 3,000 µg/l of 4-ethylphenol, about 3,000 µg/l of 4-methylphenol, about 1,000 µg/l of 3-methylphenol, about 5,000 µg/l of 2-methylphenol, about 500 µg/l of 3-ethylphenol, about 1,000 µg/l of 2-ethylphenol, about 5,000 µg/l of phenol, about 300,000 µg/l of acetic acid, about 300,000 µg/l of glycerol, about 5,000 µg/l of 5-hydroxymethylfurfural, about 20 µg/l of 5-ethoxymethylfurfural, about 50 µg/l of 5-acetoxymethylfurfural, about 2,000 µg/l of ellagic acid, about 60,000 µg/l of lyoniresinol, about 30,000 µg/l of lauric acid, about 15,000 µg/l of myristic acid, about 10,000 µg/l of palmitic acid, about 50,000 µg/l of palmitolic acid, about 10,000 µg/l of ethyl laurate, about 3,000 µg/l of ethyl palmitate, and about 5,000 µg/l of ethyl palmitoleate are combined together.

13. A method of making a whiskey-flavored beverage, the method comprising adding a quantity of water, ethanol, and/or vodka to the beverage precursor of claims 1 to 8.

14. A packaged beverage precursor comprising a container and the beverage precursor of claims 1 to 8, wherein the beverage precursor is sealed in the container.
